(19) Europäisches Patentamt
European Patent Office
Office européen des brevets

(11) EP 0 792 306 B1

(12) **EUROPÄISCHE PATENTSCHRIFT**

(45) Veröffentlichungstag und Bekanntmachung des Hinweises auf die Patenterteilung:
**09.12.1998 Patentblatt 1998/50**

(21) Anmeldenummer: **95937873.8**

(22) Anmeldetag: **06.11.1995**

(51) Int Cl.$^6$: **C08G 61/08**

(86) Internationale Anmeldenummer:
**PCT/EP95/04364**

(87) Internationale Veröffentlichungsnummer:
**WO 96/16105 (30.05.1996 Gazette 1996/25)**

(54) **VERFAHREN ZUR POLYMERISATION VON CYCLISCHEN OLEFINEN UND PHOTOPOLYMERISIERBARE ZUSAMMENSETZUNG**

PROCESS FOR POLYMERIZING CYCLICAL OLEFINS AND PHOTOPOLYMERIZABLE COMPOSITION

PROCEDE DE POLYMERISATION D'OLEFINES CYCLIQUES ET COMPOSITION PHOTOPOLYMERISABLE

(84) Benannte Vertragsstaaten:
**AT BE CH DE DK ES FR GB IT LI NL SE**

(30) Priorität: **17.11.1994 CH 3460/94**

(43) Veröffentlichungstag der Anmeldung:
**03.09.1997 Patentblatt 1997/36**

(73) Patentinhaber: **Ciba Specialty Chemicals Holding Inc.**
**4057 Basel (CH)**

(72) Erfinder:
- **HAFNER, Andreas**
  **CH-3177 Laupen (CH)**
- **MÜHLEBACH, Andreas**
  **CH-1782 Belfaux (CH)**
- **VAN DER SCHAAF, Paul, Adriaan**
  **CH-1700 Fribourg (CH)**

(56) Entgegenhaltungen:
- **ORGANOMETALLICS, Bd. 12, Nr. 10, 1993, US, Seiten 3955-3963, XP000564439 P.A. VAN DER SCHAAF ET ALL.: "Five-Coordinate Tungsten(VI) Phenylimido Alkylidene Complexes and Isolated Precursors, Containing a Chelating Arylamine Ligand: Molecular Structure of W(C6H4CH2NMe2-2)(=CHSiMe3)(CH2SiMe3)(=N Ph) "**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 792 306 B1

Printed by Jouve, 75001 PARIS (FR)

## Beschreibung

Die vorliegende Erfindung betrifft ein Verfahren zur Polymerisation cyclischer Olefine durch photochemische Ringöffnungs-Metathese-Polymerisation unter Verwendung katalytischer Mengen eines Molybdän-, Wolfram-, Titan-, Niob- oder Tantalkatalysators, in der eine Silylmethylgruppe und mindestens ein Halogen am Metall gebunden sind, sowie Zusammensetzungen enthaltend diese Olefine zusammen mit einer katalytischen Menge dieses Katalysators.

Die thermisch induzierte Ringöffnungs-Metathese-Polymerisation unter Verwendung katalytischer Mengen von Metallkatalysatoren ist schon seit längerem bekannt und vielfach in der Literatur beschrieben [siehe zum Beispiel Ivin, K.J., Olefin Metathesis 1-12, Academic Press, London (1983)]. So herstellbare Polymere werden industriell hergestellt und sind kommerziell erhältlich. Dagegen ist zur photochemisch induzierten Ringöffnungs-Metathese-Polymerisation nur wenig bekannt geworden und kommerzielle Anwendungen haben sich bis heute nicht ergeben.

Aus US-A-4,060,468 ist bekannt, eine Olefin-Metathese-Polymerisation in der Weise durchzuführen, dass man eine Zweikomponentenmischung aus einem Metallsalz ausgewählt aus Wolfram-, Molybdän-, Rhenium- und Tantalsalzen und einem substituierten Phenol oder Benzylalkohol als Cokatalysatoren in ein Reaktionsgefäß mit dem monomeren Olefin gibt und anschließend die gesamte Reaktionsmischung mit UV-Licht bestrahlt. Als Olefine werden nur cyclische und acyclische Kohlenwasserstoffe ohne funktionelle Gruppen beziehungsweise Substituenten erwähnt. Die getrennte Lagerung der Katalysatorkomponenten und der Verfahrensschritt des Mischens der Katalysatorkomponenten direkt vor der eigentlichen Reaktion machen das bekannte Verfahren technisch aufwendig und umständlich.

Tanielan, C., Kieffer, R., Harfouch, A., Tetrahedron Letters 52:4589-4592 (1977) beschreiben das Katalysatorsystem $W(CO)_6/CCl_4$, das nach der Bestrahlung mit UV-Licht für die Metathesepolymerisation von Cyclopenten und Norbornen eingesetzt werden kann. Metallcarbonyle sind flüchtig und toxisch, so dass deren Verwendung aus physiologischen Gründen aufwendige Schutzmassnahmen erforderlich macht. Zudem beobachtet man als Konkurrenzreaktion eine radikalische Additionsreaktion unter Bildung monomerer 1-Chlor-2-trichlormethyl-cycloalkanen.

Aus Thoi, H.H., Ivin, K.J., Rooney, J.J., J. Mol. Catal. 15:245-270 (1982) ist bekannt, daß ein Wolframpentacarbonylcarbenkomplex der Formel

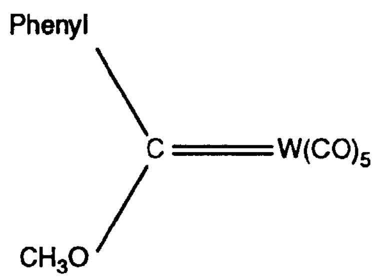

ein thermischer Katalysator für die ringöffnende Metathesepolymerisation von Dimethylnorbornen ist, und zusammen mit Phenylacetylen als Cokatalysator auch ein Photokatalysatorsystem für die gleiche Polymerisation darstellt. Dieses Katalysatorsystem hat den schwerwiegenden Nachteil, daß es als gebrauchsfertige Formulierung nur eine geringe Lagerstabilität aufweist, die Carbonylverbindung physiologisch bedenklich ist und die Toleranz gegenüber fuktionellen Gruppen in Cycloolefinen zu gering ist.

Feldmann, C., et al., in: Stephen J. Lippard (Ed.) Progress in Inorganic Chemistry, 39:3-73 (1991) beschreiben Molybdän- und Wolframalkylidenkomplexe, die alleine nur schwache, aber zusammen mit Lewis-Säuren wirksame thermische Katalysatoren für die Polymerisation von Cycloolefinen sind.

Die bekannten photochemisch aktivierbaren Katalysatoren benötigen also stets einen Cokatalysator, wodurch die Qualität der hergestellten Polymere bedingt durch die gewählte Art und Reihenfolge der Reagenzien stark schwanken kann.

Mit den bekannten Verfahren lassen sich Polymere aus cyclischen Olefinen durch photochemische Ringöffnungs-Metathese-Polymerisation nur mit hohem Aufwand und in wirtschaftlich unbefriedigender Weise herstellen. Als besondere Nachteile werden die mangelnde Lagerstabilität, die ein Mischen der Komponenten erst direkt vor der Herstellung zulässt, die mangelnde Toleranz gegenüber funktionalisierten cyclischen Olefinen sowie die Notwendigkeit der Verwendung von zwei Komponenten als Katalysatorsystem empfunden. Es besteht daher ein Bedürfnis, ein vom technischen, wirtschaftlichen und ökologischen Gesichtspunkt aus verbessertes und allgemein brauchbares Verfahren zur Herstellung von Polymeren aus cyclischen Olefinen durch photochemische Ringöffnungs-Metathese-Polymerisation bereitzustellen.

In der WO-A-93/13171 werden luft- und wasserstabile Einkomponenten- und Zweikomponenten-Katalysatoren

auf der Basis von Carbonylgruppen enthaltenden Molybdän- und Wolframverbindungen sowie Ruthenium- und Osmiumverbindungen mit mindestens einem Polyenliganden für die thermische Metathesepolymerisation und eine photoaktivierte Metathesepolymerisation von gespannten Cycloolefinen, besonders Norbornen und Norbornenderivaten, beschrieben. Andere polycyclische - vor allen Dingen nicht-kondensierte polycyclische Cycloolefine werden nicht erwähnt. Die verwendeten Einkomponenten-Katalysatoren der Rutheniumverbindungen, nämlich $[Ru(Cumen)Cl_2]_2$ und $[(C_6H_6)Ru(CH_3CN)_2Cl]^+PF_6^-$ können zwar durch UV-Bestrahlung aktiviert werden; die Lagerstabilität der Zusammensetzungen mit Norbornen sind jedoch völlig unzureichend. Diese Katalysatoren vermögen die bekannten Zweikomponenten-Katalysatoren nur unzureichend zu ersetzen.

Petasis, N. A., Fu, D., J. Am. Chem. Soc. 115:7208-7214 (1993) beschreiben die thermische ringöffnende Metathesepolymerisation-von Norbornen unter Verwendung von Biscydopentadienyl-bis(trimethylsilyl)methyl-titan(IV) als thermisch aktiven Katalysator. Die Katalysatoraktivität ist jedoch niedrig, wodurch man lange Reaktionszeiten benötigt und zudem nur relativ geringe Polymerausbeuten erzielt. Es wird nicht beschrieben, dass diese Katalysatoren für photoinduzierte Ringöffnungsmetathesepolymerisation von gespannten Cycloolefinen geeignet sind.

Es wurde gefunden, daß Zusammensetzungen aus gespannten Cycloolefinen und einem Einkomponentenkatalysator photochemisch polymerisierbar sind, wenn die Zusammensetzung eine Titan(IV), Niob(V)-, Tantal(V)-, Molybdän(VI)- oder Wolfram(VI)verbindung enthält, in der mindestens ein Halogen und eine Silylmethylgruppe am Metall gebunden sind. Überraschend haben sich diese thermisch stabilen Verbindungen als wirksame Katalysatoren für die photoinduzierte Ringöffnungs-Metathese-Polymerisation erwiesen, wobei trotz der photochemischen Reaktivität die Lagerstabilität von Mischungen aus Cycloolefinen und den Titan(IV), Niob(V)-, Tantal(V)-, Molybdän(VI)- oder Wolfram (VI)verbindungen erhalten bleibt.

Es wurde ferner überraschend gefunden, dass die genannten Katalysatoren schon nach einer kurzen Bestrahlung in Gegenwart von Cycloolefinen als thermische Katalysatoren wirken, so dass die photochemische und thermische Polymerisation in Kombination angewendet werden können.

Ein Gegenstand der vorliegenden Erfindung ist ein Verfahren zur photokatalytischen Polymerisation eines cyclischen Olefins oder mindestens zwei verschiedener cyclischer Olefine in Gegenwart einer Metallverbindung als Katalysator, das dadurch gekennzeichnet ist, dass man eine photochemische Ringöffnungs-Metathese-Polymerisation in Gegenwart einer katalytischen Menge mindestens einer thermostabilen Titan(IV), Niob(V)-, Tantal(V)-, Molybdän(VI)- oder Wolfram(VI)verbindung durchführt, in der eine Silylmethylgruppe und mindestens ein Halogen am Metall gebunden sind.

Die übrigen Valenzen des Titans, Niobs, Tantals, Molybdäns und Wolframs sind bevorzugt mit thermostabilen Neutralliganden abgesättigt, die in grosser Vielzahl bekannt sind. Die Zahl der Neutralliganden kann auch die stöchiometrisch mögliche Zahl überschreiten (Solvate).

Bei den cyclischen Olefinen kann es sich um monocyclische oder polycyclische kondensierte und/oder überbrückte Ringsysteme, zum Beispiel mit zwei bis vier Ringen, handeln, die unsubstituiert oder substituiert sind und Heteroatome wie zum Beispiel O, S, N oder Si in einem oder mehreren Ringen und/oder kondensierte aromatische oder heteroaromatische Ringe wie zum Beispiel o-Phenylen, o-Naphthylen, o-Pyridinylen oder o-Pyrimidinylen enthalten können. Die einzelnen cyclischen Ringe können 3 bis 16, bevorzugt 3 bis 12 und besonders bevorzugt 3 bis 8 Ringglieder enthalten. Die cyclischen Olefine können weitere nichtaromatische Doppelbindungen enthalten, je nach Ringgrösse bevorzugt 2 bis 4 solcher zusätzlichen Doppelbindungen. Bei den Ringsubstituenten handelt es sich um solche, die inert sind, das heisst, die die chemische Stabilität und die Thermostabilität der Titan-, Niob-, Tantal-, Molybdän- und Wolframverbindungen nicht beeinträchtigen. Bei den Cycloolefinen handelt es sich um gespannte Ringe beziehungsweise Ringsysteme.

Thermostabilität bedeutet im Rahmen der Erfindung, dass die photokatalytisch aktiven Titan(IV), Niob(V)-, Tantal (V)-, Molybdän(VI)- oder Wolfram(VI)verbindungen unter Erwärmen keine aktiven Spezies für die Ringöffnungs-Metathese-Polymerisation bilden. Der Katalysator kann zum Beispiel bei Raumtemperatur bis leicht erhöhter Temperatur wie etwa + 40°C innerhalb von Wochen unter Lichtausschluß keine Ringöffnungs-Metathese-Polymerisation initiieren. Während dieser Zeit wird nur eine unbedeutende Menge an Monomer (weniger als 0,2 Gew.-%) umgesetzt. Die Thermostabilität kann zum Beispiel bestimmt werden, indem man eine Toluol-Lösung mit 20 Gew.-% Monomer und 0,33 Gew.-% Titan-, Molybdän-, Wolfram-, Niob- oder Tantalkatalysator bei 50°C 96 Stunden in der Dunkelheit lagert und eine eventuell gebildete Polymermenge, erkennbar am Viskositätsaufbau und durch Ausfällen in einem Fällungsmittel, beispielsweise Ethanol, Filtration und Trocknen quantitativ bestimmbar, nicht mehr als 0,5 Gew.-% und bevorzugt nicht mehr als 0,2 Gew.-% beträgt.

Wenn die cyclischen Olefine mehr als eine Doppelbindung enthalten, zum Beispiel 2 bis 4 Doppelbindungen, können sich abhängig von den Reaktionsbedingungen, dem gewählten Monomer und der Katalysatormenge, auch vernetzte Polymerisate bilden.

In einer bevorzugten Ausführungsform des erfindungsgemässen Verfahrens entsprechen die Cycloolefine der Formel I

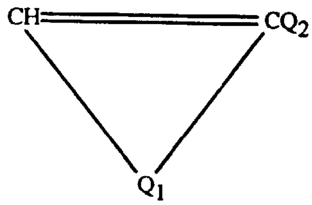

(I),

worin

$Q_1$ ein Rest mit mindestens einem Kohlenstoffatom ist, der zusammen mit der $-CH=CQ_2$-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$-Alkyl, $C_1$-$C_{20}$-Hydroxyalkyl $C_1$-$C_{20}$-Halogenalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_4$-X- substituiert ist; oder bei dem zwei benachbarte C-Atome mit -CO-O-CO- oder $-CO-NR_5-CO-$ substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, $-NO_2$, $R_6R_7R_8Si-(O)_u-$, -COOM, $-SO_3M$, $-PO_3M$, $COO(M_1)_{1/2}$, $-SO_3(M_1)_{1/2}$, $-PO_3(M_1)_{1/2}$, $C_1$-$C_{20}$-Alkyl, $C_1$-$C_{20}$-Halogenalkyl, $C_1$-$C_{20}$-Hydroxyalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_{13}$-$X_1$- substituiert ist;

X und $X_1$ unabhängig voneinander für -O-, -S-, -CO-, -SO-, $-SO_2-$, -O-C(O)-, -C(O)-O-, $-C(O)-NR_5-$, $-NR_{10}-C(O)-$, $-SO_2-O-$ oder $-O-SO_2-$ stehen;

$R_1$, $R_2$ und $R_3$ unabhängig voneinander $C_1$-$C_{12}$-Alkyl, $C_1$-$C_{12}$-Perfluoralkyl, Phenyl oder Benzyl bedeuten;

$R_4$ und $R_{13}$ unabhängig $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl, $C_7$-$C_{16}$-Aralkyl bedeuten;

$R_5$ und $R_{10}$ unabhängig voneinander Wasserstoff, $C_1$-$C_{12}$-Alkyl, Phenyl oder Benzyl bedeuten, wobei die Alkylgruppen ihrerseits unsubstituiert oder mit $C_1$-$C_{12}$-Alkoxy oder $C_3$-$C_8$-Cycloalkyl substituiert sind;

$R_6$, $R_7$ und $R_8$ unabhängig voneinander $C_1$-$C_{12}$-Alkyl, $C_1$-$C_{12}$-Perfluoralkyl, Phenyl oder Benzyl bedeuten;

M für ein Alkalimetall und $M_1$ für ein Erdalkalimetall stehen; und

u für 0 oder 1 steht;

wobei der mit $Q_1$ gebildete alicyclische Ring gegebenenfalls weitere nicht-aromatische Doppelbindungen enthält;

$Q_2$ Wasserstoff, $C_1$-$C_{20}$-Alkyl, $C_1$-$C_{20}$-Halogenalkyl, $C_1$-$C_{12}$-Alkoxy, Halogen, -CN, $R_{11}$-$X_2$- darstellt;

$R_{11}$ $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl oder $C_7$-$C_{16}$-Aralkyl bedeutet;

$X_2$ -C(O)-O- oder $-C(O)-NR_{12}-$ ist;

$R_{12}$ Wasserstoff, $C_1$-$C_{12}$-Alkyl, Phenyl oder Benzyl darstellt;

wobei die vorgenannten Cycloalkyl-, Heterocycloalkyl-, Aryl-, Heteroaryl-, Aralkyl- und Heteroaralkylgruppen unsubstituiert oder mit $C_1$-$C_{12}$-Alkyl, $C_1$-$C_{12}$-Alkoxy, $-NO_2$, -CN oder Halogen substituiert sind, und wobei die Heteroatome der vorgenannten Heterocycloalkyl-, Heteroaryl- und Heteroaralkylgruppen aus der Gruppe -O-, -S-, $-NR_9-$ und -N= ausgewählt sind; und

$R_9$ Wasserstoff, $C_1$-$C_{12}$-Alkyl, Phenyl oder Benzyl darstellt.

Ankondensierte alicyclische Ringe enthalten bevorzugt 3 bis 8, besonders bevorzugt 4 bis 7 und insbesondere bevorzugt 5 oder 6 Ring-C-Atome.

Ist in den Verbindungen der Formel I ein asymmetrisches Zentrum vorhanden, so hat dies zur Folge, daß die Verbindungen in optisch isomeren Formen auftreten können. Einige Verbindungen der Formel I können in tautomeren Formen (z.B. Keto-Enol-Tautomerie) vorkommen. Liegt eine aliphatische C=C-Doppelbindung vor, so kann auch geometrische Isomerie (E-Form oder Z-Form) auftreten. Ferner sind auch Exo-Endo-Konfigurationen möglich. Die Formel I umfaßt somit alle möglichen Stereoisomeren, die in Form von Enantiomeren, Tautomeren, Diastereomeren, E/Z-Isomeren oder deren Gemische vorliegen.

In den Definitionen der Substituenten können die Alkyl-, Alkenyl- und Alkinylgruppen geradkettig oder verzweigt sein. Dasselbe gilt auch für den bzw. jeden Alkylteil von Alkoxy-, Alkylthio-, Alkoxycarbonyl- und von weiteren Alkyl-enthaltenden Gruppen. Diese Alkylgruppen enthalten bevorzugt 1 bis 12, bevorzugter 1 bis 8 und besonders bevorzugt 1 bis 4 C-Atome. Diese Alkenyl- und Alkinylgruppen enthalten bevorzugt 2 bis 12, bevorzugter 2 bis 8 und besonders bevorzugt 2 bis 4 C-Atome.

Alkyl umfaßt beispielsweise Methyl, Ethyl, Isopropyl, n-Propyl, n-Butyl, iso-Butyl, sek-Butyl, tert-Butyl sowie die verschiedenen isomeren Pentyl-, Hexyl-, Heptyl-, Octyl-, Nonyl-, Decyl-, Undecyl-, Dodecyl-, Tridecyl-, Tetradecyl, Pentadecyl, Hexadecyl-, Heptadecyl, Octadecyl-, Nonadecyl- und Eicosylradikale.

Hydroxyalkyl umfaßt beispielsweise Hydroxymethyl, Hydroxyethyl, 1-Hydroxyisopropyl, 1-Hydroxy-n-Propyl, 2-Hydroxy-n-Butyl, 1-Hydroxy-iso-Butyl, 1-Hydroxy-sek-Butyl, 1-Hydroxy-tert-Butyl sowie die verschiedenen isomeren Pentyl-, Hexyl-, Heptyl-, Octyl-, Nonyl-, Decyl-, Undecyl-, Dodecyl-, Tridecyl-, Tetradecyl, Pentadecyl, Hexadecyl-, Heptadecyl, Octadecyl-, Nonadecyl- und Eicosylradikale.

Halogenalkyl umfaßt beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl, 2,2,2-Trichlorethyl sowie halogenierte, besonders fluorierte oder chlorierte Alkane, wie zum Beispiel der Isopropyl-, n-Propyl-, n-Butyl-, iso-Butyl-, sek-Butyl-, tert-Butyl-, und der verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylradikale.

Alkenyl umfaßt zum Beispiel Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, iso-Dodecenyl, n-Octadec-2-enyl, n-Octadec-4-enyl.

Beim Cycloalkyl handelt es sich bevorzugt um $C_5$-$C_8$-Cycloalkyl, besonders um $C_5$- oder $C_6$-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Cyanoalkyl umfaßt beispielsweise Cyanomethyl (Methylnitril), Cyanoethyl (Ethylnitril), 1-Cyanoisopropyl, 1-Cyano-n-Propyl, 2-Cyano-n-Butyl, 1-Cyano-iso-Butyl, 1-Cyanosek-Butyl, 1-Cyano-tert-Butyl sowie die verschiedenen isomeren Cyanopentyl- und -hexylreste.

Aralkyl enthält bevorzugt 7 bis 12 C-Atome und besonders bevorzugt 7 bis 10 C-Atome. Es kann sich zum Beispiel um Benzyl, Phenethyl, 3-Phenylpropyl, α-Methylbenzyl, Phenbutyl oder α,α-Dimethylbenzyl handeln.

Aryl enthält bevorzugt 6 bis 10 C-Atome. Es kann sich beispielsweise um Phenyl, Pentalin, Inden, Naphthalin, Azulin oder Anthracen handeln.

Heteroaryl enthält bevorzugt 4 oder 5 C-Atome und ein oder zwei Heteroatome aus der Gruppe O, S und N. Es kann sich beispielsweise um Pyrrol, Furan, Thiophen, Oxazol, Thiazol, Pyridin, Pyrazin, Pyrimidin, Pyridazin, Indol, Purin oder Chinolin handeln.

Heterocycloalkyl enthält bevorzugt 4 oder 5 C-Atome und ein oder zwei Heteroatome aus der Gruppe O, S und N. Es kann sich beispielsweise um Oxiran, Azirin, 1,2-Oxathiolan, Pyrazolin, Pyrrolidin, Piperidin, Piperazin, Morpholin, Tetrahydrofuran oder Tetrahydrothiophen handeln.

Alkoxy ist beispielsweise Methoxy, Ethoxy, Propyloxy, i-Propyloxy, n-Butyloxy, i-Butyloxy, sek.-Butyloxy und t-Butyloxy.

Unter Alkalimetall ist im Rahmen der vorliegenden Erfindung Lithium, Natrium, Kalium, Rubidium und Cäsium, insbesondere Lithium, Natrium und Kalium zu verstehen.

Unter Erdalkalimetall ist im Rahmen der vorliegenden Erfindung Beryllium, Magnesium, Calcium, Strontium und Barium, insbesondere Magnesium und Calcium zu verstehen.

In den obigen Definitionen ist unter Halogen, Fluor, Chlor, Brom und Jod vorzugsweise Fluor, Chlor und Brom zu verstehen.

Für das erfindungsgemäße Verfahren besonders gut geeignete Verbindungen der Formel I sind jene, worin $Q_2$ Wasserstoff bedeutet.

Ferner sind für die Polymerisation Verbindungen der Formel I bevorzugt, worin der alicyclische Ring, den $Q_1$ zusammen mit der -CH=$CQ_2$- Gruppe bildet, 3 bis 16, bevorzugter 3 bis 12 und besonders bevorzugt 3 bis 8 Ringatome aufweist, und wobei es sich um ein monocyclisches, bicyclischen, tricyclisches oder tetracyclisches Ringsystem handeln kann.

Mit besonderem Vorteil läßt sich das erfindungsgemäße Verfahren mit denjenigen Verbindungen der Formel I durchführen, worin

$Q_1$ ein Rest mit mindestens einem Kohlenstoffatom ist, der zusammen mit der -CH=$CQ_2$-Gruppe einen 3- bis 20-gliedrigen alicyclischen Ring bildet, welcher gegebenenfalls ein oder mehrere Heteroatome ausgewählt aus der Gruppe Silicium, Sauerstoff, Stickstoff und Schwefel enthält; und der unsubstituiert oder mit Halogen, =O, -CN, -$NO_2$, $R_1R_2R_3Si$-$(O)_u$-, -COOM, -$SO_3$M, -$PO_3$M, -COO$(M_1)_{1/2}$, -$SO_3(M_1)_{1/2}$, -$PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_7$-$C_{12}$-Aralkyl, $C_3$-$C_6$-Heterocycloalkyl, $C_3$-$C_{12}$-Heteroaryl, $C_4$-$C_{12}$-Heteroaralkyl

oder $R_4$-X- substituiert ist; oder bei dem zwei benachbarte C-Atome in diesem Rest $Q_1$ mit -CO-O-CO- oder -CO-$NR_5$-CO- substituiert sind; oder bei dem gegebenenfalls an benachbarten Kohlenstoffatomen ein alicyclischer, aromatischer oder heteroaromatischer Ring ankondensiert ist, welcher unsubstituiert oder mit Halogen, -CN, -$NO_2$, $R_6R_7R_8$Si-, -COOM, -$SO_3$M, -$PO_3$M, -COO$(M_1)_{1/2}$, -$SO_3(M_1)_{1/2}$, -$PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_7$-$C_{12}$-Aralkyl, $C_3$-$C_6$-Heterocycloalkyl, $C_3$-$C_{12}$-Heteroaryl, $C_4$-$C_{12}$-Heteroaralkyl oder $R_{13}$-$X_1$- substituiert ist;

X und $X_1$ unabhängig voneinander für -O-, -S-, -CO-, -SO-, -$SO_2$-, -O-C(O)-, -C(O)-O-, -C(O)-$NR_5$-, -$NR_{10}$-C(O)-, -$SO_2$-O- oder -O-$SO_2$- stehen;

$R_1$, $R_2$ und $R_3$ unabhängig voneinander $C_1$-$C_6$-Alkyl, $C_1$-$C_6$-Perfluoralkyl, Phenyl oder Benzyl bedeuten;

M für ein Alkalimetall und $M_1$ für ein Erdalkalimetall stehen;

$R_4$ und $R_{13}$ unabhängig voneinander $C_1$-$C_{12}$-Alkyl, $C_1$-$C_{12}$-Halogenalkyl, $C_1$-$C_{12}$-Hydroxyalkyl, $C_3$-$C_8$-Cycloalkyl, $C_6$-$C_{12}$-Aryl, $C_7$-$C_{12}$-Aralkyl bedeuten;

$R_5$ und $R_{10}$ unabhängig voneinander Wasserstoff, $C_1$-$C_6$-Alkyl, Phenyl oder Benzyl bedeutet, wobei die Alkylgruppen ihrerseits unsubstituiert oder mit $C_1$-$C_6$-Alkoxy oder $C_3$-$C_6$-Cycloalkyl substituiert sind;

$R_6$, $R_7$ und $R_8$ unabhängig voneinander $C_1$-$C_6$-Alkyl, $C_1$-$C_6$-Perfluoralkyl, Phenyl oder Benzyl darstellen;

u für 0 oder 1 steht;

wobei der mit $Q_1$ gebildete alicyclische Ring gegebenenfalls weitere nichtaromatische Doppelbindungen enthält;

$Q_2$ Wasserstoff, $C_1$-$C_{12}$-Alkyl, $C_1$-$C_{12}$-Halogenalkyl, $C_1$-$C_6$-Alkoxy, Halogen, -CN, $R_{11}$-$X_2$- bedeutet;

$R_{11}$ $C_1$-$C_{12}$-Alkyl, $C_1$-$C_{12}$-Halogenalkyl, $C_1$-$C_{12}$-Hydroxyalkyl, $C_3$-$C_6$-Cycloalkyl, $C_6$-$C_{12}$-Aryl oder $C_7$-$C_{12}$-Aralkyl darstellt;

$X_2$ -C(O)-O- oder -C(O)-$NR_{12}$- ist; und

$R_{12}$ Wasserstoff, $C_1$-$C_6$-Alkyl, Phenyl oder Benzyl bedeutet;

wobei die Cycloalkyl-, Heterocycloalkyl-, Aryl-, Heteroaryl-, Aralkyl- und Heteroaralkylgruppen unsubstituiert oder mit $C_1$-$C_6$-Alkyl, $C_1$-$C_6$-Alkoxy, -$NO_2$, -CN oder Halogen substituiert sind, und wobei die Heteroatome der Heterocycloalkyl-, Heteroaryl- und Heteroaralkylgruppen aus der Gruppe -O-, -S-, -$NR_9$- und -N= ausgewählt sind; und

$R_9$ Wasserstoff, $C_1$-$C_6$-Alkyl, Phenyl oder Benzyl bedeutet.

Aus dieser Gruppe sind diejenigen Verbindungen der Formel I bevorzugt, worin

$Q_1$ ein Rest mit mindestens einem Kohlenstoffatom ist, der zusammen mit der -CH=$CQ_2$-Gruppe einen 3- bis 10-gliedrigen alicyclischen Ring bildet, der gegebenenfalls ein Heteroatom ausgewählt aus der Gruppe Silicium, Sauerstoff, Stickstoff und Schwefel enthält, und der unsubstituiert oder mit Halogen, -CN, -$NO_2$, $R_1R_2R_3$Si-, -COOM, -$SO_3$M, -$PO_3$M, -COO$(M_1)_{1/2}$, -$SO_3(M_1)_{1/2}$, -$PO_3(M_1)_{1/2}$, $C_1$-$C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_4$-X- substituiert ist; oder bei dem an benachbarten Kohlenstoffatomen gegebenenfalls ein alicyclischer, aromatischer oder heteroaromatischer Ring ankondensiert ist, welcher unsubstituiert oder durch Halogen, -CN, -$NO_2$, $R_6R_7R_8$Si-, -COOM, -$SO_3$M, -$PO_3$M, -COO$(M_1)_{1/2}$, -$SO_3(M_1)_{1/2}$, -$PO_3(M_1)_{1/2}$, $C_1$-$C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_{13}$-$X_1$- substituiert ist;

$R_1$, $R_2$ und $R_3$ unabhängig voneinander $C_1$-$C_4$-Alkyl, $C_1$-$C_4$-Perfluoralkyl, Phenyl oder Benzyl bedeuten;

M für ein Alkalimetall und $M_1$ für ein Erdalkalimetall stehen;

$R_4$ und $R_{13}$ unabhängig voneinander $C_1$-$C_6$-Alkyl, $C_1$-$C_6$-Halogenalkyl, $C_1$-$C_6$-Hydroxyalkyl oder $C_3$-$C_6$-Cycloalkyl bedeuten;

X und $X_1$ unabhängig voneinander für -O-, -S-, -CO-, -SO- oder -$SO_2$- stehen;

$R_6$, $R_7$ und $R_8$ unabhängig voneinander $C_1$-$C_4$-Alkyl, $C_1$-$C_4$-Perfluoralkyl, Phenyl oder Benzyl darstellen;

und $Q_2$ Wasserstoff bedeutet.

Insbesondere eignet sich das erfindungsgemäße Verfahren zur Polymerisation von Norbornen und Norbornenderivaten. Von diesen Norbornenderivaten sind diejenigen besonders bevorzugt, die entweder der Formel II

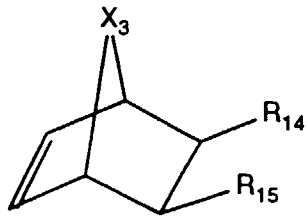

(II),

worin

| | |
|---|---|
| $X_3$ | $-CHR_{16}-$, Sauerstoff oder Schwefel; |
| $R_{14}$ und $R_{15}$ | unabhängig voneinander Wasserstoff, -CN, Trifluormethyl, $(CH_3)_3Si-O-$, $(CH_3)_3Si-$ oder $-COOR_{17}$; und |
| $R_{16}$ und $R_{17}$ | unabhängig voneinander Wasserstoff, $C_1$-$C_{12}$-Alkyl, Phenyl oder Benzyl bedeuten; |

oder der Formel III

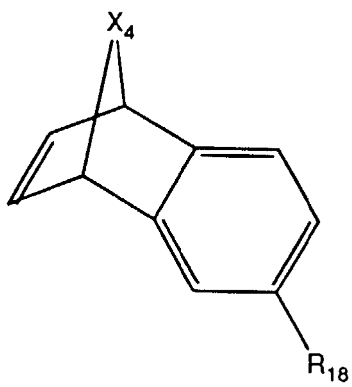

(III)

worin

| | |
|---|---|
| $X_4$ | $-CHR_{19}-$, Sauerstoff oder Schwefel; |
| $R_{19}$ | Wasserstoff, $C_1$-$C_{12}$-Alkyl, Phenyl oder Benzyl; und |
| $R_{18}$ | Wasserstoff, $C_1$-$C_6$-Alkyl oder Halogen bedeuten; |

oder der Formel IV

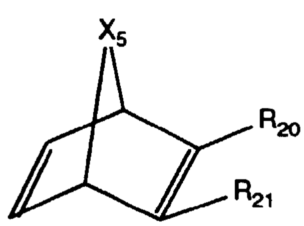

(IV),

worin

| | |
|---|---|
| $X_5$ | $-CHR_{22}-$, Sauerstoff oder Schwefel; |
| $R_{22}$ | Wasserstoff, $C_1$-$C_{12}$-Alkyl, Phenyl oder Benzyl; |
| $R_{20}$ und $R_{21}$ | unabhängig voneinander Wasserstoff, CN, Trifluormethyl, $(CH_3)_3Si-O-$, $(CH_3)_3Si-$ oder $-COOR_{23}$; und |
| $R_{23}$ | Wasserstoff, $C_1$-$C_{12}$-Alkyl, Phenyl oder Benzyl bedeuten; |

oder der Formel V entsprechen,

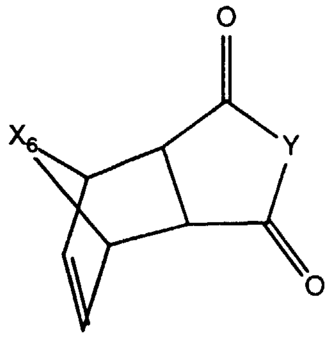

(V),

worin

$X_6$ -$CHR_{24}$-, Sauerstoff oder Schwefel;
$R_{24}$ Wasserstoff, $C_1$-$C_{12}$-Alkyl, Phenyl oder Benzyl;
Y Sauerstoff oder >N-$R_{25}$; und
$R_{25}$ Wasserstoff, Methyl, Ethyl oder Phenyl bedeuten.

Folgende Verbindungen der Formel I sind für das erfindungsgemäße Polymerisationsverfahren besonders gut geeignet, wobei bi- und polycyclische Systeme durch Diels-Alder-Reaktionen zugänglich sind:

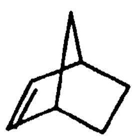

(1),

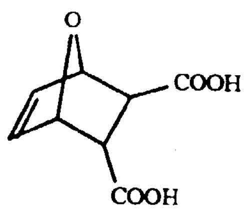

(2),

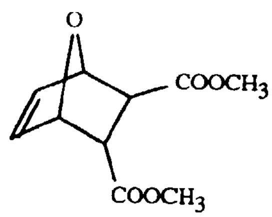

(3),

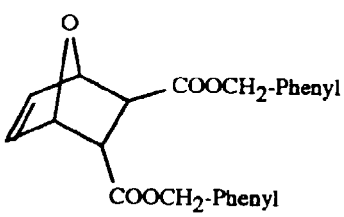

(4),

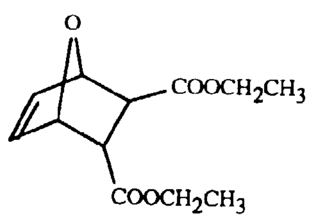

(5),

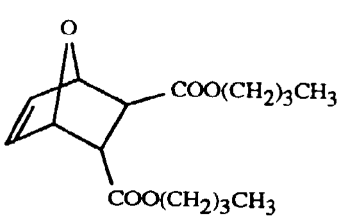

(6),

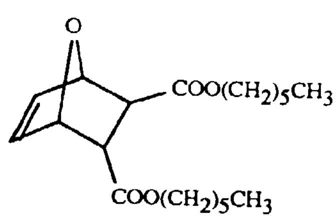

(7),

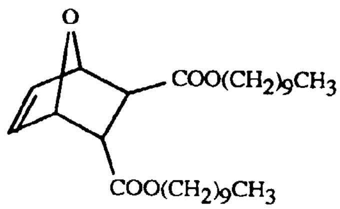 (8), 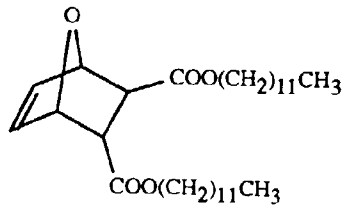 (9),

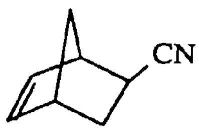 (10), 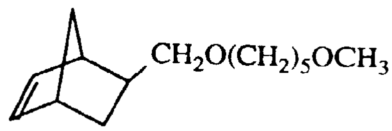 (11),

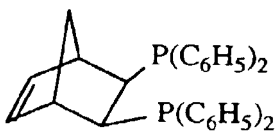 (12), 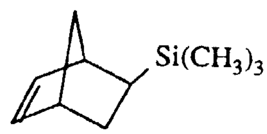 (13),

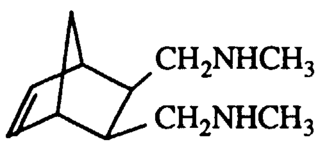 (14), 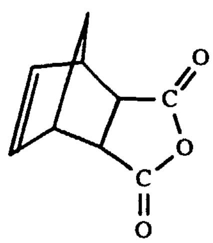 (15),

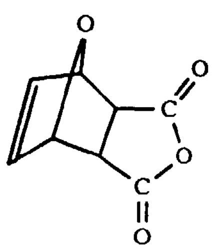 (16), 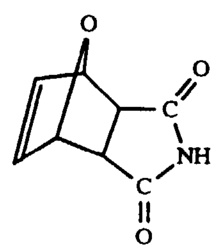 (17),

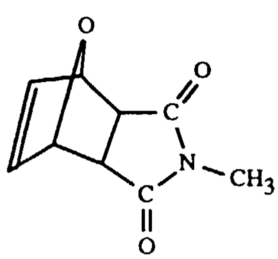 (18), 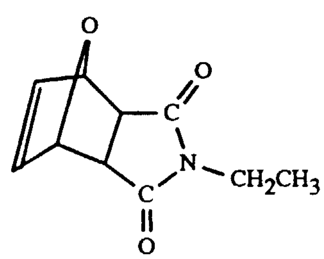 (19),

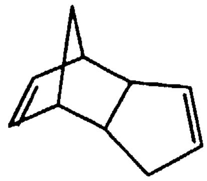 (20), 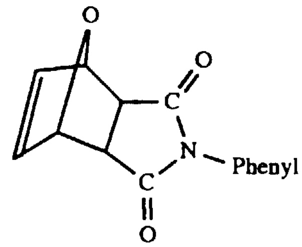 (21),

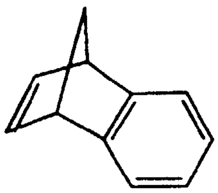 (22), 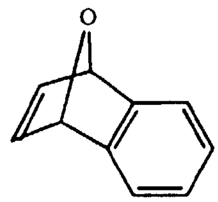 (23),

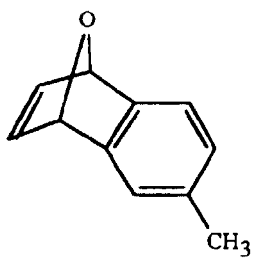 (24), 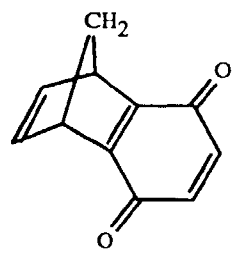 (25),

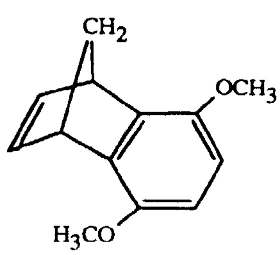 (26), 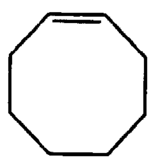 (27), 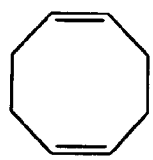 (28),

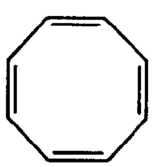 (29), 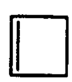 (30), 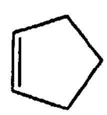 (31),

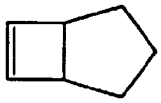 (32), 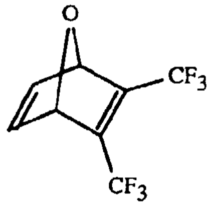 (33), 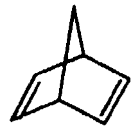 (34),

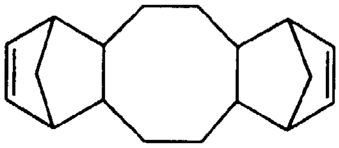 (35), 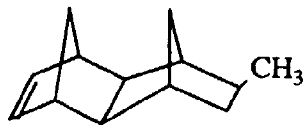 (36),

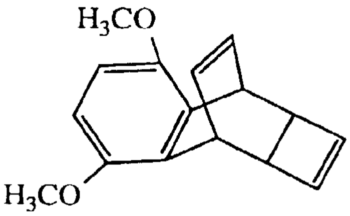 (37), 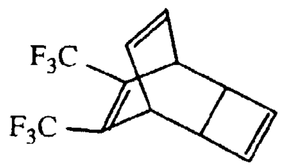 (38),

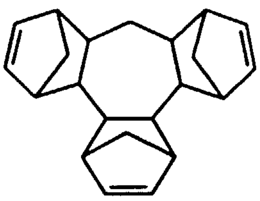 (39), 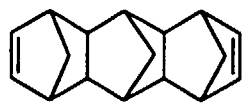 (40),

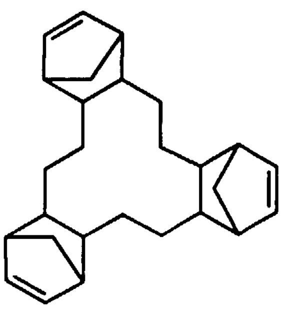 (41), 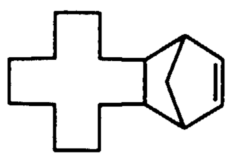 (42),

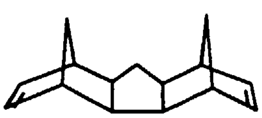 (43) und 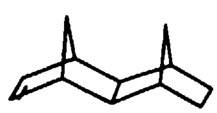 (44).

Bei den erfindungsgemäss zu verwendenden Titan(IV)-, Niob(V)- und Tantal(V)verbindungen handelt es sich um

solche, die ein Metallatom enthalten. Bei den erfindungsgemäss zu verwendenden Molybdän(VI)- und Wolfram(VI) verbindungen kann es sich um solche handeln, die ein Metallatom oder zwei über eine Einfach-, Doppel- oder Dreifachbindung verbundene Metallatome enthalten. Die übrigen Valenzen des Titans, Niobs, Tantals, Molybdäns und Wolframs sind bevorzugt mit thermostabilen Neutralliganden abgesättigt, wobei die Definition der Thermostabilität eingangs gegeben wurde. Bei dem an das Metallatom gebundenen Halogen handelt es sich bevorzugt um F, Cl, Br und I, bevorzugter um F, Cl und Br und besonders bevorzugt um F oder Cl. Der Silylmethylligand entspricht bevorzugt der Formel VII,

$$-CH_2-SiR_{29}R_{30}R_{31} \qquad (VII),$$

worin $R_{29}$, $R_{30}$ und $R_{31}$ unabhängig voneinander $C_1$-$C_{18}$-Alkyl, $C_5$- oder $C_6$-Cycloalkyl oder unsubstituiertes oder mit $C_1$-$C_6$-Alkyl oder $C_1$-$C_6$-Alkoxy substituiertes Phenyl oder Benzyl bedeuten.

Bedeuten $R_{29}$ bis $R_{31}$ Alkyl, so kann es linear oder verzweigt sein und bevorzugt 1 bis 12, besonders bevorzugt 1 bis 8 und insbesondere 1 bis 4 C-Atome enthalten. Besonders bevorzugtes Alkyl ist Methyl und Ethyl.

Bevorzugte Substituenten für $R_{29}$ bis $R_{31}$ als Phenyl und Benzyl sind im Rahmen der Definitionen Methyl, Ethyl, Methoxy und Ethoxy.

In einer bevorzugten Ausführungsform bedeuten in der Gruppe der Formel VII $R_{29}$ bis $R_{31}$ $C_1$-$C_4$-Alkyl, Phenyl oder Benzyl.

Einige Beispiele für die Gruppe der Formel VII sind $-CH_2-Si(CH_3)_3$, $-CH_2-Si(C_2H_5)_3$, $-CH_2-Si(n-C_3H_7)_3$, $-CH_2-Si(n-C_4H_9)_3$, $-CH_2-Si(CH_3)_2(n-C_4H_9)$, $-CH_2-Si(CH_3)_2(t-C_4H_9)$, $-CH_2-Si(CH_3)_2(C_2H_5)$, $-CH_2-Si(CH_3)_2[C(CH_3)_2CH(CH_3)_2]$, $-CH_2-Si(CH_3)_2(n-C_{12}H_{25})$, $-CH_2-Si(CH_3)_2(n-C_{18}H_{37})$, $-CH_2-Si(C_6H_5)_3$, $-CH_2-Si(CH_2-C_6H_5)_3$, $-CH_2-Si(C_6H_5)(CH_3)_2$ und $-CH_2-Si(CH_2-C_6H_5)(CH_3)_2$. Ganz besonders bevorzugt ist $-CH_2-Si(CH_3)_3$.

Die übrigen Valenzen der Ti(IV), Nb(V)-, Ta(V)-, Mo(VI)- und W(VI)-Atome können mit gleichen oder verschiedenen neutralen Liganden abgesättigt sein, beispielsweise aus der Gruppe bestehend aus =O, $=N-R_{33}$, sekundären Aminen mit 2 bis 18 C-Atomen, $R_{32}O$-, $R_{32}S$-, Halogen, gegebenenfalls substituiertem Cyclopentadienyl, überbrücktem Biscyclopentadienyl, tridentaten monoanionischen Liganden und Neutralliganden, wie zum Beispiel Ethern, Nitrilen, CO und tertiären Phosphinen und Aminen, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Benzyl oder Phenylethyl darstellen; und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)anlino, Di($C_1$-$C_6$-alkyl)amino-$C_1$-$C_3$-alkyl, oder Halogen substituiertes Phenyl, oder unsubstituiertes oder mit $C_1$-$C_6$-Alkyl, $C_1$-$C_6$-Alkoxy, $C_1$-$C_6$-Alkoxymethyl-, $C_1$-$C_6$-Alkoxyethyl- oder Halogen substituiertes Benzyl oder Phenylethyl bedeutet, mit der Massgabe, dass im Fall der Titanverbindungen der Ligand nicht =O oder $=N-R_{33}$ ist.

Sekundäre Amine sind bevorzugt solche der Formel $R_{34}R_{35}N$-, worin $R_{34}$ und $R_{35}$ unabhängig voneinander lineares oder verzweigtes $C_1$-$C_{18}$-Alkyl, $C_5$- oder $C_6$-Cycloalkyl, unsubstituiertes oder mit $C_1$-$C_6$-Alkoxy oder Halogen substituiertes Benzyl oder Phenylethyl oder $(C_1$-$C_6$-alkyl$)_3Si$; oder zusammen Tetramethylen, Pentamethylen oder 3-Oxapentan-1,5-diyl bedeuten. Das Alkyl enthält bevorzugt 1 bis 12 und besonders bevorzugt 1 bis 6 C-Atome. Einige Beispiele sind Dimethyl-, Diethyl-, Di-n-propyl-, Di-i-propyl-, Di-n-butyl-, Methyl-ethyl-, Dibenzyl-, Benzyl-methyl-, Diphenyl-, Phenyl-methylamino und Di(trimethylsilyl)amino.

Halogen als weiterer Ligand an den Metallatomen oder als Substituent ist bevorzugt Fluor oder Chlor und besonders bevorzugt Chlor.

Das Cyclopentadienyl kann unsubstituiert oder mit ein bis fünf $C_1$-$C_4$-Alkyl, besonders Methyl oder -Si($C_1$-$C_4$-Alkyl), besonders $-Si(CH_3)_3$ substituiert sein. Überbrückte Cyclopentadienyle sind besonders solche der Formel $R_{36}$-A-$R_{36}$, worin $R_{36}$ unsubstituiertes oder mit ein bis fünf $C_1$-$C_4$-Alkyl, besonders Methyl, oder -Si($C_1$-$C_4$-Alkyl), besonders $-Si(CH_3)_3$ substituiertes Cyclopentadienyl darstellt und A für $-CH_2$-, $-CH_2-CH_2$-, $-Si(CH_3)_2$-, $-Si(CH_3)_2-Si(CH_3)_2$- oder $-Si(CH_3)_2-O-Si(CH_3)_2$- steht.

Bei Ethern als Neutralliganden kann es sich um Dialkylether mit 2 bis 8 C-Atomen oder cyclische Ether mit 5 oder 6 Ringgliedern handeln. Einige Beispiele sind Diethylether, Methylethylether, Diethylether, Di-n-propylether, Di-i-propylether, Di-n-butylether, Ethylenglykoldimethylether, Tetrahydrofuran und Dioxan.

Bei Nitrilen als Neutralliganden kann es sich um aliphatische oder aromatische Nitrile mit 1 bis 12, vorzugsweise 1 bis 8 C-Atomen handeln. Einige Beispiele sind Acetonitril, Propionitril, Butylnitril, Benzonitril und Benzylnitril.

Bei tertiären Aminen und Phosphinen als Neutralliganden kann es sich um solche mit 3 bis 24, vorzugsweise 3

bis 18 C-Atomen handeln. Einige Beispiele sind Trimethylamin und -phosphin, Triethylamin und -phosphin, Tri-n-propylamin und -phosphin, Tri-n-butylamin und -phosphin, Triphenylamin und -phosphin, Tricyclohexylamin und -phosphin, Phenyldimethylamin und -phosphin, Benzyldimethylamin und -phosphin, 3,5-Dimethylphenyl-dimethylamin und -phosphin.

Bei den tridentaten monoanionischen Liganden kann es sich zum Beispiel um Hydro(trispyrazol-1-yl)borate oder Alkyl(trispyrazol-1-yl)borate, die unsubstituiert oder mit ein bis drei $C_1$-$C_4$-Alkyl substituiert sind [siehe Trofimenko, S., Chem. Rev., 93:943-980 (1993)], oder um $[C_5(R'_5)Co(R_{37}R_{38}P=O)_3]^{\ominus}$, worin R' H oder Methyl und $R_{37}$ sowie $R_{38}$ unabhängig voneinander $C_1$-$C_4$-Alkyl, $C_1$-$C_4$-Alkoxy oder Phenyl bedeuten [siehe Kläui, W., Angew. Chem. 102: 661-670 (1990)], handeln.

Bei Halogen als Substituent für die Reste $R_{32}$ und $R_{33}$ handelt es sich bevorzugt um Fluor und besonders bevorzugt um Chlor. Die Substituenten Alkyl, Alkoxy oder Alkoxy im Alkoxymethyl oder -ethyl enthalten bevorzugt 1 bis 4 und besonders 1 oder 2 C-Atome. Beispiele sind Methyl, Ethyl, n- und i-Propyl, n-, i- und t-Butyl, Methoxy, Ethoxy, n- und i- Propyloxy und n-, i- und t-Butyloxy.

$R_{32}$ und $R_{33}$ enthalten als Alkyl bevorzugt 1 bis 12, besonders bevorzugt 1 bis 8, und insbesondere bevorzugt 1 bis 4 C-Atome. Bevorzugt handelt es sich um verzweigtes Alkyl. Einige Beispiele für $R_{32}$ sind Methoxy, Ethoxy, n- und i-Propyloxy, n-, i- und t-Butyloxy, Hexafluor-i-propyloxy und Hexa- sowie Perfluorbutyloxy.

Einige Beispiele für substituiertes Phenyl und Benzyl für $R_{32}$ und $R_{33}$ sind p-Methylphenyl oder Benzyl, p-Fluor- oder p-Chlorphenyl oder -benzyl, p-Ethylphenyl oder -benzyl, p-n- oder i-Propylphenyl oder -benzyl, p-i-Butylphenyl oder -benzyl, 3-Methylphenyl oder -benzyl, 3-i-Propylphenyl oder -benzyl, 3,5-Dimethylphenyl oder -benzyl, 3,5-i-Propylphenyl oder -benzyl, 3,5-n- oder -t-Butylphenyl und -benzyl. $R_{33}$ stellt besonders bevorzugt unsubstituiertes oder mit $C_1$-$C_4$-Alkyl oder $C_1$-$C_4$-Alkoxy substituiertes Phenyl dar.

In einer bevorzugten Ausführungsform entsprechen die Metallverbindungen besonders den Formeln VIII, VIIIa oder VIIIb,

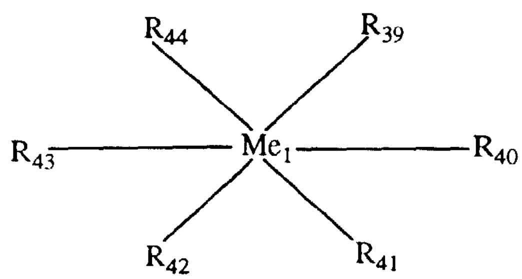

(VIII),

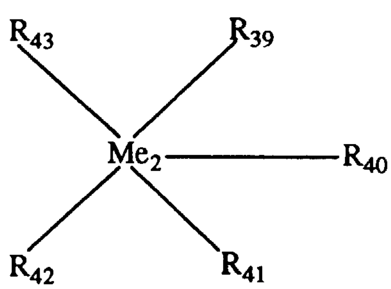

(VIIIa),

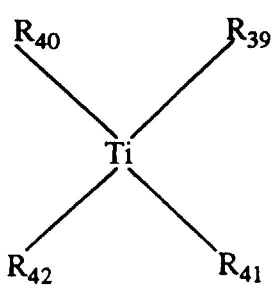

(VIIIb),

worin

$Me_1$ für Mo(VI) oder W(VI) steht;
$Me_2$ für Nb(V) oder Ta(V) steht;

einer der Reste $R_{39}$ bis $R_{44}$ einen Rest $-CH_2-SiR_{29}R_{30}R_{31}$ der Formel VII bedeutet; wenigstens einer der Reste $R_{39}$ bis $R_{44}$ F, Cl oder Br darstellt;

$R_{29}$, $R_{30}$ und $R_{31}$ unabhängig voneinander $C_1$-$C_6$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten;

in Formel VIII zwei oder jeweils zwei und in Formel VIIIa zwei der übrigen Reste von $R_{39}$ bis $R_{44}$ je zusammen =O oder $=N-R_{33}$ bedeuten, und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)anlino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellt, und die übrigen Reste $R_{39}$ bis $R_{43}$ Sekundäramino mit 2 bis 18 C-Atomen, $R_{32}O$- oder $R_{32}S$-, Halogen, unsubstituiertes oder substituiertes Cyclopentadienyl oder überbrücktes Biscylopentadienyl oder einen Neutralliganden bedeuten, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen; oder

in den Formeln VIII, VIIIa und Vmb die übrigen Reste von $R_{39}$ bis $R_{44}$ unabhängig voneinander Sekundäramino mit 2 bis 18 C-Atomen, $R_{32}O$- oder $R_{32}S$-, Halogen, unsubstituiertes oder substituiertes Cyclopentadienyl oder überbrücktes Biscylopentadienyl oder einen Neutralliganden bedeuten, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen.

Für die Reste $R_{29}$ bis $R_{33}$ gelten die zuvor angebenen Bevorzugungen.

In einer besonders bevorzugten Ausführungsform werden im erfindungsgemässen Verfahren Titan-, Niob-, Tantal-, Molybdän- oder Wolframverbindungen der Formeln VIII, VIIIa und VIIIb verwendet, worin

$R_{39}$ einen Rest der Formel VII $-CH_2-Si(R_{29}R_{30}R_{31})_3$,
$R_{40}$ F, Cl oder Br darstellen; und

(a) in Formel VIII $R_{41}$ und $R_{42}$ sowie $R_{43}$ und $R_{44}$ jeweils zusammen den Rest $=N-R_{33}$ bedeuten, oder $R_{41}$ und $R_{42}$ zusammen den Rest $=N-R_{33}$ bedeuten, und $R_{43}$ und $R_{44}$ unabhängig voneinander unsubstituiertes oder substituiertes Cyclopentadienyl, $R_{32}$-O- oder Halogen darstellen, oder
b) in Formel VIIIa $R_{41}$ und $R_{42}$ zusammen den Rest $=N-R_{33}$ bedeuten, und $R_{43}$ unsubstituiertes oder substituiertes Cyclopentadienyl, $R_{32}$-O- oder Halogen bedeuten, oder in Formel VIIIa $R_{41}$, $R_{42}$ und $R_{43}$ unabhängig voneinander unsubstituiertes oder substituiertes Cyclopentadienyl, $R_{32}$-O- oder Halogen bedeuten, oder
c) in Formel VIIIb $R_{41}$ und $R_{42}$ unabhängig voneinander unsubstituiertes oder substituiertes Cyclopentadienyl, $R_{32}$-O- oder Halogen bedeuten,

wobei $R_{29}$ bis $R_{33}$ die voranstehenden Bedeutungen haben. Für $R_{29}$, $R_{30}$, $R_{31}$, $R_{32}$ und $R_{33}$ gelten die voranstehenden Bevorzugungen.

Ganz besonders bevorzugt werden im erfindungsgemässen Verfahren Metallverbindungen der Formeln IX, IXa, IXb, IXc oder IXd verwendet,

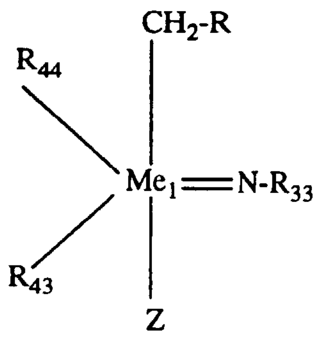

(IX),

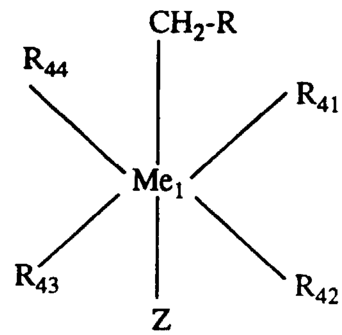

(IXa),

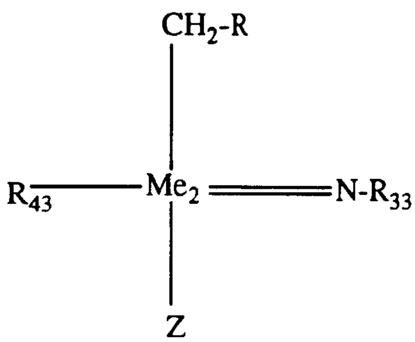

(IXb),

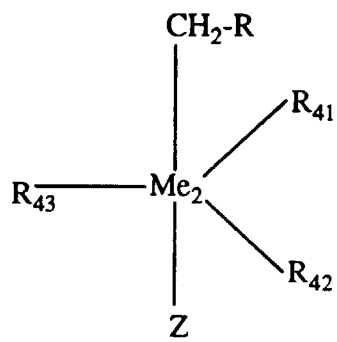

(IXc),

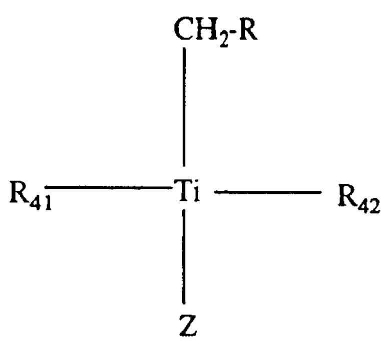

(IXd),

worin

$Me_1$ für Mo(VI) oder W(VI) steht;
$Me_2$ für Nb(V) oder Ta(V) steht;
R -Si($C_1$-$C_4$-Alkyl)$_3$ darstellt;
Z für Cl oder Br steht;
$R_{33}$ Phenyl oder mit 1 bis 3 $C_1$-$C_4$-Alkyl oder $C_1$-$C_4$-Alkoxy substituiertes Phenyl bedeutet,

(a) $R_{43}$ und $R_{44}$ in Formel IX zusammen die Gruppe $=NR_{33}$ oder einzeln unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellen;
(b) $R_{41}$, $R_{42}$ und $R_{43}$ und $R_{44}$ in Formel IXa unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl bedeuten;
(c) $R_{43}$ in Formel IXb F, Cl, Br, unsubstituiertes oder mit Fluor substituiertes lineares oder besonders ver-

zweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellt;

(d) $R_{41}$, $R_{42}$ und $R_{43}$ in Formel IXc unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellen; und

(e) $R_{41}$ und $R_{42}$ in Formel IXd unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellen.

Das Alkoxy stellt besonders bevorzugt verzweigtes Alkoxy dar, das gegebenenfalls mit F teilweise oder vollständig substituiert ist, zum Beispiel i-Propyloxy, i- und t-Butyloxy, Hexafluorpopyloxy und Nonafluorpropyloxy. Bei dem Phenyloxyrest handelt es sich besonders um in den 2,6-Stellungen mit $C_1$-$C_4$-Alkyl substituiertes Phenyloxy, zum Beispiel 2,6-Dimethylphenyloxy. Beispiele für substituierte Cyclopentadienylreste sind Mono- bis Pentamethylcyclopentadienyl und Trimethylsilylcyclopentadienyl. $R_{33}$ stellt bevorzugt Phenyl oder mit $C_1$-$C_4$-Alkyl substituiertes Phenyl dar, besonders Phenyl, 3,5-Dimethyl-, 2,6-Dimethyl-, 3,5-Diethyl- und 2,6-Diethylphenyl.

Ganz besonders bevorzugte Verbindungen im erfindungsgemässen Verfahren sind solche der Formeln X, Xa, Xb, Xc und Xd

$$(R_{33}\text{-N=})_2Me_1X_a[CH_2Si(CH_3)_3] \qquad (X),$$

$$(R_{33}\text{-N=})R_{41}Me_1X_a(OR_{32})CH_2Si(CH_3)_3 \qquad (Xa),$$

$$R_{42}R_{43}Me_2X_a(OR_{32})CH_2Si(CH_3)_3 \qquad (Xc),$$

$$R_{33}\text{-N=}Me_2X_a(OR_{32})CH_2Si(CH_3)_3 \qquad (Xc),$$

$$R_{41}\text{-Ti}X_a(OR_{32})CH_2Si(CH_3)_3 \qquad (Xd),$$

worin

| | |
|---|---|
| $Me_1$ | für Mo(VI) oder W(VI) steht; |
| $Me_2$ | für Nb(V) oder Ta(V) steht; |
| $X_a$ | für F oder Cl steht; |
| $R_{33}$ | Phenyl oder mit 1 oder 2 $C_1$-$C_4$-Alkylgruppen substituiertes Phenyl bedeutet; |
| $R_{32}$ | verzweigtes gegebenenfalls teilweise oder vollständig mit Fluor substituiertes $C_3$-oder $C_4$-Alkyl oder Phenyloxy oder mit 1 bis 3 Methyl- oder Ethylgruppen substituiertes Phenyloxy darstellt; |
| $R_{42}$ und $R_{43}$ | unabhängig voneinander unsubstituiertes oder mit 1 bis 5 Methylgruppen substituiertes Cyclopentadienyl, $X_a$ oder $R_{32}O$- bedeuten; und |
| $R_{41}$ | unsubstituiertes oder mit 1 bis 5 Methylgruppen substituiertes Cyclopentadienyl, $X_a$ oder $R_{32}O$- darstellt. |

Einige Beispiele für Titan(IV)-, Niob(V)-, Tantal(V)-, Molybdän(VI)- und Wolfram(VI)verbindungen sind [Cp bedeutet Cyclopentadienyl und Me bedeutet Nb(V) oder Ta(V)]:

$Ti[CH_2Si(CH_3)_3]Cl_3$, $Ti[CH_2Si(CH_3)_3]Br_3$, $Cp_2Ti[CH_2Si(CH_3)_3]Cl$, $(CH_3)_2Ti[CH_2Si(CH_3)_3]Cl$, $Cp_2Ti[CH_2Si(CH_3)_3]Br$, $Cp_2Ti[CH_2Si(CH_3)_3]I$, $CpTi[CH_2Si(CH_3)_3][CH_3]Cl$, $CpTi[CH_2Si(CH_3)_3]Br_2$, $[(CH_3)_2CHO]_2Ti[CH_2Si(CH_3)_3]Cl$, $[(CF_3)_2CHO]_2Ti[CH_2Si(CH_3)_3]Cl$, $[(CF_3)_2CHO]CpTi[CH_2Si(CH_3)_3]Cl$, $[(CH_3)_2CHO]CpTi[CH_2Si(CH_3)_3]Cl$, $(C_6H_5O)CpTi[CH_2Si(CH_3)_3]Cl$, (2,6-Dimethyl-$C_6H_5O$)$CpTi[CH_2Si(CH_3)_3]Cl$, (2,6-Dimethyl-$C_6H_5O$)$_2Ti[CH_2Si(CH_3)_3]Cl$, (2,6-Dimethyl-$C_6H_5O$)$Ti[CH_2Si(CH_3)_3]_2Br$, $[(CH_3)_3CO]CpTi[CH_2Si(CH_3)_3]Cl$, $[(CF_3)_2(CH_3)CO]CpTi[CH_2Si(CH_3)_3]Cl$, Me(=N-$C_6H_5$)$[OCH(CH_3)_2][(CH_2Si(CH_3)_3]Cl$, $Cp_2Me[(CH_2Si(CH_3)_3]Cl_2$, Me(=N-$C_6H_5$)$[OCH(CF_3)_2][(CH_2Si(CH_3)_3]Cl$, Me(=N-2,6-diisopropyl$C_6H_3$)$[(CH_2Si(CH_3)_3]Cl_2$, Me(=N-2,6-diisopropyl$C_6H_3$)$[(CH_3)_2CHO][(CH_2Si(CH_3)_3]Cl$, Me(=N-

2,6-dimethyl$C_6H_3$)(2,6-Dimethyl-$C_6H_5O$)[$CH_2Si(CH_3)_3$]Cl, Me(=N-2,6-dimethyl$C_6H_3$)(($CF_3$)$_2$CHO)[$CH_2Si(CH_3)_3$]Cl, (=N-2,6-dimethyl$C_6H_3$)CpMe[($CH_2Si(CH_3)_3$]Cl, ($C_6H_5O$)$_2$CpMe[($CH_2Si(CH_3)_3$]Cl, (=N-3,5-dimethyl$C_6H_3$)Me [2,6-dimethyl$C_6H_3O$)][($CH_2Si(CH_3)_3$)]Cl, CpMe[OCH($CH_3$)$_2$]$_2$[($CH_2Si(CH_3)_3$]Br, CpMe[OCH($CH_3$)$_2$]$_2$[($CH_2Si(CH_3)_3$]Cl, CpMe[OCH($CF_3$)$_2$]$_2$[($CH_2Si(CH_3)_3$]Cl, $Cp_2$Me(Methyl)[($CH_2Si(CH_3)_3$]Cl, $Cp_2$Me[OCH($CH_3$)$_2$][($CH_2Si(CH_3)_3$]Cl, [OCH ($CH_3$)$_2$]$_2$Me[$CH_2Si(CH_3)_3$]$Cl_2$, Me(2,6-Dimethylphenyloxy)($CH_3O$)$_2$[($CH_2Si(CH_3)_3$]Cl, Me[$CH_2Si(CH_3)_3$][OCH($CH_3$)] ($CF_3O$)$_2$Cl,W(=N-$C_6H_5$)[(OC($CH_3$)$_3$][$CH_2$-Si($CH_3$)$_3$]$Cl_2$, (2,6-Diisopropylphenyloxy)$_2$Me[$CH_2Si(CH_3)_3$]$Cl_2$, $Cp_2$Me[OC ($CH_3$)$_3$][($CH_2Si(CH_3)_3$]Cl, CpMe[OC($CH_3$)($CF_3$)$_2$]$_2$[($CH_2Si(CH_3)_3$]Cl, $Mo_2$[($CH_2$-Si($CH_3$)$_3$)(O$CH_2$C($CH_3$)$_3$)Cl]$_2$, Mo(=N-2,6-diisopropyl$C_6H_3$)$_2$[$CH_2$-Si($CH_3$)$_3$]Cl, W(=N-$C_6H_5$)[(OC($CH_3$)$_3$]$_2$[$CH_2$-Si($CH_3$)$_3$]Cl, Mo(=N-$C_6H_5$)$_2$[$CH_2$-Si($CH_3$)$_3$]Cl, Mo(=N-2,6-diisopropyl$C_6H_3$)[(O$CH_2$C($CH_3$)$_3$]$_2$[$CH_2$-Si($CH_3$)$_3$]Cl.

Die erfindungsgemäss zu verwendenden Titan-, Niob-, Tantal-, Molybdän- und Wolframverbindungen sind bekannt oder nach bekannten und analogen Verfahren ausgehend von gegebenenfalls entsprechend substituierten Metallhalogeniden mittels Grignardreaktionen herstellbar [Schrock, R.R., Murdzeck, J.S., Bazan, G.C., Robbins, J., DiMare, M., O'Regan, M., J. Am. Chem. Soc., 112:3875-3886 (1990)].

Das erfindungsgemäße Verfahren kann in Anwesenheit eines inerten Lösungsmittels durchgeführt werden. Ein besonderer Vorteil des erfindungsgemäßen Verfahrens ist jener, daß bei flüssigen Monomeren das Verfahren ohne die Verwendung eines Lösungsmittels durchgeführt werden kann. Inert bedeutet, dass sich die Wahl der Lösungsmittel nach der Reaktivität der Metallkatalysatoren richtet, zum Beispiel, dass protisch polare Lösungsmittel nicht verwendet werden, wenn Substitutionsreaktionen wie der Austausch von Halogen durch Alkoxy zu erwarten sind. Ferner ist zu berücksichtigen, dass C=O-Gruppen enthaltende Lösungsmittel mit den Metallkatalysatoren reagieren können.

Geeignete inerte Lösungsmittel sind zum Beispiel protisch-polare und aprotische Lösungsmittel, die allein oder in Mischungen aus mindestens zwei Lösungsmitteln verwendet werden können. Beispiele sind: Ether (Dibutylether, Tetrahydrofuran, Dioxan, Ethylenglykolmonomethyl- oder -dimethylether, Ethylenglykolmonoethyl- oder -diethylether, Diethylenglykoldiethylether, Triethylenglykoldimethylether), halogenierte Kohlenwasserstoffe (Methylenchlorid, Chloroform, 1,2-Dichlorethan, 1,1,1-Trichlorethan, 1,1,2,2-Tetrachlorethan), Carbonsäureester und Lactone (Essigsäureethylester, Propionsäuremethylester, Benzoesäureethylester, 2-Methoxyethylacetat, γ-Butyrolacton, δ-Valerolacton, Pivalolacton), Carbonsäureamide und Lactame (N,N-Dimethylformamid, N,N-Diethylformamid, N,N-Dimethylacetamid, Tetramethylharnstoff, Hexamethylphosphorsäuretriamid, γ-Butyrolactarn, ε-Caprolactam, N-Methylpyrrolidon, N-Acetylpyrrolidon, N-Methylcaprolactam), Sulfoxide (Dimethylsulfoxid), Sulfone (Dimethylsulfon, Diethylsulfon, Trimethylensulfon, Tetramethylensulfon), tertiäre Amine (N-Methylpiperidin, N-Methylmorpholin), aliphatische und aromatische Kohlenwasserstoffe wie zum Beispiel Petrolether, Pentan, Hexan, Cyclohexan, Methylcyclohexan, Benzol oder substituierte Benzole (Chlorbenzol, o-Dichlorbenzol, 1,2,4-Trichlorbenzol, Nitrobenzol, Toluol, Xylol) und Nitrile (Acetonitril, Propionitril, Benzonitril, Phenylacetonitril). Bevorzugte Lösungsmittel sind aprotische polare und unpolare Lösungsmittel.

Bevorzugte Lösungsmittel sind aliphatische und aromatische Kohlenwasserstoffe sowie Gemische solcher Lösungsmittel.

Es ist besonders hervorzuheben, dass die erfindungsgemäss im Verfahren eingesetzten Zusammensetzungen aus einem gegebenenfalls substituierten Cycloolefin und Katalysator oft unempfindlich gegen Sauerstoff sind, was eine Lagerhaltung sowie Reaktionsausführung ohne Schutzgas ermöglicht Es empfiehlt sich aber der Ausschluss von Feuchtigkeit, also die Verwendung trockener Reaktions- und Lagerbedingungen.

Die für das erfindungsgemässe Verfahren eingesetzten Monomere der Formel I und Katalysatoren können sowohl getrennt als auch gemeinsam als Gemisch gelagert werden, da der verwendete Katalysator eine besonders hohe Stabilität aufweist. Das Gemisch kann vor der photochemischen Polymerisation als gebrauchsfertige Formulierung gelagert werden, was für die grosstechnische Anwendung des erfindungsgemässen Verfahrens von Vorteil ist Die Lagerung erfolgt wegen der hohen Photosensitivität besonders im UV-Licht zweckmässig unter Lichtausschluss.

Ein weiterer Gegenstand der Erfindung ist eine photopolymerisierbare Zusammensetzung, enthaltend (a) ein cyclisches Olefin oder mindestens zwei verschiedene cyclische Olefine und (b) eine katalytisch wirksame Menge mindestens einer thermostabilen Titan(IV)-, Niob(V)-, Tantal(V)-, Molybdän(VI)- oder Wolfram(VI)-verbindung, in der eine Silylmethylgruppe und mindestens ein Halogen am Metall gebunden sind.

Die erfindungsgemässe Zusammensetzung kann zusätzlich weitere nichtflüchtige offenkettige Comonomere enthalten, die mit den gespannten Cycloolefinen Copolymere bilden. Bei Mitverwendung von zum Beispiel Dienen können sich vernetzte Polymerisate bilden. Einige Beispiele für solche Comonomere sind olefinisch mono- oder di-ungesättigte Verbindungen wie Olefine und Diene aus der Gruppe Penten, Hexen, Hepten, Octen, Decen, Dodecylen, Acryl- und Methacrylsäure, deren Ester und Amide, Vinylether, Styrol, Butadien, Isopren und Chlorbutadien.

Die weiteren zur Metathesepolymerisation fähigen Olefine sind in der erfindungsgemässen Zusammensetzung zum Beispiel in einer Menge von bis zu 80 Gew. %, bevorzugt 0,1 bis 80 Gew. %, bevorzugter 0,5 bis 60 Gew. % und besonders bevorzugt 5 bis 40 Gew. % enthalten, bezogen auf die Gesamtmenge an Verbindungen der Formel I und weiterer zur Metathesepolymerisation fähiger Olefine.

Die erfindungsgemässe Zusammensetzung kann Formulierungshilfstoffe enthalten. Bekannte Hilfsstoffe sind Antistatika, Antioxidantien, Lichtschutzmittel, Weichmacher, Farbstoffe, Pigmente, Füllstoffe, Verstärkerfüllstoffe, Gleitmittel, Haftvermittler, viskositätserhöhende Mittel und Entformungshilfsmittel. Die Füllstoffe können in überraschend hohen Anteilen zugegen sein, ohne die Polymerisation nachteilig zu beeinflussen, zum Beispiel in Mengen von bis zu 70 Gew.-%, bevorzugt 1 bis 70 Gew.%, bevorzugter 5 bis 60 Gew.-%, besonders bevorzugt 10 bis 50 Gew.-% und insbesondere bevorzugt 10 bis 40 Gew.-%, bezogen auf die Zusammensetzung. Füllstoffe und Verstärkerfüllstoffe zur Verbesserung der optischen, physikalischen, mechanischen und elektrischen Eigenschaften sind in grosser Vielzahl bekannt geworden. Einige Beispiele sind Glas und Quarz in Form von Pulvern, Kugeln und Fasern, Metall- und Halbmetalloxide, Carbonate wie $MgCO_3$, $CaCO_3$, Dolomit, Metallsulfate wie Gips und Schwerspat, natürliche und synthetische Silikate wie Talk, Zeolithe, Wollastonit, Feldspate, Tonerden wie Chinaclay, Gesteinsmehle, Whisker, Carbonfasern, Kunststofffasern oder -pulver und Russ. Viskositätserhöhende Mittel sind insbesondere Metathesepolymerisate, die olefinisch ungesättigte Gruppen aufweisen und bei der Polymerisation in das Polymer eingebaut werden können. Solche Metathesepolymerisate sind bekannt und zum Beispiel unter dem Handelsnamen Vestenamere® käuflich. Andere viskositätserhöhende Mittel sind Polybutadien, Polyisopren oder Polychlorbutadien, sowie Copolymere von Butadien, Isopren und Chloropren mit Olefinen. Die viskositätserhöhenden Mittel können in einer Menge von 0,1 bis 50, bevorzugt 1 bis 30, und besonders bevorzugt 1 bis 20 Gew.-% enthalten sein bezogen auf die Zusammensetzung. Bei der Verwendung von Füllstoffen ist es zweckmässig, die optische Transparenz für die Polymerisation zu erhalten oder die Polymerisation in dünnen Schichten durchzuführen.

Es ist beim erfindungsgemässen Verfahren nicht notwendig, die Bestrahlung der Reaktionsmischung über die gesamte Reaktionsdauer aufrechtzuerhalten. Ist die Polymerisation einmal photochemisch initiiert, erfolgt der weitere Reaktionsverlauf selbst im Dunkeln selbstständig. Vorteilhafterweise wird die Bestrahlung mit Licht der Wellenlänge im Bereich von 50 nm bis 1000 nm, bevorzugt im Bereich von 200 nm bis 500 nm und ganz besonders bevorzugt im UV-Bereich durchgeführt Die Bestrahlungsdauer ist von der Art der Lichtquelle abhängig. Vorzugsweise werden erfindungsgemäß UV-Laser oder UV-Lampen eingesetzt. Die Bestrahlung des Katalysators kann sowohl vor, während, als auch nach der Monomerenzugabe erfolgen.

Geeignete Bestrahlungszeiten sind von einer Minute bis zu 8 Stunden, insbesondere 5 Minuten bis zu 4 Stunden. Die Reihenfolge der Zugabe von Monomeren und Katalysator ist unkritisch. Das Monomer kann sowohl vorgelegt als auch nach Einbringen des Katalysators zugegeben werden. Ebenso kann der Katalysator vorbestrahlt und anschließend das Monomer zugegeben werden. Ferner kann auch die Katalysator und Monomer enthaltende Lösung bestrahlt werden.

Das erfindungsgemässe Verfahren wird bevorzugt bei Raumtemperatur bis leicht erhöhter Temperatur durchgeführt. Eine Temperaturerhöhung dient der Erhöhung der Reaktionsgeschwindigkeit. Die verwendeten Katalysatoren initiieren nur in Ausnahmefällen für sich eine thermische Polymerisation. Bei den zur Reaktionsbeschleunigung gewählten Temperaturen findet daher überwiegend eine Photopolymerisation statt. Es ist aber zu erwähnen, dass die Katalysatoren durch ausreichende Bestrahlung in thermoaktive Katalysatoren umgewandelt werden können.

Insbesondere wird das erfindungsgemäße Verfahren bei Temperaturen von -20°C bis +110°C durchgeführt.

Ein ganz besonderer und überraschender Vorteil des erfindungsgemässen Verfahrens besteht darin, dass die verwendeten Titan(IV)-, Niob(V)-, Tantal(V)-, Molybdän- und Wolframverbindungen nach der Bestrahlung als thermische Katalysatoren wirken. Daraus ergibt sich die Möglichkeit, die Polymerisation nach einer kurzen Bestrahlungszeit durch Wärmezufuhr fortzusetzen und zu beenden, was in verschiedenen Bereichen der Herstellung von Formkörpern oder Beschichtungen wirtschaftliche und technische Vorteile bietet. Insbesondere ist das kombinierte Verfahren günstig für die Herstellung von Thermoplasten.

Ein weiterer Gegenstand der Erfindung ist ein Verfahren zur photokatalytisch induzierten und nachfolgenden thermischen Polymerisation eines cyclischen Olefins oder mindestens zwei verschiedener cyclischer Olefine in Gegenwart einer Metallverbindung als Katalysator, das dadurch gekennzeichnet ist, dass man eine photochemische Ringöffnungs-Metathese-Polymerisation durchführt, indem man a) zunächst die Cycloolefine in Gegenwart einer katalytischen Menge mindestens einer thermostabilen Titan(IV)-, Niob(V)-, Tantal(V)-, Molybdän(VI)- oder Wolfram(VI)verbindung, in der eine Silylmethylgruppe und mindestens ein Halogen am Metall gebunden ist, bestrahlt; oder eine katalytische Menge einer thermostabilen Titan(IV)-, Niob(V)- oder Tantal(V)verbindung, in der eine Silylmethylgruppe und mindestens ein Halogen am Metall gebunden ist, gegebenenfalls in einem inerten Lösungsmittel bestrahlt und dann mit mindestens einem Cycloolefin vermischt; und b) dann die Polymerisation durch Erhitzen und ohne Bestrahlung beendet.

Für die Verfahrensstufe a) gelten die zuvor angegebenen Bevorzugungen. Die Bestrahlungsdauer hängt im wesentlichen von der gewünschten Reaktionsführung ab. Eine kurzzeitige Bestrahlung wird zum Beispiel dann gewählt, wenn man die Polymerisation nur durch Bestrahlung initiieren und durch Erhitzen beenden will. Kurzzeitig kann eine Bestrahlungszeit bis zu 60 Sekunden, bevorzugt 5 bis 60 Sekunden und besonders bevorzugt 10 bis 40 Sekunden bedeuten. Eine längere Bestrahlungszeit wird zum Beispiel dann gewählt, wenn man die Polymerisation überwiegend unter Bestrahlung durchführen und die endgültige Polymerisation nur durch Nachtempern beenden will.

Erhitzen in der Verfahrensstufe b) kann eine Reaktionstemperatur von 50 bis 200 °C, bevorzugt 50 bis 150 °C und besonders bevorzugt 70 bis 120 °C bedeuten.

Katalytische Mengen bedeutet im Rahmen der vorliegenden Erfindung bevorzugt eine Menge von 0,001 bis 20 Mol-%, besonders bevorzugt 0,01 bis 15 Mol-% und ganz besonders bevorzugt 0,01 bis 10 Mol-%, bezogen auf die Menge des Monomers.

Die thermischen Katalysatoren für die ringöffnende Metathesepolymerisation von cyclischen Olefinen werden hergestellt, indem man eine thermostabile Titan(IV)-, Niob(V)-, Tantal(V)-, Molybdän(VI)- oder Wolfram(VI)verbindung, in der eine Silylmethylgruppe und mindestens ein Halogen am Metall gebunden ist, in Substanz oder in einem Lösungsmittel bestrahlt.

Bei den erfindungsgemäss zu verwendenden Cycloolefinen handelt es sich um gespannte Ringe. Cyclohexen als Ausnahme kann generell mit Olefin-Metathese nicht homopolymerisiert werden. Diese Ausnahme ist dem Fachmann bekannt und beispielsweise in Ivin, K.J., Saegusa, T. (Hrsg.), Ring-Opening Polymerisation 1:139-144 Elsevier Applied Science Publishers, London und New York (1984) beschrieben.

Mit dem erfindungsgemässen Verfahren können strahlungsgehärtete Oligomere und Polymere mit gleichen oder verschiedenen Struktureinheiten der Formel XI,

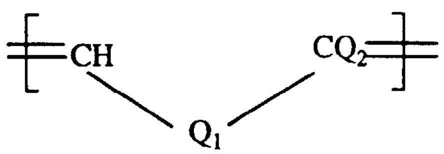

(XI),

worin $Q_1$ und $Q_2$ die unter der Formel I angegebenen Bedeutungen haben, hergestellt werden. Für diese Polymeren gelten die zuvor angegebenen Bevorzugungen. Es kann sich um Homopolymere oder Copolymere mit statistischer Verteilung der Struktureinheiten, Pfropfpolymere oder um Blockpolymere handeln. Sie können ein mittleres Molekulargewicht ($\overline{Mw}$) von z. B. 500 bis zu 2 Millionen Dalton, vorzugsweise 1000 bis 1 Million Dalton (bestimmt nach GPC durch Vergleich mit engverteilen Polystyrolstandards) aufweisen.

Mit dem erfindungsgemässen Verfahren können thermoplastisch verformbare Werkstoffe zur Herstellung von Formkörpern aller Art, Beschichtungen und Reliefabbildungen hergestellt werden.

Je nach verwendetem Monomer können die erfindungsgemäss hergestellten Polymere sehr verschiedene Eigenschaften aufweisen. Einige zeichnen sich durch sehr hohe Sauerstoffpermeabilität, tiefe Dielektrizitätskonstanten, gute Wärmestabilität und geringe Wasserabsorption aus. Andere haben hervorragende optische Eigenschaften wie zum Beispiel hohe Transparenz und niedrige Brechungsindices. Ferner ist insbesondere der geringe Schrumpf hervorzuheben. Daher können sie in sehr unterschiedlichen technischen Gebieten Verwendung finden.

Die erfindungsgemässen Zusammensetzungen zeichnen sich als Schichten auf den Oberflächen von Trägermaterialien durch eine hohe Haftfestigkeit aus. Ferner zeichnen sich die beschichteten Materialien durch eine sehr hohe Oberflächenglätte und -glanz aus. Unter den guten mechanischen Eigenschaften ist insbesondere der geringe Schrumpf und die hohe Schlagzähigkeit hervorzuheben, aber auch die thermische Beständigkeit. Ferner ist die leichte Entformbarkeit und die hohe Lösungsmittelbeständigkeit zu erwähnen.

Diese Polymeren eignen sich zur Herstellung von medizinischen Geräten, Implantaten oder Kontaktlinsen; zur Herstellung von elektronischen Bauteilen; als Bindemittel für Lacke; als photohärtbare Zusammensetzungen für den Modellbau oder als Klebstoffe zum Verkleben von Substraten mit niedrigen Oberflächenenergien (zum Beispiel Teflon, Polyethylen und Polypropylen), sowie als photopolymerisierbare Zusammensetzung in der Stereolithographie. Die erfindungsgemäßen Zusammensetzungen können auch zur Herstellung von Lacken durch Photopolymerisation verwendet werden, wobei einerseits klare (transparente) und sogar pigmentierte Zusammensetzungen verwendet werden können. Es können sowohl Weiss- als auch Buntpigmente verwendet werden. Ferner ist die Herstellung von Formkörpern nach thermoplastischen Formgebungsverfahren für Gebrauchsgegenstände aller Art zu erwähnen.

Die erfindungsgemässen photohärtbaren oder photo- und thermohärtbaren Zusammensetzungen eignen sich besonders zur Herstellung von Schutzschichten und Reliefabbildungen. Ein weiterer Gegenstand der Erfindung ist eine Variante des erfindungsgemäßen Verfahrens zur Herstellung von beschichteten Materialien oder Reliefabbildungen auf Substraten, bei dem man eine Zusammensetzung aus cyclischem Olefin, Katalysator und gegebenenfalls Lösungsmittel als Schicht auf einem Träger aufbringt, zum Beispiel durch Tauch-, Streich-, Giess-, Walz-, Rakel- oder Schleudergießverfahren, gegebenenfalls das Lösungsmittel entfernt, und die Schicht zur Polymerisation bestrahlt, oder die Schicht durch eine Photomaske bestrahlt und anschließend die nichtbestrahlten Anteile mit einem Lösungsmittel entfernt. Mit diesem Verfahren können Oberflächen von Substraten modifiziert oder geschützt werden, oder es können zum Beispiel gedruckte Schaltungen, Druckplatten oder Druckwalzen hergestellt werden. Bei der Herstellung von gedruckten Schaltungen können die erfindungsgemäßen Zusammensetzungen auch als Lötstopplacke eingesetzt werden. Weitere Anwendungsmöglichkeiten sind die Herstellung von Siebdruckmasken, die Verwendung als strahlungshärtbare Druckfarben für den Offset-, Sieb- und Flexodruck.

Gegenstand der vorliegenden Erfindung ist ferner ein beschichtetes Trägermaterial, dadurch gekennzeichnet, dass auf einem Träger eine Schicht aus (a) einem cyclischen Olefin oder mindestens zwei verschiedenen cyclischen Olefinen und (b) einer katalytisch wirksamen Menge mindestens einer thermostabilen Titan(IV)-, Niob(V)-, Tantal(V)-, Molybdän(VI)- oder Wolfram(VI)-verbindung, in der eine Silylmethylgruppe und mindestens ein Halogen am Metall gebunden ist, aufgebracht ist.

Geeignete Trägermaterialien sind beispielsweise solche aus Glas, Mineralien, Keramiken, Kunststoffen, Holz, Halbmetallen, Metallen, Metalloxiden und Metallnitriden. Die Schichtdicken richten sich im wesentlichen nach der gewünschten Verwendung und können z.B. 0,1 bis 1000 µm, bevorzugt 0,5 bis 500 µm, besonders bevorzugt 1 bis 100 µm betragen. Die beschichteten Materialien zeichnen sich durch eine hohe Haftfestigkeit und gute thermische und mechanische Eigenschaften aus.

Die Herstellung der erfindungsgemässen beschichteten Materialen kann nach bekannten Methoden wie zum Beispiel Streichen, Rakeln, Giessverfahren wie Vorhanggiessen oder Schleudergiessen erfolgen.

Bei Beschichtungen werden oft besonders gute Resultate erzielt, wenn man zur Photometathese-Polymerisation Cycloolefine verwendet, die zusätzlich eine bis drei und bevorzugt eine weitere Doppelbindung enthalten und die im Rahmen der Erfindung polycyclische kondensierte Ringsysteme darstellen.

Die folgenden Beispiele erläutern die Erfindung weiter.

A) Herstellung von Katalysatoren

Beispiel A1: Herstellung von $[(H_3C)_2CHO]_2TiCl[CH_2\text{-}Si(CH_3)_3]$.

Die Herstellung erfolgt in situ durch die Umsetzung äquimolarer Mengen $Cl_2Ti[OCO(CH_3)_2]_2$ und $LiCH_2Si(CH_3)_3$ in Diethylether.

Beispiel A2: Herstellung von $Ta[CH_2Si(CH_3)_3]Cl_4$.

Die Titelverbindung wird nach der Vorschrift Moorehouse, S., Wilkinson, G., J. Chem. Soc.; Dalton Trans., 2187-2190 (1974) hergestellt.

Beispiel A3: Herstellung von $W(=N\text{-}C_6H_5)[OC(CH_3)_3]_2[CH_2Si(CH_3)_3]Cl$.

2,0 g (3,0 mmol) $[(C_2H_5)_4]N[W(=N\text{-}C_6H_5)(OC(CH_3)_3)Cl_3]$ in 50 ml Methylenchlorid werden auf -78 °C gekühlt und dann wird eine Lösung von 0,36 g (1,5 mmol) $Zn[CH_2Si(CH_3)_3]_2$ und 0,21 g (1,5 mmol) $ZnCl_2$ über einen Zeitraum von 2 Stunden zugetropft. Man lässt auf Raumtemperatur erwärmen und rührt weitere 2 h. Das Lösungsmittel wird im Vakuum abgezogen und der Rückstand mit Hexan extrahiert (2 x 50 ml) und durch Kühlen der eingeengten Hexanlösung auf -30 °C das Produkt auskristallisiert. Man erhält 1,01 g (62%) der Titelverbindung.

B) Herstellung von Polymeren

Beispiel 1 bis 3: Polymerisation von Norbornen.

In einem Schlenkgefäss wird der Katalysator in 5 ml Toluol vorgelegt. Dann wird Norbornen in Toluol zugegeben und das Gefäss verschlossen. Die Mischung wird unter Rühren bestrahlt. Nach etwa 15 Sekunden wird ein Viskositätsanstieg beobachtet. Nach 5 Minuten wird die Reaktion durch Zugabe eines Tropfens Benzaldehyd abgebrochen und das Reaktionsgemisch in 100 ml Ethanol gegossen. Das ausgefallene Polymer wird abfiltriert, mit Ethanol gewaschen und dann im Vakuum getrocknet. Das Polymer kann durch Gelpermeationschromatographie [GPC; Lösungsmittel Tetrahydrofuran, die Zahlen-($M_n$) und Gewichtsmittelwerte ($M_w$) des Molekulargewichts werden relativ zu Polystyrol-Eichstandards bestimmt] und $^1$H-NMR (Bruker 300 MHz; Lösungsmittel $CDCl_3$) charakterisien werden.

Ein identisches Experiment ohne Belichtung bei 45 °C ergibt keinen Viskositätsanstieg und nach Zugabe von Ethanol fällt kein Polymer aus.

Als Katalysatoren werden eingesetzt:

$$A = [(H_3C)_2CHO]_2TiCl[CH_2\text{-}Si(CH_3)_3]$$

$$B = Ta[CH_2Si(CH_3)_3]Cl_4$$

$C = W(=N\text{-}C_6H_5)[OC(CH_3)_3]_2[CH_2Si(CH_3)_3]Cl$

Als Monomer wird Verbindung (1) eingesetzt.

Als Belichtungsquelle wird verwendet:

200 W Quecksilberdampf-Mitteldruck-UV-Lampe (Osram HBO 200 W/2, Hersteller Spindler & Hoyer, Göttingen).

Die Ergebnisse sind in Tabelle 1 angegeben:

Tabelle 1:

| Beispiel | Norbornen | Katalysator | Ausbeute | $M_n$ | $M_n/M_w$ |
|---|---|---|---|---|---|
| 1 | 500 mg | 10 mg A | 28% | 15 k | 1,5 |
| 2 | 500 mg | 10 mg B | 78% | 32 k | 1,6 |
| 3 | 500 mg | 10 mg C | 90% | 60 k | 2 |

**Patentansprüche**

**1.** Verfahren zur photokatalytischen Polymerisation eines cyclischen Olefins oder mindestens zwei verschiedener cyclischer Olefine in Gegenwart einer Metallverbindung als Katalysator, dadurch gekennzeichnet, dass man eine photochemische Ringöffnungs-Metathese-Polymerisation in Gegenwart einer katalytischen Menge mindestens einer thermostabilen Titan(IV)-, Niob(V)-, Tantal(V)-, Molybdän(VI)- oder Wolfram(VI)verbindung durchführt, in der eine Silylmethylgruppe und mindestens ein Halogen am Metall gebunden sind.

**2.** Verfahren gemäss Anspruch 1, dadurch gekennzeichnet, dass es sich bei den cyclischen Olefinen um monocyclische Ringe oder polycyclische, überbrückte oder kondensierte Ringsysteme mit 2 bis 4 Ringen handelt, die unsubstituiert oder substituiert sind und gegebenenfalls ein oder mehrere Heteroatome aus der Gruppe O, S, N und Si in einem oder mehreren Ringen und gegebenenfalls kondensierte aromatische oder heteroaromatische Ringe enthalten.

**3.** Verfahren gemäss Anspruch 2, dadurch gekennzeichnet, dass die cyclischen Ringe 3 bis 16 Ringglieder enthalten.

**4.** Verfahren gemäss Anspruch 3, dadurch gekennzeichnet, dass die cyclischen Ringe 3 bis 12 Ringglieder enthalten.

**5.** Verfahren gemäss Anspruch 2, dadurch gekennzeichnet, dass die cyclischen Olefine weitere nicht-aromatische Doppelbindungen enthalten.

**6.** Verfahren gemäss Anspruch 1, dadurch gekennzeichnet, dass die Cycloolefine der Formel I

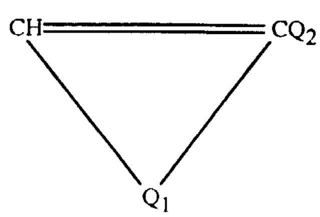

(I)

entsprechen, worin

$Q_1$ ein Rest mit mindestens einem Kohlenstoffatom ist, der zusammen mit der $-CH=CQ_2$-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, $-NO_2$, $R_1R_2R_3Si\text{-}(O)_u\text{-}$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$-Alkyl, $C_1$-$C_{20}$-Hydroxyalkyl $C_1$-$C_{20}$-Halogenalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_4$-X-

substituiert ist; oder bei dem zwei benachbarte C-Atome mit -CO-O-CO- oder -CO-$NR_5$-CO- substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, -$NO_2$, $R_6R_7R_8Si-(O)_u$-, -COOM, -$SO_3M$, -$PO_3M$, -COO$(M_1)_{1/2}$, -$SO_3(M_1)_{1/2}$, -$PO_3(M_1)_{1/2}$, $C_1$-$C_{20}$-Alkyl, $C_1$-$C_{20}$-Halogenalkyl, $C_1$-$C_{20}$-Hydroxyalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_{13}$-$X_1$- substituiert ist;

X und $X_1$ unabhängig voneinander für -O-, -S-, -CO-, -SO-, -$SO_2$-, -O-C(O)-, -C(O)-O-, -C(O)-$NR_5$-, -$NR_{10}$-C(O)-, -$SO_2$-O- oder -O-$SO_2$- stehen;

$R_1$, $R_2$ und $R_3$ unabhängig voneinander $C_1$-$C_{12}$-Alkyl, $C_1$-$C_{12}$-Perfluoralkyl, Phenyl oder Benzyl bedeuten;

$R_4$ und $R_{13}$ unabhängig $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl, $C_7$-$C_{16}$-Aralkyl bedeuten;

$R_5$ und $R_{10}$ unabhängig voneinander Wasserstoff, $C_1$-$C_{12}$-Alkyl, Phenyl oder Benzyl bedeuten, wobei die Alkylgruppen ihrerseits unsubstituiert oder mit $C_1$-$C_{12}$-Alkoxy oder $C_3$-$C_8$-Cycloalkyl substituiert sind;

$R_6$, $R_7$ und $R_8$ unabhängig voneinander $C_1$-$C_{12}$-Alkyl, $C_1$-$C_{12}$-Perfluoralkyl, Phenyl oder Benzyl bedeuten;

M für ein Alkalimetall und $M_1$ für ein Erdalkalimetall stehen; und

u für 0 oder 1 steht;

wobei der mit $Q_1$ gebildete alicyclische Ring gegebenenfalls weitere nicht-aromatische Doppelbindungen enthält;

$Q_2$ Wasserstoff, $C_1$-$C_{20}$-Alkyl, $C_1$-$C_{20}$-Halogenalkyl, $C_1$-$C_{12}$-Alkoxy, Halogen, -CN, $R_{11}$-$X_2$- darstellt;

$R_{11}$ $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl oder $C_7$-$C_{16}$-Aralkyl bedeutet;

$X_2$ -C(O)-O- oder -C(O)-$NR_{12}$- ist;

$R_{12}$ Wasserstoff, $C_1$-$C_{12}$-Alkyl, Phenyl oder Benzyl darstellt;

wobei die vorgenannten Cycloalkyl-, Heterocycloalkyl-, Aryl-, Heteroaryl-, Aralkyl- und Heteroaralkylgruppen unsubstituiert oder mit $C_1$-$C_{12}$-Alkyl, $C_1$-$C_{12}$-Alkoxy, -$NO_2$, -CN oder Halogen substituiert sind, und wobei die Heteroatome der vorgenannten Heterocycloalkyl-, Heteroaryl- und Heteroaralkylgruppen aus der Gruppe -O-, -S-, -$NR_9$- und -N= ausgewählt sind; und

$R_9$ Wasserstoff, $C_1$-$C_{12}$-Alkyl, Phenyl oder Benzyl darstellt.

**7.** Verfahren gemäss Anspruch 6, dadurch gekennzeichnet, dass der alicyclische Ring, den $Q_1$ zusammen mit der -CH=$CQ_2$-Gruppe bildet, 3 bis 16 Ringatome aufweist, und wobei es sich um ein monocyclisches, bicyclisches, tricyclisches oder tetracyclisches Ringsystem handelt.

**8.** Verfahren gemäss Anspruch 6, dadurch gekennzeichnet, dass $Q_2$ in Formel I für Wasserstoff steht.

**9.** Verfahren gemäss Anspruch 6, dadurch gekennzeichnet, dass in den Verbindungen der Formel I

$Q_1$ ein Rest mit mindestens einem Kohlenstoffatom ist, der zusammen mit der -CH=$CQ_2$-Gruppe einen 3- bis 20-gliedrigen alicyclischen Ring bildet, welcher gegebenenfalls ein oder mehrere Heteroatome ausgewählt aus der Gruppe Silicium, Sauerstoff, Stickstoff und Schwefel enthält; und der unsubstituiert oder mit Halogen, =O, -CN, -$NO_2$, $R_1R_2R_3Si-(O)_u$-, -COOM, -$SO_3M$, -$PO_3M$, -COO$(M_1)_{1/2}$, -$SO_3(M_1)_{1/2}$, -$PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_7$-$C_{12}$-Aralkyl, $C_3$-$C_6$-Heterocycloalkyl, $C_3$-$C_{12}$-Heteroaryl, $C_4$-$C_{12}$-Heteroaaalkyl oder $R_4$-X- substituiert ist; oder bei dem zwei benachbarte C-Atome in diesem Rest $Q_1$ mit -CO-O-CO- oder -CO-$NR_5$-CO- substituiert sind; oder bei dem gegebenenfalls an benachbarten Kohlenstoffatomen ein alicyclischer, aromatischer oder heteroaromatischer Ring ankondensiert ist, welcher unsubstituiert oder mit Halogen, -CN, -$NO_2$, $R_6R_7R_8Si$-, -COOM, -$SO_3M$, -$PO_3M$, -COO$(M_1)_{1/2}$, -$SO_3(M_1)_{1/2}$, -$PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_1$-$C_{12}$-Aralkyl, $C_3$-$C_6$-Heterocycloalkyl, $C_3$-$C_{12}$-Heteroaryl, $C_4$-$C_{12}$-Heteroaralkyl oder $R_{13}$-$X_1$- substituiert ist;

X und $X_1$ unabhängig voneinander für -O-, -S-, -CO-, -SO-, -$SO_2$-, -O-C(O)-, -C(O)-O-, -C(O)-$NR_5$-,

-$NR_{10}$-C(O)-, -$SO_2$-O- oder -O-$SO_2$- stehen;

$R_1$, $R_2$ und $R_3$ unabhängig voneinander $C_1$-$C_6$-Alkyl, $C_1$-$C_6$-Perfluoralkyl, Phenyl oder Benzyl bedeuten;

M für ein Alkalimetall und $M_1$ für ein Erdalkalimetall stehen;

$R_4$ und $R_{13}$ unabhängig voneinander $C_1$-$C_{12}$-Alkyl, $C_1$-$C_{12}$-Halogenalkyl, $C_1$-$C_{12}$-Hydroxyalkyl, $C_3$-$C_8$-Cycloalkyl, $C_6$-$C_{12}$-Aryl, $C_7$-$C_{12}$-Aralkyl bedeuten;

$R_5$ und $R_{10}$ unabhängig voneinander Wasserstoff, $C_1$-$C_6$-Alkyl, Phenyl oder Benzyl bedeutet, wobei die Alkylgruppen ihrerseits unsubstituiert oder mit $C_1$-$C_6$-Alkoxy oder $C_3$-$C_6$-Cycloalkyl substituiert sind;

$R_6$, $R_7$ und $R_8$ unabhängig voneinander $C_1$-$C_6$-Alkyl, $C_1$-$C_6$-Perfluoralkyl, Phenyl oder Benzyl darstellen;

u für 0 oder 1 steht;

wobei der mit $Q_1$ gebildete alicyclische Ring gegebenenfalls weitere nichtaromatische Doppelbindungen enthält;

$Q_2$ Wasserstoff, $C_1$-$C_{12}$-Alkyl, $C_1$-$C_{12}$-Halogenalkyl, $C_1$-$C_6$-Alkoxy, Halogen, -CN, $R_{11}$-$X_2$- bedeutet;

$R_{11}$ $C_1$-$C_{12}$-Alkyl, $C_1$-$C_{12}$-Halogenalkyl, $C_1$-$C_{12}$-Hydroxyalkyl, $C_3$-$C_6$-Cycloalkyl, $C_6$-$C_{12}$-Aryl oder $C_7$-$C_{12}$-Aralkyl darstellt;

$X_2$ -C(O)-O- oder -C(O)-$NR_{12}$- ist; und

$R_{12}$ Wasserstoff, $C_1$-$C_6$-Alkyl, Phenyl oder Benzyl bedeutet;

wobei die Cycloalkyl-, Heterocycloalkyl-, Aryl-, Heteroaryl-, Aralkyl- und Heteroaralkylgruppen unsubstituiert oder mit $C_1$-$C_6$-Alkyl, $C_1$-$C_6$-Alkoxy, -$NO_2$, -CN oder Halogen substituiert sind, und wobei die Heteroatome der Heterocycloalkyl-, Heteroaryl- und Heteroaralkylgruppen aus der Gruppe -O-, -S-, -$NR_9$- und -N= ausgewählt sind; und

$R_9$ Wasserstoff, $C_1$-$C_6$-Alkyl, Phenyl oder Benzyl bedeutet.

**10.** Verfahren gemäss Anspruch 6, dadurch gekennzeichnet, dass in den Verbindungen der Formel I

$Q_1$ ein Rest mit mindestens einem Kohlenstoffatom ist, der zusammen mit der -CH=$CQ_2$-Gruppe einen 3- bis 10-gliedrigen alicyclischen Ring bildet, der gegebenenfalls ein Heteroatom ausgewählt aus der Gruppe Silicium, Sauerstoff, Stickstoff und Schwefel enthält, und der unsubstituiert oder mit Halogen, -CN, -$NO_2$, $R_1R_2R_3$Si-, -COOM, -$SO_3$M, -$PO_3$M, -COO$(M_1)_{1/2}$, -$SO_3(M_1)_{1/2}$, -$PO_3(M_1)_{1/2}$, $C_1$-$C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_4$-X- substituiert ist; oder bei dem an benachbarten Kohlenstoffatomen gegebenenfalls ein alicyclischer, aromatischer oder heteroaromatischer Ring ankondensiert ist, welcher unsubstituiert oder durch Halogen, -CN, -$NO_2$, $R_6R_7R_8$Si-, -COOM, -$SO_3$M, -$PO_3$M, -COO$(M_1)_{1/2}$, -$SO_3(M_1)_{1/2}$, -$PO_3(M_1)_{1/2}$, $C_1C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_{13}$-$X_1$- substituiert ist;

$R_1$, $R_2$ und $R_3$ unabhängig voneinander $C_1$-$C_4$-Alkyl, $C_1$-$C_4$-Perfluoralkyl, Phenyl oder Benzyl bedeuten;

M für ein Alkalimetall und $M_1$ für ein Erdalkalimetall stehen;

$R_4$ und $R_{13}$ unabhängig voneinander $C_1$-$C_6$-Alkyl, $C_1$-$C_6$-Halogenalkyl, $C_1$-$C_6$-Hydroxyalkyl oder $C_3$-$C_6$-Cycloalkyl bedeuten;

X und $X_1$ unabhängig voneinander für -O-, -S-, -CO-, -SO- oder -$SO_2$- stehen;

$R_6$, $R_7$ und $R_8$ unabhängig voneinander $C_1$-$C_4$-Alkyl, $C_1$-$C_4$-Perfluoralkyl, Phenyl oder Benzyl darstellen;

und $Q_2$ Wasserstoff bedeutet.

**11.** Verfahren gemäss Anspruch 1, dadurch gekennzeichnet, dass es sich bei den cyclischen Olefinen um Norbornen oder Norbornenderivate handelt.

**12.** Verfahren gemäss Anspruch 11, dadurch gekennzeichnet, dass es sich bei den Norbornenderivaten um solche der Formel II

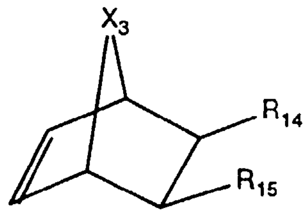

(II),

worin

| | |
|---|---|
| $X_3$ | $-CHR_{16}-$, Sauerstoff oder Schwefel; |
| $R_{14}$ und $R_{15}$ | unabhängig voneinander Wasserstoff, -CN, Trifluormethyl, $(CH_3)_3Si-O-$, $(CH_3)_3Si-$ oder $-COOR_{17}$; und |
| $R_{16}$ und $R_{17}$ | unabhängig voneinander Wasserstoff, $C_1$-$C_{12}$-Alkyl, Phenyl oder Benzyl bedeuten; |

oder
um solche der Formel III

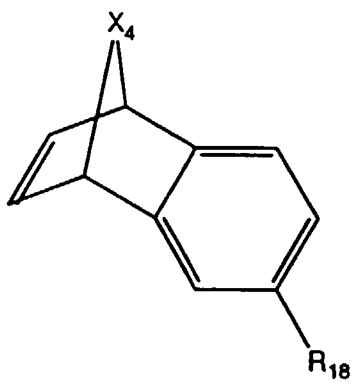

(III),

worin

| | |
|---|---|
| $X_4$ | $-CHR_{19}-$, Sauerstoff oder Schwefel; |
| $R_{19}$ | Wasserstoff, $C_1$-$C_{12}$-Alkyl, Phenyl oder Benzyl; und |
| $R_{18}$ | Wasserstoff, $C_1$-$C_6$-Alkyl oder Halogen bedeuten; |

oder
um solche der Formel IV

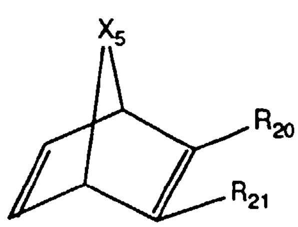

(IV),

worin

| | |
|---|---|
| $X_5$ | $-CHR_{22}-$, Sauerstoff oder Schwefel; |
| $R_{22}$ | Wasserstoff, $C_1$-$C_{12}$-Alkyl, Phenyl oder Benzyl; |
| $R_{20}$ und $R_{21}$ | unabhängig voneinander Wasserstoff, CN, Trifluormethyl, $(CH_3)_3Si-O-$, $(CH_3)_3Si-$ oder $-COOR_{23}$; und |

$R_{23}$ Wasserstoff, $C_1$-$C_{12}$-Alkyl, Phenyl oder Benzyl bedeuten;

oder
um solche der Formel V handelt,

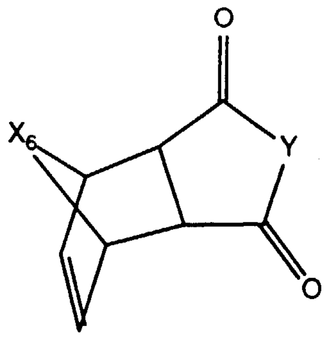

(V),

worin

$X_6$ -$CHR_{24}$-, Sauerstoff oder Schwefel;
$R_{24}$ Wasserstoff, $C_1$-$C_{12}$-Alkyl, Phenyl oder Benzyl;
Y Sauerstoff oder $>N-R_{25}$ ; und
$R_{25}$ Wasserstoff, Methyl, Ethyl oder Phenyl bedeuten.

**13.** Verfahren gemäss Anspruch 1, dadurch gekennzeichnet, dass es sich bei dem an die Metallatome gebundenen Halogen um F, Cl, Br oder handelt.

**14.** Verfahren gemäss Anspruch 1, dadurch gekennzeichnet, dass die Silylmethylgruppe der Formel VII entspricht,

$$-CH_2-SiR_{29}R_{30}R_{31} \quad \text{(VII)},$$

worin

$R_{29}$, $R_{30}$ und $R_{31}$ unabhängig voneinander $C_1$-$C_{18}$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten.

**15.** Verfahren gemäss Anspruch 14, dadurch gekennzeichnet, dass in der Gruppe der Formel VII $R_{29}$ bis $R_{31}$ $C_1$-$C_4$-Alkyl, Phenyl oder Benzyl bedeuten.

**16.** Verfahren gemäss Anspruch 14, dadurch gekennzeichnet, dass die Gruppe der Formel VII aus $-CH_2-Si(CH_3)_3$, $-CH_2-Si(C_2H_5)_3$, $-CH_2-Si(n-C_3H_7)_3$, $-CH_2-Si(CH_3)_2(C_2H_5)$, $-CH_2-Si(CH_3)_2[C(CH_3)_2CH(CH_3)_2]$, $-CH_2-Si(CH_3)_2(n-C_4H_9)$, $-CH_2-Si(CH_3)_2(t-C_4H_9)$, $-CH_2-Si(CH_3)_2(n-C_{18}H_{37})$, $-CH_2-Si(C_6H_5)_3$, $-CH_2-Si(CH_2-C_6H_5)_3$, $-CH_2-Si(C_6H_5)(CH_3)_2$ $-CH_2-Si(n-C_4H_9)_3$, $-CH_2-Si(CH_3)_2(n-C_{12}H_{25})$ und $-CH_2-Si(CH_3-C_6H_5)(CH_3)_2$ besteht.

**17.** Verfahren gemäss Anspruch 14, dadurch gekennzeichnet, dass die Gruppe der Formel VII $-CH_2-Si(CH_3)_3$ darstellt.

**18.** Verfahren gemäss Anspruch 1, dadurch gekennzeichnet, dass die übrigen Valenzen der Ti(IV), Nb(V)-, Ta(V)-, Mo (VI)- und W(VI)-Atome mit gleichen oder verschiedenen neutralen Liganden aus der Gruppe bestehend aus =O, $=N-R_{33}$, sekundären Aminen mit 2 bis 18 C-Atomen, $R_{32}O$-, $R_{32}S$-, Halogen, gegebenenfalls substituiertem Cyclopentadienyl, überbrücktem Biscyclopentadienyl, tridentaten monoanionischen Liganden und Neutralliganden abgesättigt sind, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Phenyl, oder unsubstituiertes oder mit $C_1$-$C_6$-Alkyl, $C_1$-$C_6$-

Alkoxy, $C_1$-$C_6$-Alkoxymethyl, $C_1$-$C_6$-Alkoxyethyl oder Halogen substituiertes Benzyl oder Phenylethyl darstellen; und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl, oder Halogen substituiertes Phenyl, oder unsubstituiertes oder mit $C_1$-$C_6$-Alkyl, $C_1$-$C_6$-Alkoxy, $C_1$-$C_6$-Alkoxymethyl-, $C_1$-$C_6$-Alkoxyethyl- oder Halogen substituiertes Benzyl oder Phenylethyl bedeutet, mit der Massgabe, dass im Fall der Titanverbindungen der Ligand nicht =O oder =N-$R_{33}$ ist.

**19.** Verfahren gemäss Anspruch 1, dadurch gekennzeichnet, dass die Metallverbindungen den Formeln VIII, VIIIa und VIIIb entsprechen

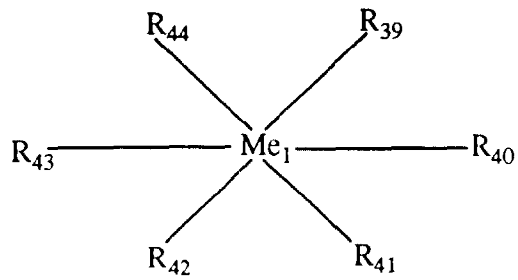

(VIII),

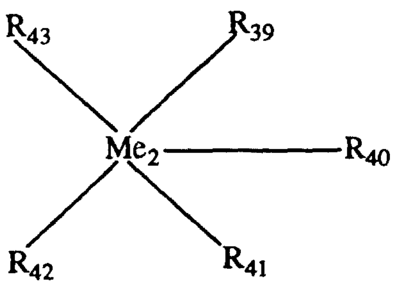

(VIIIa),

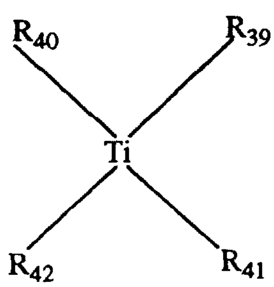

(VIIIb),

worin

$Me_1$ für Mo(VI) oder W(VI) steht;
$Me_2$ für Nb(V) oder Ta(V) steht;

einer der Reste $R_{39}$ bis $R_{44}$ einen Rest -$CH_2$-$SiR_{29}R_{30}R_{31}$ der Formel VII bedeutet; wenigstens einer der Reste $R_{39}$ bis $R_{44}$ F, Cl oder Br darstellt;

$R_{29}$, $R_{30}$ und $R_{31}$ unabhängig voneinander $C_1$-$C_6$-Alkyl, $C_5$- oder $C_6$-Cycloalkyl, oder unsubstituiertes oder

mit $C_1$-$C_6$-Alkyl oder $C_1$-$C_6$-Alkoxy substituiertes Phenyl oder Benzyl bedeuten;

in Formel VIII zwei oder jeweils zwei und in Formel VIIIa zwei der übrigen Reste von $R_{39}$ bis $R_{44}$ je zusammen =0 oder =N-$R_{33}$ bedeuten, und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-A1koxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellt, und die übrigen Reste $R_{39}$ bis $R_{43}$ Sekundäramino mit 2 bis 18 C-Atomen, $R_{32}$O- oder $R_{32}$S-, Halogen, unsubstituiertes oder substituiertes Cyclopentadienyl oder überbrücktes Biscylopentadienyl oder einen Neutralliganden bedeuten, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-A1koxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen; oder

in den Formeln VIII, VIIIa und VIIIb die übrigen Reste von $R_{39}$ bis $R_{44}$ unabhängig voneinander Sekundäramino mit 2 bis 18 C-Atomen, $R_{32}$O- oder $R_{32}$S-, Halogen, unsubstituiertes oder substituiertes Cyclopentadienyl oder überbrücktes Biscylopentadienyl oder einen Neutralliganden bedeuten, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di ($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen.

**20.** Verfahren gemäss Anspruch 1, dadurch gekennzeichnet, dass man Titan-, Niob-, Tantal-, Molybdän- oder Wolframverbindungen der Formeln VIII, VIIIa und VIIIb verwendet, worin
$R_{39}$ einen Rest der Formel VII $-CH_2-Si(R_{29}R_{30}R_{31})_3$ und $R_{40}$ F, Cl oder Br darstellen; und

(a) in Formel VIII $R_{41}$ und $R_{42}$ sowie $R_{43}$ und $R_{44}$ jeweils zusammen den Rest =N-$R_{33}$ bedeuten, oder $R_{41}$ und $R_{42}$ zusammen den Rest =N-$R_{33}$ bedeuten, und $R_{43}$ und $R_{44}$ unabhängig voneinander unsubstituiertes oder substituiertes Cyclopentadienyl, $R_{32}$-O- oder Halogen darstellen, oder
b) in Formel VIIIa $R_{41}$ und $R_{42}$ zusammen den Rest =N-$R_{33}$ bedeuten, und $R_{43}$ unsubstituiertes oder substituiertes Cyclopentadienyl, $R_{32}$-O- oder Halogen bedeuten, oder in Formel VIIIa $R_{41}$, $R_{42}$ und $R_{43}$ unabhängig voneinander unsubstituiertes oder substituiertes Cyclopentadienyl, $R_{32}$-O- oder Halogen bedeuten, oder
c) in Formel VIIIb $R_{41}$ und $R_{42}$ unabhängig voneinander unsubstituiertes oder substituiertes Cyclopentadienyl, $R_{32}$-O- oder Halogen bedeuten,

wobei $R_{29}$, $R_{30}$, $R_{31}$, $R_{32}$ und $R_{33}$ die in Anspruch 19 angegebenen Bedeutungen haben.

**21.** Verfahren gemäss Anspruch 1, dadurch gekennzeichnet, dass man Metallverbindungen der Formeln IX, IXa, IXb, IXc oder IXd verwendet,

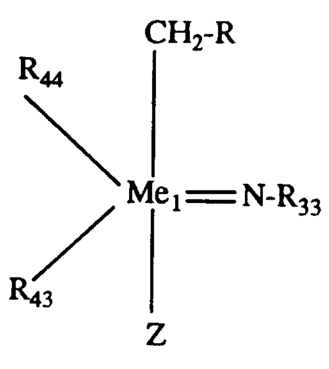

(IX),

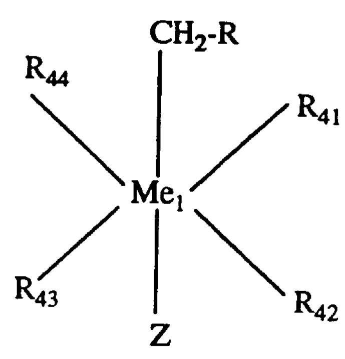

(IXa),

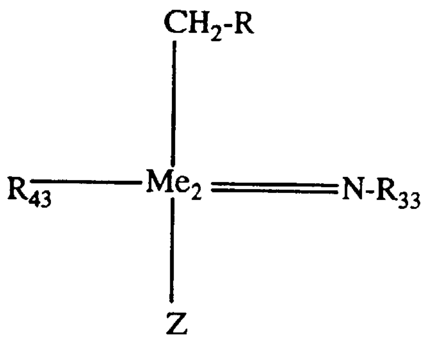 (IXb), 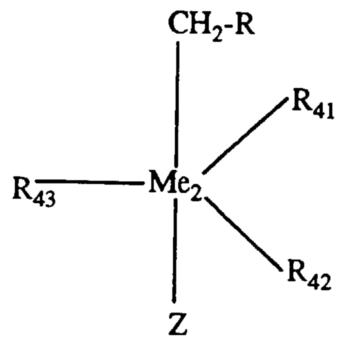 (IXc),

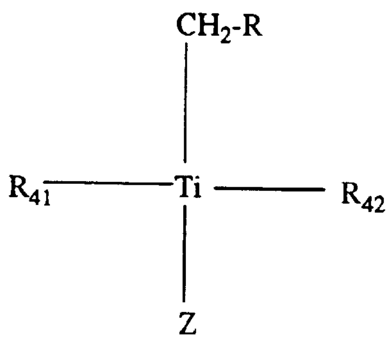 (IXd),

worin

Me$_1$ für Mo(VI) oder W(VI) steht;
Me$_2$ für Nb(V) oder Ta(V) steht;
R -Si($C_1$-$C_4$-Alkyl)$_3$ darstellt;
Z für Cl oder Br steht;
$R_{33}$ Phenyl oder mit 1 bis 3 $C_1$-$C_4$-Alkyl oder $C_1$-$C_4$-Alkoxy substituiertes Phenyl bedeutet,

(a) $R_{43}$ und $R_{44}$ in Formel IX zusammen die Gruppe =$NR_{33}$ oder einzeln unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellen;
(b) $R_{41}$, $R_{42}$ und $R_{43}$ und $R_{44}$ in Formel IXa unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl bedeuten;
(c) $R_{43}$ in Formel IXb F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellt;
(d) $R_{41}$, $R_{42}$ und $R_{43}$ in Formel IXc unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellen; und
(e) $R_{41}$ und $R_{42}$ in Formel IXd unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellen.

**22.** Verfahren gemäss Anspruch 1, dadurch gekennzeichnet, dass man Titan-, Niob-, Tantal-, Molybdän- oder Wolframverbindungen der Formeln X, Xa, Xb, Xc und Xd verwendet,

$$(R_{33}\text{-N=})_2Me_1X_a[CH_2Si(CH_3)_3] \quad (X),$$

$$(R_{33}\text{-N=})R_{41}Me_1X_a(OR_{32})CH_2Si(CH_3)_3 \quad (Xa),$$

$$R_{42}R_{43}Me_2X_a(OR_{32})CH_2Si(CH_3)_3 \quad (Xc),$$

$$R_{33}\text{-N=}Me_2X_a(OR_{32})CH_2Si(CH_3)_3 \quad (Xc),$$

$$R_{41}\text{-}TiX_a(OR_{32})CH_2Si(CH_3)_3 \quad (Xd),$$

worin

| | |
|---|---|
| $Me_1$ | für Mo(VI) oder W(VI) steht; |
| $Me_2$ | für Nb(V) oder Ta(V) steht; |
| $X_a$ | für F oder Cl steht; |
| $R_{33}$ | Phenyl oder mit 1 oder 2 $C_1$-$C_4$-Alkylgruppen substituiertes Phenyl bedeutet; |
| $R_{32}$ | verzweigtes gegebenenfalls teilweise oder vollständig mit Fluor substituiertes $C_3$-oder $C_4$-Alkyl oder Phenyloxy oder mit 1 bis 3 Methyl- oder Ethylgruppen substituiertes Phenyloxy darstellt; |
| $R_{42}$ und $R_{43}$ | unabhängig voneinander unsubstituiertes oder mit 1 bis 5 Methylgruppen substituiertes Cyclopentadienyl, $X_a$ oder $R_{32}O$- bedeuten; und |
| $R_{41}$ | unsubstituiertes oder mit 1 bis 5 Methylgruppen substituiertes Cyclopentadienyl, $X_a$ oder $R_{32}O$- darstellt. |

**23.** Verfahren gemäss Anspruch 1, dadurch gekennzeichnet, dass man Titan(IV)-, Niob(V)-, Tantal(V)-, Molybdän(VI - oder Wolfram(VI)verbindungen der Formeln $Ti[CH_2Si(CH_3)_3]Cl_3$, Me(=N-2,6-dimethyl$C_6H_3$)(2,6-Dimethyl-$C_6H_5O$) $[CH_2Si(CH_3)_3]Cl$, $Ti[CH_2Si(CH_3)_3]Br_3$, Mo(=N-2,6-diisopropyl$C_6H_3$)$[(OCH_2C(CH_3)_3]_2[CH_2\text{-}Si(CH_3)_3]Cl$, $Cp_2Ti[CH_2Si(CH_3)_3]Cl$, Me(=N-2,6-diisopropyl$C_6H_3$)$[(CH_3)_2CHO][(CH_2Si(CH_3)_3]Cl$, $(CH_3)_2Ti[CH_2Si(CH_3)_3]Cl$, $Cp_2Me[(CH_2Si(CH_3)_3]Cl_2$, $Cp_2Me[OC(CH_3)_3][(CH_2Si(CH_3)_3]Cl$, $Cp_2Ti[CH_2Si(CH_3)_3]Br$, $Cp_2Ti[CH_2Si(CH_3)_3]I$, Mo (=N-$C_6H_5$)$_2[CH_2\text{-}Si(CH_3)_3]Cl$, $CpTi[CH_2Si(CH_3)_3][CH_3]Cl$, Me(=N-2,6-diisopropyl$C_6H_3$)$[(CH_2Si(CH_3)_3]Cl_2$, CpTi $[CH_2Si(CH_3)_3]Br_2$, $CpMe[OCH(CH_3)_2]_2[(CH_2Si(CH_3)_3]Cl$, $(C_6H_5O)CpTi[CH_2Si(CH_3)_3]Cl$, $[(CH_3)_2CHO]_2Ti[CH_2Si(CH_3)_3]Cl$, Mo(=N-2,6-diisopropyl$C_6H_3$)$_2[CH_2\text{-}Si(CH_3)_3]Cl$, $[(CF_3)_2CHO]_2Ti[CH_2Si(CH_3)_3]Cl$, (2,6-Dimethyl-$C_6H_5O$)$_2Ti[CH_2Si(CH_3)_3]Cl$, $[(CF_3)_2CHO]CpTi[CH_2Si(CH_3)_3]Cl$, (2,6-Dimethyl-$C_6H_5O$)$Ti[CH_2Si(CH_3)_3]_2Br$, $[(CH_3)_2CHO]CpTi[CH_2Si(CH_3)_3]Cl$, Me(=N-$C_6H_5$)$[OCH(CH_3)_2][(CH_2Si(CH_3)_3]Cl$, (2,6-Dimethyl-$C_6H_5O$)CpTi $[CH_2Si(CH_3)_3]Cl$, $CpMe[OC(CH_3)(CF_3)_2]_2[(CH_2Si(CH_3)_3]Cl$, $[(CH_3)_3CO]CpTi[CH_2Si(CH_3)_3]Cl$, W(=N-$C_6H_5$)$[(OC(CH_3)_3][CH_2\text{-}Si(CH_3)_3]Cl_2$, $[(CF_3)_2(CH_3)CO]CpTi[CH_2Si(CH_3)_3]Cl$, (=N-2,6-dimethyl$C_6H_3$)$CpMe[(CH_2Si(CH_3)_3]Cl$, Me(=N-$C_6H_5$)$[OCH(CF_3)_2][(CH_2Si(CH_3)_3]Cl$, $CpMe[OCH(CH_3)_2]_2[(CH_2Si(CH_3)_3]Br$, Me(=N-2,6-dimethyl$C_6H_3$) $((CF_3)_2CHO)[CH_2Si(CH_3)_3]Cl$, $[OCH(CH_3)_2]_2Me[CH_2Si(CH_3)_3]Cl_2$, $(C_6H_5O)_2CpMe[(CH_2Si(CH_3)_3]Cl$, Me(2,6-Dimethylphenyloxy)$(CH_3O)_2[(CH_2Si(CH_3)_3]Cl$, $Cp_2Me$(Methyl)$[(CH_2Si(CH_3)_3]Cl$, $Me[CH_2Si(CH_3)_3][OCH(CH_3)](CF_3O)_2Cl$, (2,6-Diisopropylphenyloxy)$_2Me[CH_2Si(CH_3)_3]Cl_2$, $CpMe[OCH(CF_3)_2]_2[(CH_2Si(CH_3)_3]Cl$, $Cp_2Me[OCH(CH_3)_2][(CH_2Si(CH_3)_3]Cl$, W(=N-$C_6H_5$)$[(OC(CH_3)_3]_2[CH_2\text{-}Si(CH_3)_3]Cl$, $Mo_2[(CH_3\text{-}Si(CH_3)_3)(OCH_2C(CH_3)_3)Cl]_2$, oder (=N-3,5-dimethyl$C_6H_3$)Me[2,6-dimethyl$C_6H_3O$)]$[(CH_2Si(CH_3)_3)]Cl$ verwendet, wobei Cp Cyclopentadienyl und Me Nb(V) oder Ta(V)) bedeutet.

**24.** Verfahren gemäss Anspruch 1, dadurch gekennzeichnet, dass die Titan(IV)-, Niob(V)-, Tantal(V)-, Molybdän(VI)- und Wolfram(VI)-verbindungen in einer Menge von 0,001 bis 20 Mol-% eingesetzt werden, bezogen auf die Menge des Cycloolefins.

**25.** Verfahren zur photokatalytisch induzierten und nachfolgenden thermischen Polymerisation eines cyclischen Olefins oder mindestens zwei verschiedener cyclischer Olefine in Gegenwart einer Metallverbindung als Katalysator, dadurch gekennzeichnet, dass man a) eine photochemische Ringöffnungs-Metathese-Polymerisation durchführt, indem man zunächst die Cycloolefine in Gegenwart einer katalytischen Menge mindestens einer thermostabilen Titan(IV)-, Niob(V)-, Tantal(V)-, Molybdän(VI)- oder Wolfram(VI)- verbindung, in der eine Silylmethylgruppe und

mindestens ein Halogen am Metall gebunden ist, bestrahlt; oder eine katalytische Menge mindestens einer thermostabilen Titan(IV)-, Niob(V)-, Tantal(V)-, Molybdän(VI)- oder Wolfram(VI)-verbindung, in der eine Silylmethylgruppe und mindestens ein Halogen am Metall gebunden ist, gegebenenfalls in einem inerten Lösungsmittel bestrahlt und dann mit mindestens einem Cycloolefin vermischt; und

b) dann die Polymerisation durch Erhitzen und ohne Bestrahlung beendet.

**26.** Zusammensetzung, enthaltend (a) ein cyclisches Olefin oder mindestens zwei verschiedene cyclische Olefine und (b) eine katalytisch wirksame Menge mindestens einer thermostabilen Titan(IV)-, Niob(V)-, Tantal(V)-, Molybdän (VI)- oder Wolfram(VI)-verbindung, in der eine Silylmethylgruppe und mindestens ein Halogen am Metall gebunden sind.

**27.** Beschichtetes Trägermaterial, dadurch gekennzeichnet, dass auf einem Träger eine Schicht aus (a) einem cyclischen Olefin oder mindestens zwei verschiedenen cyclischen Olefinen und (b) einer katalytisch wirksamen Menge mindestens einer thermostabilen Titan(IV)-, Niob(V)-, Tantal(V)-, Molybdän(VI)- oder Wolfram(VI)-verbindung, in der eine Silylmethylgruppe und mindestens ein Halogen am Metall gebunden ist, aufgebracht ist.

**28.** Verfahren zur Herstellung von beschichteten Materialien oder Reliefabbildungen auf Trägern, bei dem man eine Zusammensetzung gemäss Anspruch 26 aufbringt, gegebenenfalls das Lösungsmittel entfernt, und die Schicht zur Polymerisation bestrahlt und gegebenenfalls thermisch nachhärtet, oder die Schicht durch eine Photomaske bestrahlt, gegebenenfalls thermmisch nachhärtet, und anschließend die nichtbestrahlten Anteile mit einem Lösungsmittel entfernt.

## Claims

**1.** Process for the photocatalytic polymerization of a cyclical olefin or at least two different cyclical olefins in the presence of a metal compound as the catalyst, characterized in that a photochemical ring-opening metathesis polymerization is carried out in the presence of a catalytic amount of at least one heat-stable titanium(IV), niobium (V), tantalum(V), molybdenum(VI) or tungsten(VI) compound in which a silylmethyl group and at least one halogen are bonded to the metal.

**2.** Process according to claim 1, characterized in that the cyclical olefins are monocyclical rings or polycyclical, bridged or fused ring systems with 2 to 4 rings, which are unsubstituted or substituted and optionally contain one or more heteroatoms from the group consisting of O, S, N and Si in one or more rings and optionally contain fused, aromatic or heteroaromatic rings.

**3.** Process according to claim 2, characterized in that the cyclical rings contain 3 to 16 ring members.

**4.** Process according to claim 3, characterized in that the cyclical rings contain 3 to 12 ring members.

**5.** Process according to claim 2, characterized in that the cyclical olefins contain further non-aromatic double bonds.

**6.** Process according to claim 1, characterized in that the cycloolefins correspond to the formula I

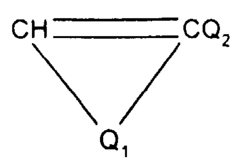

(I)

in which

$Q_1$ is a radical with at least one carbon atom which, together with the $-CH=CQ_2-$ group, forms an at least 3-membered alicyclical ring which optionally contains one or more heteroatoms chosen from the group consisting of silicon, phosphorus, oxygen, nitrogen and sulfur; and which is unsubstituted or substituted by halogen, =O, -CN, $-NO_2$, $R_1R_2R_3Si-(O)_u-$, -COOM, $-SO_3M$,

-$PO_3M$, -$COO(M_1)_{1/2}$, -$SO_3(M_1)_{1/2}$, -$PO_3(M_1)_{1/2}$, $C_1$-$C_{20}$alkyl, $C_1$-$C_{20}$hydroxyalkyl, $C_1$-$C_{20}$haloalkyl, $C_1$-$C_6$cyanoalkyl, $C_3$-$C_8$cycloalkyl, $C_6$-$C_{16}$aryl, $C_7$-$C_{16}$aralkyl, $C_3$-$C_6$heterocycloalkyl, $C_3$-$C_{16}$heteroaryl, $C_4$-$C_{16}$heteroaralkyl or $R_4$-X-; or in which two adjacent C atoms are substituted by -CO-O-CO- or -CO-$NR_5$-CO-; or in which an alicyclical, aromatic or heteroaromatic ring which is unsubstituted or substituted by halogen, -CN, -$NO_2$, $R_6R_7R_8$Si-$(O)_u$-, -COOM, -$SO_3M$, -$PO_3M$, -$COO(M_1)_{1/2}$, -$SO_3(M_1)_{1/2}$, -$PO_3(M_1)_{1/2}$, $C_1$-$C_{20}$alkyl, $C_1$-$C_{20}$haloalkyl, $C_1$-$C_{20}$hydroxyalkyl, $C_1$-$C_6$cyanoalkyl, $C_3$-$C_8$cycloalkyl, $C_6$-$C_{16}$aryl, $C_7$-$C_{16}$aralkyl, $C_3$-$C_6$heterocycloalkyl, $C_3$-$C_{16}$heteroaryl, $C_4$-$C_{16}$heteroaralkyl or $R_{13}$-$X_1$- is optionally fused onto adjacent carbon atoms of the alicyclical ring;

X and $X_1$ independently of one another are -O-, -S-, -CO-, -SO-, -$SO_2$-, -O-C(O)-, -C(O)-O-, -C(O)-$NR_5$-, -$NR_{10}$-C(O)-, -$SO_2$-O- or -O-$SO_2$-;

$R_1$, $R_2$ and $R_3$ independently of one another are $C_1$-$C_{12}$alkyl, $C_1$-$C_{12}$perfluoroalkyl, phenyl or benzyl;

$R_4$ and $R_{13}$ independently are $C_1$-$C_{20}$alkyl, $C_1$-$C_{20}$haloalkyl, $C_1$-$C_{20}$hydroxyalkyl, $C_3$-$C_8$cycloalkyl, $C_6$-$C_{16}$aryl or $C_7$-$C_{16}$aralkyl;

$R_5$ and $R_{10}$ independently of one another are hydrogen, $C_1$-$C_{12}$alkyl, phenyl or benzyl, where the alkyl groups in turn are unsubstituted or substituted by $C_1$-$C_{12}$alkoxy or $C_3$-$C_8$cycloalkyl;

$R_6$, $R_7$ and $R_8$ independently of one another are $C_1$-$C_{12}$alkyl, $C_1$-$C_{12}$perfluoroalkyl, phenyl or benzyl;

M is an alkali metal and $M_1$ is an alkaline earth metal; and

u is 0 or 1 ;

where the alicyclical ring formed with $Q_1$ optionally contains further non-aromatic double bonds;

$Q_2$ is hydrogen, $C_1$-$C_{20}$alkyl, $C_1$-$C_{20}$haloalkyl, $C_1$-$C_{12}$alkoxy, halogen, -CN or $R_{11}$-$X_2$-;

$R_{11}$ is $C_1$-$C_{20}$alkyl, $C_1$-$C_{20}$haloalkyl, $C_1$-$C_{20}$hydroxyalkyl, $C_3$-$C_8$cycloalkyl, $C_6$-$C_{16}$aryl or $C_7$-$C_{16}$aralkyl;

$X_2$ is -C(O)-O- or -C(O)-$NR_{12}$-;

$R_{12}$ is hydrogen, $C_1$-$C_{12}$alkyl, phenyl or benzyl;

where the abovementioned cycloalkyl, heterocycloalkyl, aryl, heteroaryl, aralkyl and heteroaralkyl groups are unsubstituted or substituted by $C_1$-$C_{12}$alkyl, $C_1$-$C_{12}$alkoxy, -$NO_2$, -CN or halogen, and where the heteroatoms of the abovementioned heterocycloalkyl, heteroaryl and heteroaralkyl groups are chosen from the group consisting of -O-, -S-, -$NR_9$- and -N=; and

$R_9$ is hydrogen, $C_1$-$C_{12}$alkyl, phenyl or benzyl.

**7.** Process according to claim 6, characterized in that the alicyclical ring which $Q_1$ forms together with the -CH=$CQ_2$- group has 3 to 16 ring atoms, the ring system being a monocyclical, bicyclical, tricyclical or tetracyclical ring system.

**8.** Process according to claim 6, characterized in that $Q_2$ in formula I is hydrogen.

**9.** Process according to claim 6, characterized in that in the compounds of the formula I

$Q_1$ is a radical with at least one carbon atom which, together with the -CH=$CQ_2$- group, forms a 3- to 20-membered alicyclical ring which optionally contains one or more heteroatoms chosen from the group consisting of silicon, oxygen, nitrogen and sulfur; and which is unsubstituted or substituted by halogen, =O, -CN, -$NO_2$, $R_1R_2R_3$Si-$(O)_u$-, -COOM, -$SO_3M$, -$PO_3M$, -$COO(M_1)_{1/2}$, -$SO_3(M_1)_{1/2}$, -$PO_3(M_1)_{1/2}$, $C_1$-$C_{12}$alkyl, $C_1$-$C_{12}$haloalkyl, $C_1$-$C_{12}$hydroxyalkyl, $C_1$-$C_4$cyanoalkyl, $C_3$-$C_6$cycloalkyl, $C_6$-$C_{12}$aryl, $C_7$-$C_{12}$aralkyl, $C_3$-$C_6$heterocycloalkyl, $C_3$-$C_{12}$heteroaryl, $C_4$-$C_{12}$heteroaralkyl or $R_4$-X-; or in which two adjacent C atoms in this radical $Q_1$ are substituted by -CO-O-CO- or -CO-$NR_5$-CO-; or in which an alicyclical, aromatic or heteroaromatic ring which is unsubstituted or substituted by halogen, -CN, -$NO_2$, $R_6R_7R_8$Si-, -COOM, -$SO_3M$, -$PO_3M$, -$COO(M_1)_{1/2}$, -$SO_3(M_1)_{1/2}$, -$PO_3(M_1)_{1/2}$, $C_1$-$C_{12}$alkyl, $C_1$-$C_{12}$haloalkyl, $C_1$-$C_{12}$hydroxyalkyl, $C_1$-$C_4$cyanoalkyl, $C_3$-$C_6$cycloalkyl, $C_6$-$C_{12}$aryl, $C_7$-$C_{12}$aralkyl, $C_3$-$C_6$heterocycloalkyl, $C_3$-$C_{12}$heteroaryl, $C_4$-$C_{12}$heteroaralkyl or $R_{13}$-$X_1$- is optionally fused onto adjacent carbon atoms;

X and $X_1$ independently of one another are -O-, -S-, -CO-, -SO-, -$SO_2$-, -O-C(O)-, -C(O)-O-, -C(O)-$NR_5$-, -$NR_{10}$-C(O)-, -$SO_2$-O- or -O-$SO_2$-;

$R_1$, $R_2$ and $R_3$ independently of one another are $C_1$-$C_6$alkyl, $C_1$-$C_6$perfluoroalkyl, phenyl or benzyl;

M is an alkali metal and $M_1$ is an alkaline earth metal;

$R_4$ and $R_{13}$ independently of one another are $C_1$-$C_{12}$alkyl, $C_1$-$C_{12}$haloalkyl, $C_1$-$C_{12}$hydroxyalkyl, $C_3$-

| | |
|---|---|
| | $C_8$cycloalkyl, $C_6$-$C_{12}$aryl or $C_7$-$C_{12}$aralkyl; |
| $R_5$ and $R_{10}$ | independently of one another are hydrogen, $C_1$-$C_6$alkyl, phenyl or benzyl, where the alkyl groups in turn are unsubstituted or substituted by $C_1$-$C_6$alkoxy or $C_3$-$C_6$cycloalkyl; |
| $R_6$, $R_7$ and $R_8$ | independently of one another are $C_1$-$C_6$alkyl, $C_1$-$C_6$perfluoroalkyl, phenyl or benzyl; |
| u | is 0 or 1; |

where the alicyclical ring formed with $Q_1$ optionally contains further non-aromatic double bonds;

| | |
|---|---|
| $Q_2$ | is hydrogen, $C_1$-$C_{12}$alkyl, $C_1$-$C_{12}$haloalkyl, $C_1$-$C_6$alkoxy, halogen, -CN or $R_{11}$-$X_2$-; |
| $R_{11}$ | is $C_1$-$C_{12}$alkyl, $C_1$-$C_{12}$haloalkyl, $C_1$-$C_{12}$hydroxyalkyl, $C_3$-$C_6$cycloalkyl, $C_6$-$C_{12}$aryl or $C_7$-$C_{12}$aralkyl; |
| $X_2$ | is -C(O)-O- or -C(O)-$NR_{12}$-; and |
| $R_{12}$ | is hydrogen, $C_1$-$C_6$alkyl, phenyl or benzyl; |

where the cycloalkyl, heterocycloalkyl, aryl, heteroaryl, aralkyl and heteroaralkyl groups are unsubstituted or substituted by $C_1$-$C_6$alkyl, $C_1$-$C_6$alkoxy, $-NO_2$, -CN or halogen, and where the heteroatoms of the heterocycloalkyl, heteroaryl and heteroaralkyl groups are chosen from the group consisting of -O-, -S-, $-NR_9$- and -N=; and

$R_9$ is hydrogen, $C_1$-$C_6$alkyl, phenyl or benzyl.

**10.** Process according to claim 6, characterized in that in the compounds of the formula I

| | |
|---|---|
| $Q_1$ | is a radical with at least one carbon atom which, together with the -CH=$CQ_2$- group, forms a 3- to 10-membered alicyclical ring which optionally contains a heteroatom chosen from the group consisting of silicon, oxygen, nitrogen and sulfur and is unsubstituted or substituted by halogen, -CN, $-NO_2$, $R_1R_2R_3Si$-, -COOM, $-SO_3M$, $-PO_3M$, $-COO(M_1)_{1/2}$, $-SO_3(M_1)_{1/2}$, $-PO_3(M_1)_{1/2}$, $C_1$-$C_6$alkyl, $C_1$-$C_6$haloalkyl, $C_1$-$C_6$hydroxyalkyl, $C_1$-$C_4$cyanoalkyl, $C_3$-$C_6$cycloalkyl, phenyl, benzyl or $R_4$-X-; or in which an alicyclical, aromatic or heteroaromatic ring which is unsubstituted or substituted by halogen, -CN, $-NO_2$, $R_6R_7R_8Si$-, -COOM, $-SO_3M$, $-PO_3M$, $-COO(M_1)_{1/2}$, $-SO_3(M_1)_{1/2}$, $-PO_3(M_1)_{1/2}$, $C_1$-$C_6$alkyl, $C_1$-$C_6$haloalkyl, $C_1$-$C_6$hydroxyalkyl, $C_1$-$C_4$cyanoalkyl, $C_3$-$C_6$cycloalkyl, phenyl, benzyl or $R_{13}$-$X_1$- is optionally fused onto adjacent carbon atoms; |
| $R_1$, $R_2$ and $R_3$ | independently of one another are $C_1$-$C_4$alkyl, $C_1$-$C_4$perfluoroalkyl, phenyl or benzyl; |
| M | is an alkali metal and $M_1$ is an alkaline earth metal; |
| $R_4$ and $R_{13}$ | independently of one another are $C_1$-$C_6$alkyl, $C_1$-$C_6$haloalkyl, $C_1$-$C_6$hydroxyalkyl or $C_3$-$C_6$cycloalkyl; |
| X and $X_1$ | independently of one another are -O-, -S-, -CO-, -SO- or $-SO_2$-; |
| $R_6$, $R_7$ and $R_8$ | independently of one another are $C_1$-$C_4$alkyl, $C_1$-$C_4$perfluoroalkyl, phenyl or benzyl; |

and $Q_2$ is hydrogen.

**11.** Process according to claim 1, characterized in that the cyclical olefins are norbornene or norbornene derivatives.

**12.** Process according to claim 11, characterized in that the norbornene derivatives are those of the formula II

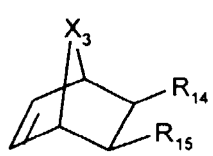

(II),

in which

| | |
|---|---|
| $X_3$ | is $-CHR_{16}$-, oxygen or sulfur; |
| $R_{14}$ and $R_{15}$ | independently of one another are hydrogen, -CN, trifluoromethyl, $(CH_3)_3Si$-O-, $(CH_3)_3Si$- or $-COOR_{17}$; and |
| $R_{16}$ and $R_{17}$ | independently of one another are hydrogen, $C_1$-$C_{12}$-alkyl, phenyl or benzyl; |

or

those of the formula III

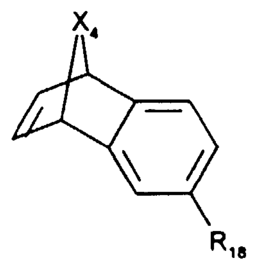

(III),

in which

$X_4$ is $-CHR_{19}-$, oxygen or sulfur;
$R_{19}$ is hydrogen, $C_1$-$C_{12}$alkyl, phenyl or benzyl; and
$R_{18}$ is hydrogen, $C_1$-$C_6$alkyl or halogen;

or

those of the formula IV

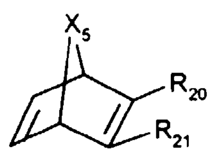

(IV),

in which

$X_5$ is $-CHR_{22}-$, oxygen or sulfur;
$R_{22}$ is hydrogen, $C_1$-$C_{12}$alkyl, phenyl or benzyl;
$R_{20}$ and $R_{21}$ independently of one another are hydrogen, CN, trifluoromethyl, $(CH_3)_3Si-O-$, $(CH_3)_3Si-$ or $-COOR_{23}$; and
$R_{23}$ is hydrogen, $C_1$-$C_{12}$alkyl, phenyl or benzyl;

or

those of the formula V

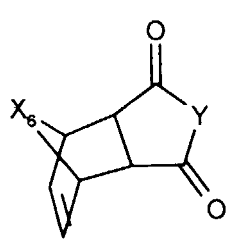

(V),

in which

$X_6$ is $-CHR_{24}-$, oxygen or sulfur;
$R_{24}$ is hydrogen, $C_1$-$C_{12}$alkyl, phenyl or benzyl;

Y is oxygen or $>N-R_{25}$ ; and
$R_{25}$ is hydrogen, methyl, ethyl or phenyl.

**13.** Process according to claim 1, characterized in that the halogen bonded to the metal atoms is F, Cl, Br or I.

**14.** Process according to claim 1, characterized in that the silylmethyl group corresponds to the formula VII

$$-CH_2-SiR_{29}R_{30}R_{31} \qquad (VII)$$

in which

$R_{29}$, $R_{30}$ and $R_{31}$ independently of one another are $C_1$-$C_{18}$alkyl, $C_5$- or $C_6$cycloalkyl, or phenyl or benzyl which are unsubstituted or substituted by $C_1$-$C_6$alkyl or $C_1$-$C_6$alkoxy.

**15.** Process according to claim 14, characterized in that in the group of the formula VII, $R_{29}$ to $R_{31}$ are $C_1$-$C_4$alkyl, phenyl or benzyl.

**16.** Process according to claim 14, characterized in that the group of the formula VII consists of $-CH_2-Si(CH_3)_3$, $-CH_2-Si(C_2H_5)_3$, $-CH_2-Si(n-C_3H_7)_3$, $-CH_2-Si(CH_3)_2(C_2H_5)$, $-CH_2-Si(CH_3)_2[C(CH_3)_2CH(CH_3)_2]$, $-CH_2-Si(CH_3)_2(n-C_4H_9)$, $-CH_2-Si(CH_3)_2(t-C_4H_9)$, $-CH_2-Si(CH_3)_2(n-C_{18}H_{37})$, $-CH_2-Si(C_6H_5)_3$, $-CH_2-Si(CH_2-C_6H_5)_3$, $-CH_2-Si(C_6-H_5)(CH_3)_2$, $-CH_2-Si(n-C_4H_9)_3$, $-CH_2-Si(CH_3)_2$ $(n-C_{12}H_{25})$ and - $CH_2-Si(CH_2-C_6H_5)(CH_3)_2$.

**17.** Process according to claim 14, characterized in that the group of the formula VII is $-CH_2-Si(CH_3)_3$.

**18.** Process according to claim 1, characterized in that the other valencies of the Ti(IV), Nb(V), Ta(V), Mo(VI) and W (VI) atoms are satisfied by identical or different neutral ligands from the group consisting of =O, $=N-R_{33}$, secondary amines having 2 to 18 C atoms, $R_{32}O$-, $R_{32}S$-, halogen, optionally substituted cyclopentadienyl, bridged biscyclopentadienyl, tridentate monoanionic ligands and neutral ligands, in which the $R_{32}$ independently of one another are linear or branched $C_1$-$C_{18}$alkyl which is unsubstituted or substituted by $C_1$-$C_6$alkoxy or halogen, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl or halogen, or benzyl or phenylethyl which is unsubstituted or substituted by $C_1$-$C_6$alkyl, $C_1$-$C_6$alkoxy, $C_1$-$C_6$alkoxymethyl, $C_1$-$C_6$alkoxyethyl or halogen; and $R_{33}$ is linear or branched $C_1$-$C_{18}$alkyl which is unsubstituted or substituted by $C_1$-$C_6$alkoxy, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen, or benzyl or phenylethyl which is unsubstituted or substitued by $C_1$-$C_6$alkyl, $C_1$-$C_6$alkoxy, $C_1$-$C_6$alkoxymethyl, $C_1$-$C_6$alkoxyethyl or halogen, with the proviso that in the case of the titanium compounds, the ligand is not =O or $=N-R_{33}$.

**19.** Process according to claim 1, characterized in that the metal compounds correspond to the formulae VIII, VIIIa and VIIIb

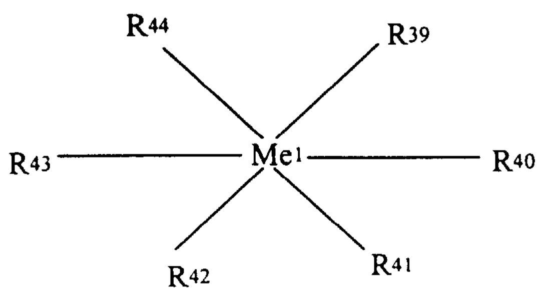

(VIII),

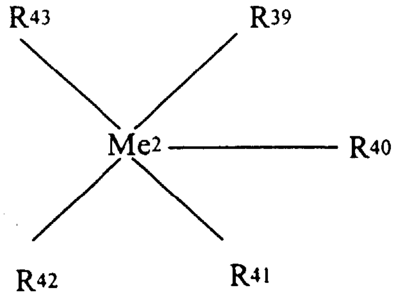

(VIIIa),

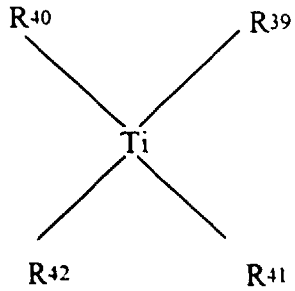

(VIIIb),

in which

$Me_1$ is Mo(VI) or W(VI);
$Me_2$ is Nb(V) or Ta(V);

one of the radicals $R_{39}$ to $R_{44}$ is a radical $-CH_2SiR_{29}R_{30}R_{31}$ of the formula VII;
at least one of the radicals $R_{39}$ to $R_{44}$ is F, Cl or Br;

$R_{29}$, $R_{30}$ and $R_{31}$ independently of one another are $C_1$-$C_6$alkyl, $C_5$- or $C_6$cydoalkyl, or phenyl or benzyl which is unsubstituted or substituted by $C_1$-$C_6$alkyl or $C_1$-$C_6$alkoxy;

in formula VIII two or in each case two and in formula VIIIa two of the other radicals of $R_{39}$ to $R_{44}$ each together are =O or $=N-R_{33}$, and $R_{33}$ is linear or branched $C_1$-$C_{18}$alkyl which is unsubstituted or substituted by $C_1$-$C_6$alkoxy, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen, or benzyl or phenylethyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl) amino-$C_1$-$C_3$alkyl or halogen, and the other radicals $R_{39}$ to $R_{43}$ are secondary amino having 2 to 18 C atoms, $R_{32}O$- or $R_{32}S$-, halogen, unsubstituted or substituted cyclopentadienyl or bridged biscyclopentadienyl or a neutral ligand, in which the $R_{32}$ independently of one another are linear or branched $C_1$-$C_{18}$aalkyl which is unsubstituted or substituted by $C_1$-$C_6$alkoxy or halogen, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen, or benzyl or phenylethyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen; or

in the formulae VIII, VIIIa and VIIIb the other radicals of $R_{39}$ to $R_{44}$ independently of one another are secondary amino having 2 to 18 C atoms, $R_{32}O$- or $R_{32}S$-, halogen, unsubstituted or substituted cyclopentadienyl or bridged biscyclopentadienyl or a neutral ligand in which the $R_{32}$ independently of one another are linear or branched $C_1$-$C_{18}$alkyl which is unsubstituted or substituted by $C_1$-$C_6$alkoxy or halogen, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl,

$C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen, or benzyl or phenylethyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen.

**20.** Process according to claim 1, characterized in that titanium, niobium, tantalum, molybdenum or tungsten compounds of the formulae VIII, VIIIa and VIIIb in which $R_{39}$ is a radical of the formula VII $-CH_2-Si(R_{29}R_{30}R_{31})_3$ and $R_{40}$ is F, Cl or Br; and

(a) in formula VIII $R_{41}$ and $R_{42}$, and $R_{43}$ and $R_{44}$, in each case together, are the radical $=N-R_{33}$, or $R_{41}$ and $R_{42}$ together are the radical $=N-R_{33}$ and $R_{43}$ and $R_{44}$ independently of one another are unsubstituted or substituted cyclopentadienyl, $R_{32}$-O- or halogen, or
(b) in formula VIIIa $R_{41}$ and $R_{42}$ together are the radical $=N-R_{33}$, and $R_{43}$ is unsubstituted or substituted cyclopentadienyl, $R_{32}$-O- or halogen, or in formula VIIIa $R_{41}$, $R_{42}$ and $R_{43}$ independently of one another are unsubstituted or substituted cyclopentadienyl, $R_{32}$-O- or halogen, or
(c) in formula VIIIb $R_{41}$ and $R_{42}$ independently of one another are unsubstituted or substituted cyclopentadienyl, $R_{32}$-O- or halogen,

where $R_{29}$, $R_{30}$, $R_{31}$, $R_{32}$ and $R_{33}$ have the meanings given in claim 19,
are used.

**21.** Process according to claim 1, characterized in that metal compounds of the formulae IX, IXa, IXb, IXc or IXd

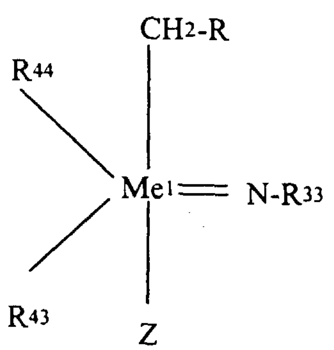 (IX), 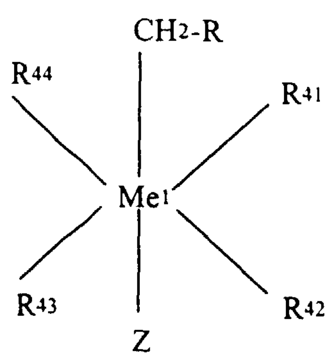 (IXa),

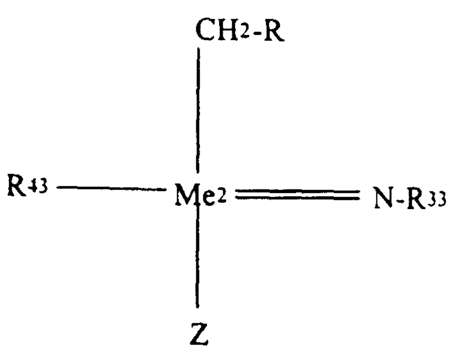 (IXb), 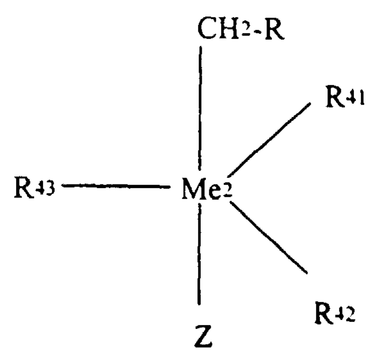 (IXc),

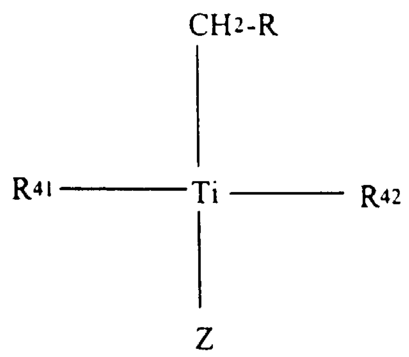

(IXd),

in which

$Me_1$ is Mo(VI) or W(VI);
$Me_2$ is Nb(V) or Ta(V);
R is $-Si(C_1-C_4alkyl)_3$;
z is Cl or Br;
$R_{33}$ is phenyl or phenyl which is substituted by 1 to 3 $C_1$-$C_4$alkyl or $C_1$-$C_4$alkoxy,

(a) $R_{43}$ and $R_{44}$ in formula IX together are the group $=NR_{33}$ or individually independently of one another are F, Cl, Br, linear or, in particular, branched $C_1$-$C_4$alkoxy which is unsubstituted or substituted by fluorine, phenyloxy which is unsubstituted or substituted by $C_1$-$C_4$alkyl or $C_1$-$C_4$alkoxy, or cyclopentadienyl which is unsubstituted or substituted by $C_1$-$C_4$alkyl;
(b) $R_{41}$, $R_{42}$ and $R_{43}$ and $R_{44}$ in formula IXa independently of one another are F, Cl, Br, linear or, in particular, branched $C_1$-$C_4$alkoxy which is unsubstituted or substituted by fluorine, phenyloxy which is unsubstituted or substituted by $C_1$-$C_4$alkyl or $C_1$-$C_4$alkoxy, or cyclopentadienyl which is unsubstituted or substituted by $C_1$-$C_4$alkyl;
(c) $R_{43}$ in formula IXb is F, Cl, Br, linear or, in particular, branched $C_1$-$C_4$alkoxy which is unsubstituted or substituted by fluorine, phenyloxy which is unsubstituted or substituted by $C_1$-$C_4$alkyl or $C_1$-$C_4$alkoxy, or cyclopentadienyl which is unsubstituted or substituted by $C_1$-$C_4$alkyl;
(d) $R_{41}$, $R_{42}$ and $R_{43}$ in formula IXc independently of one another are F, Cl, Br, linear or, in particular, branched $C_1$-$C_4$alkoxy which is unsubstituted or substituted by fluorine, phenyloxy which is unsubstituted or substituted by $C_1$-$C_4$alkyl or $C_1$-$C_4$alkoxy, or cyclopentadienyl which is unsubstituted or substituted by $C_1$-$C_4$alkyl; and
(e) $R_{41}$ and $R_{42}$ in formula IXd independently of one another are F, Cl, Br, linear or, in particular, branched $C_1$-$C_4$alkoxy which is unsubstituted or substituted by fluorine, phenyloxy which is unsubstituted or substituted by $C_1$-$C_4$alkyl or $C_1$-$C_4$alkoxy, or cyclopentadienyl which is unsubstituted or substituted by $C_1$-$C_4$alkyl,

are used.

**22.** Process according to claim 1, characterized in that titanium, niobium, tantalum, molybdenum or tungsten compounds of the formulae X, Xa, Xb, Xc and Xd

$$(R_{33}\text{-}N=)_2Me_1X_a[CH_2Si(CH_3)_3] \quad (X),$$

$$(R_{33}\text{-}N=)R_{41}Me_1X_a(OR_{32})CH_2Si(CH_3)_3 \quad (Xa),$$

$$R_{42}R_{43}Me_2X_a(OR_{32})CH_2Si(CH_3)_3 \quad (Xb),$$

$$R_{33}\text{-N=}Me_2X_a(OR_{32})CH_2Si(CH_3)_3 \quad (Xc),$$

$$R_{41}\text{-Ti}X_a(OR_{32})CH_2Si(CH_3)_3 \quad (Xd),$$

in which

| | |
|---|---|
| $Me_1$ | is Mo(VI) or W(VI); |
| $Me_2$ | is Nb(V) or Ta(V); |
| $X_a$ | is F or Cl; |
| $R_{33}$ | is phenyl or phenyl which is substituted by 1 or 2 $C_1$-$C_4$alkyl groups; |
| $R_{32}$ | is branched $C_3$- or $C_4$alkyl which is optionally partly or completely substituted by fluorine, or phenyloxy, or phenyloxy which is substituted by 1 to 3 methyl or ethyl groups; |
| $R_{42}$ and $R_{43}$ | independently of one another are cyclopentadienyl which is unsubstituted or substituted by 1 to 5 methyl groups, $X_a$ or $R_{32}O$-; and |
| $R_{41}$ | is cyclopentadienyl which is unsubstituted or substituted by 1 to 5 methyl groups, $X_a$ or $R_{32}O$-, |

are used.

**23.** Process according to claim 1, characterized in that titanium(IV), niobium(V), tantalum(V), molybdenum(VI) or tungsten(VI) compounds of the formula $Ti[CH_2Si(CH_3)_3]Cl_3$, $Me(=N\text{-}2,6\text{-dimethyl}C_6H_3)(2,6\text{-dimethyl-}C_6H_5O)[CH_2Si(CH_3)_3]Cl$, $Ti[CH_2Si(CH_3)_3]Br_3$, $Mo(=N\text{-}2,6\text{-diisopropyl}C_6H_3)[(OCH_2C(CH_3)_3]_2[CH_2\text{-}Si(CH_3)_3]Cl$, $Cp_2Ti[CH_2Si(CH_3)_3]Cl$, $Me(=N\text{-}2,6\text{-diisopropyl}C_6H_3)[(CH_3)_2CHO][(CH_2Si(CH_3)_3]Cl$, $(CH_3)_2Ti[CH_2Si(CH_3)_3]Cl$, $Cp_2Me[(CH_2Si(CH_3)_3]Cl_2$, $Cp_2Me[OC(CH_3)_3][(CH_2Si(CH_3)_3]Cl$, $Cp_2Ti[CH_2Si(CH_3)_3]Br$, $Cp_2Ti[CH_2Si(CH_3)_3]I$, $Mo(=N\text{-}C_6H_5)_2[CH_2\text{-}Si(CH_3)_3]Cl$, $CpTi[CH_2Si(CH_3)_3][CH_3]Cl$, $Me(=N\text{-}2,6\text{-diisopropyl}C_6H_3)[((CH_2Si(CH_3)_3]Cl_2$, $CpTi[CH_2Si(CH_3)_3]Br_2$, $CpMe[OCH(CH_3)_2]_2[(CH_2Si(CH_3)_3]Cl$, $(C_6H_5O)CpTi[CH_2Si(CH_3)_3]Cl$, $[(CH_3)_2CHO]_2Ti[CH_2Si(CH_3)_3]Cl$, $Mo(=N\text{-}2,6\text{-diisopropyl}C_6H_3)_2[CH_2\text{-}Si(CH_3)_3]Cl$, $[(CF_3)_2CHO]_2Ti[CH_2Si(CH_3)_3]Cl$, $(2,6\text{-dimethyl-}C_6H_5O)_2Ti[CH_2Si(CH_3)_3]Cl$, $[(CF_3)_2CHO]CpTi[CH_2Si(CH_3)_3]Cl$, $(2,6\text{-dimethyl-}C_6H_5O)Ti[CH_2Si(CH_3)_3]_2Br$, $[(CH_3)_2CHO]CpTi[CH_2Si(CH_3)_3]Cl$, $Me(=N\text{-}C_6H_5)[OCH(CH_3)_2]((CH_2Si(CH_3)_3]Cl$, $(2,6\text{-dimethyl-}C_6H_5O)CpTi[CH_2Si(CH_3)_3]Cl$, $CpMe[OC(CH_3)(CF_3)_2]_2[(CH_2Si(CH_3)_3]Cl$, $[(CH_3)_3CO]CpTi[CH_2Si(CH_3)_3]Cl$, $W(=N\text{-}C_6H_5)[(OC(CH_3)_3](CH_2\text{-}Si(CH_3)_3]Cl_2$, $[(CF_3)_2(CH_3)CO]CpTi[CH_2Si(CH_3)_3]Cl$, $(=N\text{-}2,6\text{-dimethyl}C_6H_3)CpMe[(CH_2Si(CH_3)_3]Cl$, $Me(=N\text{-}C_6H_5)[OCH(CF_3)_2][(CH_2Si(CH_3)_3]Cl$, $CpMe[OCH(CH_3)_2]_2[(CH_2Si(CH_3)_3]Br$, $Me(=N\text{-}2,6\text{-dimethyl}C_6H_3)((CF_3)_2CHO)[CH_2Si(CH_3)_3]Cl$, $[OCH(CH_3)_2]_2Me[CH_2Si(CH_3)_3]Cl_2$, $(C_6H_5O)_2CpMe[(CH_2Si(CH_3)_3]Cl$, $Me(2,6\text{-dimethylphenyloxy})(CH_3O)_2[(CH_2Si(CH_3)_3]Cl$, $Cp_2Me(\text{methyl})[(CH_2Si(CH_3)_3]Cl$, $Me[CH_2Si(CH_3)_3][OCH(CH_3)](CF_3O)_2Cl$, $(2,6\text{-diisopropylphenyloxy})_2Me[CH_2Si(CH_3)_3)Cl_2$, $CpMe[OCH(CF_3)_2]_2[(CH_2Si(CH_3)_3]Cl$, $Cp_2Me[OCH(CH_3)_2]((CH_2Si(CH_3)_3]Cl$, $W(=N\text{-}C_6H_5)[(OC(CH_3)_3]_2[CH_2\text{-}Si(CH_3)_3]Cl$, $Mo_2[(CH_2\text{-}Si(CH_3)_3)(OCH_2C(CH_3)_3)Cl]_2$, or $(=N\text{-}3,5\text{-dimethyl}C_6H_3)Me[2,6\text{-dimethyl}C_6H_3O)][(CH_2Si(CH_3)_3)]Cl$, in which Cp is cyclopentadienyl and Me is Nb(V) or Ta(V) are used.

**24.** Process according to claim 1, characterized in that the titanium(IV), niobium(V), tantalum(V), molybdenum(VI) and tungsten(VI) compounds are employed in an amount of 0.001 to 20 mol%, based on the amount of the cycloolefin.

**25.** Process for photocatalytically induced and subsequent thermal polymerization of a cyclical olefin or at least two different cyclical olefins in the presence of a metal compound as the catalyst, characterized in that

a) a photochemical ring-opening metathesis polymerization is carried out in that the cycloolefins are first irradiated in the presence of a catalytic amount of at least one heat-stable titanium(IV), niobium(V), tantalum(V), molybdenum(VI) or tungsten(VI) compound in which a silylmethyl group and at least one halogen are bonded to the metal; or a catalytic amount of at least one heat-stable titanium(IV), niobium(V), tantalum(V), molybdenum (VI) or tungsten (VI) compound in which a silylmethyl group and at least one halogen are bonded to the metal is irradiated, if appropriate in an inert solvent, and then mixed with at least one cycloolefin; and
b) the polymerization is then ended by heating and without irradiation.

**26.** Composition comprising (a) a cyclical olefin or at least two different cyclical olefins and (b) a catalytically active amount of at least one heat-stable titanium(IV), niobium(V), tantalum(V), molybdenum(VI) or tungsten(VI) compound in which a silylmethyl group and at least one halogen are bonded to the metal.

**27.** Coated carrier material, characterized in that a layer of (a) a cyclical olefin or at least two different cyclical olefins and (b) a catalytically active amount of at least one heat-stable titanium(IV), niobium(V), tantalum(V), molybdenum (VI) or tungsten(VI) compound in which a silylmethyl group and at least one halogen are bonded to the metal is applied to a carrier.

**28.** Process for the production of coated materials or images in relief on carriers, in which a composition according to claim 26 is applied, the solvent is removed, if appropriate, and the layer is irradiated for polymerization and, if appropriate, after-cured by means of heat, or the layer is irradiated through a photomask and, if appropriate, after-cured by means of heat and the non-irradiated portions are then removed with a solvent.

**Revendications**

**1.** Procédé de polymérisation photocatalytique d'une oléfine cyclique ou au moins deux oléfines cycliques différentes en présence d'un composé métallique en tant que catalyseur, caractérisé en ce que l'on met en oeuvre une polymérisation par métathèse décyclisante photochimique en présence d'une quantité catalytique d'au moins un composé stable à la chaleur de titane(IV), de niobium(V), de tantale(V), de molybdène(VI) ou de tungstène(VI), dans lequel un groupe silylméthyle et au moins un atome d'halogène sont liés au métal.

**2.** Procédé selon la revendication 1, caractérisé en ce que dans le cas des oléfines cycliques, il s'agit de cycles monocycliques ou de systèmes cycliques polycycliques, pontés ou condensés avec deux à quatre cycles, qui sont non substitués ou substitués et qui contiennent éventuellement un ou plusieurs hétéroatomes pris parmi les atomes O, S, N et Si dans un ou plusieurs cycles et éventuellement des cycles aromatiques ou hétéroaromatiques condensés.

**3.** Procédé selon la revendication 2, caractérisé en ce que les systèmes de cycles contiennent de 3 à 16 chaînons.

**4.** Procédé selon la revendication 3, caractérisé en ce que les systèmes de cycles contiennent de 3 à 12 chaînons.

**5.** Procédé selon la revendication 2, caractérisé en ce que les oléfines cycliques contiennent d'autres doubles liaisons non aromatiques.

**6.** Procédé selon la revendication 1, caractérisé en ce que les cyclooléfines répondent à la formule 1

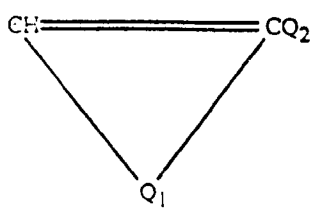

(I)

dans laquelle

$Q_1$ représente un reste avec au moins un atome de carbone, qui forme conjointement avec le groupe $-CH=CQ_2-$ un cycle alicyclique avec au moins 3 chaînons, comportant éventuellement un ou plusieurs hétéroatomes pris parmi les atomes de silicium, de phosphore, d'oxygène, d'azote et de soufre ; et lequel est non substitué ou substitué par un atome d'halogène, =0, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{20}$, hydroxyalkyle en $C_1$-$C_{20}$, halogénoalkyle en $C_1$-$C_{20}$, cyanoalkyle en $C_1$-$C_6$, cycloalkyle en $C_3$-$C_8$, aryle en $C_6$-$C_{16}$, aralkyle en $C_7$-$C_{16}$, hétérocycloalkyle en $C_3$-$C_6$, hétéroaryle en $C_3$-$C_{16}$, hétéroaralkyle en $C_4$-$C_{16}$ ou $R_4$-X ; ou dans lequel deux atomes de carbone adjacents sont substitués par -CO-O-CO- ou $-CO-NR_5-CO-$ ; ou dans lequel, sur les atomes de carbone adjacents du cycle alicyclique, est éventuellement condensé un cycle alicyclique, aromatique ou hétéroaromatique qui est non substitué ou substitué par un atome d'halogène,

-CN, $-NO_2$, $R_6R_7R_8Si-(O)_u-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{20}$, halogénoalkyle en $C_1$-$C_{20}$, hydroxyalkyle en $C_1$-$C_{20}$, cyanoalkyle en $C_1$-$C_6$, cycloalkyle en $C_3$-$C_8$, aryle en $C_6$-$C_{16}$, aralkyle en $C_7$-$C_{16}$, hétérocycloalkyle en $C_3$-$C_6$, hétéroaryle en $C_3$-$C_{16}$, hétéroaralkyle en $C_4$-$C_{16}$ ou $R_{13}$-$X_1$ ;

X et $X_1$, indépendamment l'un de l'autre, représentent -O-, -S-, -CO-, -SO-, $-SO_2-$, -O-C(O)-, -C(O)-O-, $-C(O)-NR_5-$, $-NR_{10}-C(O)-$, $-SO_2-O-$ ou $-O-SO_2-$ ;

$R_1$, $R_2$ et $R_3$, indépendamment l'un de l'autre, représentent des groupes alkyle en $C_1$-$C_{12}$, perfluoroalkyle en $C_1$-$C_{12}$, phényle ou benzyle ;

$R_4$ et $R_{13}$, indépendamment l'un de l'autre, représentent des groupes alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$, aralkyle en $C_7$-$C_{16}$ ;

$R_5$ et $R_{10}$, indépendamment l'un de l'autre, représentent un atome d'hydrogène, un groupe alkyle en $C_1$-$C_{12}$, phényle ou benzyle, les groupes alkyle, de leur côté, étant non substitués ou substitués par des groupes alcoxy en $C_1$-$C_{12}$ ou cycloalkyle en $C_3$-$C_8$ ;

$R_6$, $R_7$ et $R_8$, indépendamment l'un de l'autre, représentent des groupes alkyle en $C_1$-$C_{12}$, perfluoroalkyle en $C_1$-$C_{12}$, phényle ou benzyle ;

M représente un atome de métal alcalin et $M_1$ un atome de métal alcalino-terreux ; et

u vaut 0 ou 1 ;

le cycle alicyclique formé avec $Q_1$ comportant éventuellement d'autres doubles liaisons non aromatiques ;

$Q_2$ représente un atome d'hydrogène, des groupes alkyle en $C_1$-$C_{20}$, halogénoalkyle en $C_1$-$C_{20}$, alcoxy en $C_1$-$C_{12}$, halogène, -CN, $R_{11}$-$X_2$- ;

$R_{11}$ représente des groupes alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$ ou aralalkyle en $C_7$-$C_{16}$ ;

$X_2$ représente -C(O)-O- ou $-C(O)-NR_{12}-$ ;

$R_{12}$ représente un atome d'hydrogène, des groupes alkyle en $C_1$-$C_{12}$, phényle ou benzyle ;

les groupes cycloalkyle, hétérocycloalkyle, aryle, hétéroaryle, aralkyle et hétéroaralkyle précités étant non substitués ou substitués par des groupes alkyle en $C_1$-$C_{12}$, alcoxy en $C_1$-$C_{12}$, $-NO_2$, -CN ou halogène, et les hétéroatomes des groupes hétérocycloalkyle, hétéroaryle et hétéroaralkyle précités étant choisis parmi -O-, -S-, $-NR_9-$ et N= ; et

$R_9$ représente un atome d'hydrogène, des groupes alkyle en $C_1$-$C_{12}$, phényle ou benzyle.

**7.** Procédé selon la revendication 6, caractérisé en ce que le cycle alicyclique forme par le groupe $-CH=CQ_2$ avec $Q_1$, présente 3 à 16 atomes de cycle et où il s'agit d'un système cyclique monocyclique, bicyclique, tricyclique ou tétracyclique.

**8.** Procédé selon la revendication 6, caractérisé en ce que $Q_2$ dans la formule 1 représente un atome d'hydrogène.

**9.** Procédé selon la revendication 6, caractérisé en ce que dans les composés de formule I

$Q_1$ représente un reste avec au moins un atome de carbone, qui forme conjointement avec le groupe $-CH=CQ_2-$ un cycle alicyclique à 3 à 20 chaînons, lequel contient éventuellement un ou plusieurs hétéroatomes pris parmi les atomes de silicium, d'oxygène, d'azote et de soufre ; et lequel est non substitué ou substitué par un atome d'halogène, =O, -CN, $-NO_2$, $R_1R_2R_3Si-(O)_u-$,-COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{12}$, halogénoalkyle en $C_1$-$C_{12}$, hydroxyalkyle en $C_1$-$C_{12}$, cyanoalkyle en $C_1$-$C_4$, cycloalkyle en $C_3$-$C_6$, aryle en $C_6$-$C_{12}$, aralkyle en $C_7$-$C_{12}$, hétérocycloalkyle en $C_3$-$C_6$, hétéroaryle en $C_3$-$C_{12}$, hétéroaralkyle en $C_4$-$C_{12}$ ou $R_4$-X ; ou dans ce reste, deux atomes de carbone adjacents sont substitués par -CO-O-CO- ou $-CO-NR_5-CO-$ ; ou dans lequel,- sur les atomes de carbone adjacents, est éventuellement condensé un cycle alicyclique, aromatique ou hétéroaromatique qui est non substitué ou substitué par un atome d'halogène, -CN, $-NO_2$, $R_6R_7R_8Si-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{12}$, halogénoalkyle en $C_1$-$C_{12}$, hydroxyalkyle en $C_1$-$C_{12}$, cyanoalkyle en $C_1$-$C_4$, cycloalkyle en $C_3$-$C_6$, aryle en $C_6$-$C_{12}$, aralkyle en $C_7$-$C_{12}$, hétérocycloalkyle en $C_3$-$C_6$, hétéroaryle en $C_3$-$C_{12}$, hétéroaralkyle en $C_4$-$C_{12}$ ou $R_{13}$-$X_1$ ;

X et $X_1$, indépendamment l'un de l'autre, représentent -O-, -S-, -CO-, -SO-, $-SO_2-$, -O-C(O)-, -C(O)-

O-, -C(O)-$NR_5$-, -$NR_{10}$-C(O)-, -$SO_2$-O- ou -O-$SO_2$- ;

$R_1$, $R_2$ et $R_3$, indépendamment les uns des autres, représentent des groupes alkyle en $C_1$-$C_6$, perfluoroalkyle en $C_1$-$C_6$, phényle ou benzyle ;

M représente un atome de métal alkalin et $M_1$ un atome de métal alkalino-terreux ; et

$R_4$ et $R_{13}$, indépendamment l'un de l'autre, représentent des groupes alkyle en $C_1$-$C_{12}$, halogénoalkyle en $C_1$-$C_{12}$, hydroxyalkyle en $C_1$-$C_{12}$, cycloalkyle en $C_3$-$C_8$, aryle en $C_6$-$C_{12}$, aralkyle en $C_7$-$C_{12}$ ;

$R_5$ et $R_{10}$, indépendamment l'un de l'autre, représentent un atome d'hydrogène, des groupes alkyle en $C_1$-$C_6$, phényle ou benzyle, les groupes alkyle, de leur côté, étant non substitués ou substitués par des groupes alkoxy en $C_1$-$C_6$ ou cycloalkyle en $C_3$-$C_6$ ;

$R_6$, $R_7$ et $R_8$, indépendamment les uns des autres, représentent des groupes alkyle en $C_1$-$C_6$, perfluoroalkyle en $C_1$-$C_{16}$, phényle ou benzyle ;

u vaut 0 ou 1 ;

le cycle alicyclique e formé avec $Q_1$ pouvant éventuellement contenir d'autres doubles liaisons non aromatiques ;

$Q_2$ représente un atome d'hydrogène, des groupes alkyle en $C_1$-$C_{12}$, halogénoalkyle en $C_1$-$C_{12}$, alkoxy en $C_1$-$C_6$, halogène, -CN, $R_{11}$-$X_2$- ;

$R_{11}$ représente des groupes alkyle en $C_1$-$C_{12}$, halogénoalkyle en $C_1$-$C_{12}$, hydroxyalkyle en $C_1$-$C_{12}$, cycloalkyle en $C_3$-$C_6$, aryle en $C_6$-$C_{12}$ ou aralalkyle en $C_7$-$C_{12}$ ;

$X_2$ représente -C(O)-O- ou -C(O)-$NR_{12}$- ; et

$R_{12}$ représente un atome d'hydrogène, des groupes alkyle en $C_1$-$C_6$, phényle ou benzyle ;

les groupes cycloalkyle, hétérocycloalkyle, aryle, hétéroaryle, aralkyle et hétéroaralkyle précités étant non substitués ou substitués par des groupes alkyle en $C_1$-$C_6$, alkoxy en $C_1$-$C_6$, -$NO_2$, -CN ou halogène, et les hétéroatomes des groupes hétérocycloalkyle, hétéroaryle et hétéroaralkyle étant pris parmi -O-, -S-, -$NR_9$- et N= ; et

$R_9$ représente un atome d'hydrogène, des groupes alkyle en $C_1$-$C_6$, phényle ou benzyle.

**10.** Procédé selon la revendication 6, caractérisé en ce que dans les composés de formule I

$Q_1$ représente un reste avec au moins un atome de carbone, qui forme conjointement avec le groupe -CH=$CQ_2$- un cycle alicyclique à 3 à 10 chaînons, lequel contient éventuellement un hétéroatome pris parmi les atomes de silicium, d'oxygène, d'azote et de soufre, et qui est non substitué ou substitué par des atomes d'halogène, -CN, -$NO_2$, $R_1R_2R_3$Si-, -COOM, -$SO_3$M, -$PO_3$M, -COO$(M_1)_{1/2}$, -$SO_3(M_1)_{1/2}$, -$PO_3(M_1)_{1/2}$, des groupes alkyle en $C_1$-$C_6$, halogénoalkyle en $C_1$-$C_6$, hydroxyalkyle en $C_1$-$C_6$, cyanoalkyle en $C_1$-$C_4$, cycloalkyle en $C_3$-$C_6$, phényle, benzyle ou $R_4$-X ; ou dans lesquels, sur les atomes de carbone adjacents, est éventuellement condensé un cycle alicyclique, aromatique ou hétéroaromatique, lequel est non substitué ou substitué par des atomes d'halogène, -CN, -$NO_2$, $R_6R_7R_8$Si-, -COOM, -$SO_3$M, -$PO_3$M, -COO$(M_1)_{1/2}$, -$SO_3(M_1)_{1/2}$, -$PO_3(M_1)_{1/2}$, des groupes alkyle en $C_1$-$C_6$, halogénoalkyle en $C_1$-$C_6$, hydroxyalkyle en $C_1$-$C_6$, cyanoalkyle en $C_1$-$C_4$, cycloalkyle en $C_3$-$C_6$, phényle, benzyle ou $R_{13}$-$X_1$- ;

$R_1$, $R_2$ et $R_3$, indépendamment l'un de l'autre, représentent des groupes alkyle en $C_1$-$C_4$, perfluoroalkyle en $C_1$-$C_4$, phényle ou benzyle ;

M représente un atome de métal alcalin et $M_1$ un atome de métal alcalino-terreux ;

$R_4$ et $R_{13}$, indépendamment les uns des autres, représentent des groupes alkyle en $C_1$-$C_6$, halogénoalkyle en $C_1$-$C_6$, hydroxyalkyle en $C_1$-$C_6$ ou cycloalkyle en $C_3$-$C_6$ ;

X et $X_1$, indépendamment l'un de l'autre, représentent -O-, -S-, -CO-, -SO- ou -$SO_2$- ;

$R_6$, $R_7$ et $R_8$, indépendamment l'un de l'autre, représentent des groupes alkyle en $C_1$-$C_4$, perfluoroalkyle en $C_1$-$C_4$, phényle ou benzyle ;

et

$Q_2$ représente un atome d'hydrogène.

**11.** Procédé selon la revendication 1, caractérisé en ce que pour les oléfines cycliques, il s'agit du norbornène ou des dérivés de norbornène.

**12.** Procédé selon la revendication 11, caractérisé en ce que pour les dérivés de norbornène il s'agit de ceux qui répondent à la formule II

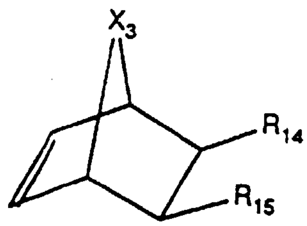

(II),

dans laquelle

$X_3$ représente $-CHR_{16}-$, un atome d'oxygène ou de soufre ;
$R_{14}$ et $R_{15}$, indépendamment l'un de l'autre, représentent un atome d'hydrogène, -CN, un groupe trifluorométhyle, $(CH_3)_3Si-O-$, $(CH_3)_3Si-$ ou $-COOR_{17}$ ; et
$R_{16}$ et $R_{17}$, indépendamment l'un de l'autre, représentent un atome d'hydrogène, des groupes alkyle en $C_1$-$C_{12}$, phényle ou benzyle ;

soit à la formule III

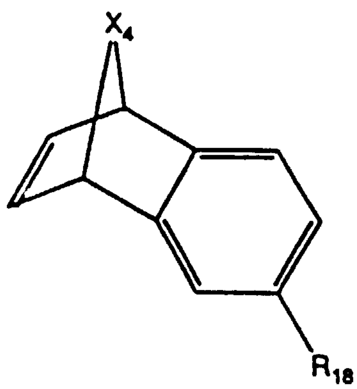

(III),

où

$X_4$ représente $-CHR_{19}-$, un atome d'oxygène ou de soufre ;
$R_{19}$ représente un atome d'hydrogène, des groupes alkyle en $C_1$-$C_{12}$, phényle ou benzyle ; et
$R_{18}$ représente un atome d'hydrogène, des groupes alkyle en $C_1$-$C_6$ ou des atomes d'halogène ;

ou à la formule IV

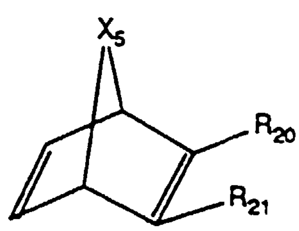

(IV),

où

$X_5$ représente $-CHR_{22}-$, des atomes d'oxygène ou de soufre ;

$R_{22}$ représente un atome d'hydrogène, des groupes alkyle en $C_1$-$C_{12}$, phényle ou benzyle ;
$R_{20}$ et $R_{21}$, indépendamment l'un de l'autre, représentent un atome d'hydrogène, -CN, un groupe trifluorométhyle, $(CH_3)_3Si$-O-, $(CH_3)_3Si$- ou -$COOR_{23}$ ; et
$R_{23}$ représente un atome d'hydrogène, des groupes alkyle en $C_1$-$C_{12}$, phényle ou benzyle ;

ou à la formule V

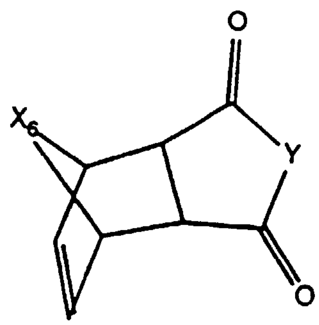

(V) ,

dans laquelle

$X_6$ représente -$CHR_{24}$-, des atomes d'oxygène ou de soufre ;
$R_{24}$ représente un atome d'hydrogène, des groupes alkyle en $C_1$-$C_{12}$, phényle ou benzyle ;
Y représente un atome d'oxygène ou >N-$R_{25}$ ; et
$R_{25}$ représente un atome d'hydrogène, des groupes méthyle, éthyle ou phényle.

**13.** Procédé selon la revendication 1, caractérisé en ce que pour l'halogène lié à l'atome métallique il s'agit de F, Cl, Br ou I.

**14.** Procédé selon la revendication 1, caractérisé en ce que le groupe silylméthyle de formule VII correspond à

$$-CH_2-SiR_{29}R_{30}R_{31} \quad (VII),$$

dans laquelle

$R_{29}$, $R_{30}$ et $R_{31}$, indépendamment l'un de l'autre, représentent des groupes alkyle en $C_1$-$C_{18}$, cycloalkyle en $C_5$ ou en $C_6$ ou phényle ou benzyle non substitué ou substitué par des groupes alkyle en $C_1$-$C_6$ ou alcoxy en $C_1$-$C_6$.

**15.** Procédé selon la revendication 14, caractérisé en ce que dans le groupe de formule VII, $R_{29}$ à $R_{31}$ représentent des groupes alkyle en $C_1$-$C_4$, phényle ou benzyle.

**16.** Procédé selon la revendication 14, caractérisé en ce que le groupe de formule VII est constitué de -$CH_2$-$Si(CH_3)_3$, -$CH_2$-$Si(C_2H_5)_3$, -$CH_2$-Si(n-$C_3H_7)_3$, -$CH_2$-$Si(CH_3)_2(C_2H_5)$, -$CH_2$-$Si(CH_3)_2[C(CH_3)_2CH(CH_3)_2]$, -$CH_2$-$Si(CH_3)_2$(n-$C_4H_9$), -$CH_2$-$Si(CH_3)_2$(t-$C_4H_9$), -$CH_2$-$Si(CH_3)_2$(n-$C_{18}H_{37}$), -$CH_2$-$Si(C_6H_5)_3$, -$CH_2$-Si($CH_2$-$C_6H_5)_3$, -$CH_2$-$Si(C_6H_5)(CH_3)_2$ -$CH_2$-Si(n-$C_4H_9)_3$,-$CH_2$-$Si(CH_3)_2$(n-$C_{12}H_{25}$) et -$CH_2$-Si($CH_2$-$C_6H_5$)$(CH_3)_2$

**17.** Procédé selon la revendication 14, caractérisé en ce que le groupe de formule VII représente -$CH_2$-$Si(CH_3)_3$.

**18.** Procédé selon la revendication 1, caractérisé en ce que les autres valences des atomes (Ti(IV), Nb(V), Ta(V), Mo (VI) et W(VI) peuvent être saturées de ligands neutres identiques ou différents, par exemple pris dans le groupe comportant =O, =N-$R_{33}$, des amines secondaires avec 2 à 18 atomes de carbone, $R_{32}$O-, $R_{32}$S-, des atomes d'halogène, cyclopentadiényle éventuellement substitué, biscyclopentadiényle ponté, des ligands neutres et des ligands monoanioniques tridentés, où $R_{32}$, indépendamment l'un de l'autre, représentent un alkyle en $C_1$-$C_{18}$ linéaire ou ramifié non substitué ou substitué par des groupes alcoxy en $C_1$-$C_6$ ou des atomes d'halogène, cycloalk-

yle en $C_5$ ou en $C_6$ non substitué ou substitué par des groupes alkyle en $C_1$-$C_6$, des groupes alcoxy en $C_1$-$C_6$ ou des atomes d'halogène, phénéthyle ou phényle non substitué ou substitué par des groupes alkyle en $C_1$-$C_6$, alcoxy en $C_1$-$C_6$, (alcoxy en $C_1$-$C_6$)méthyle, (alcoxy en $C_1$-$C_6$)éthyle ou halogène, benzyle non substitué ou substitué par des groupes alkyle en $C_1$-$C_6$, alcoxy en $C_1$-$C_6$, alcoxyméthyle en $C_1$-$C_6$, alcoxyéthyle en $C_1$-$C_6$ ou halogène ; et $R_{33}$ représente un groupe alkyle en $C_1$-$C_{18}$ linéaire ou ramifié, non substitué ou substitué par un groupe alcoxy en $C_1$-$C_6$, un groupe cycloalkyle en $C_5$ ou en $C_6$ non substitué ou substitué par des groupes alkyle en $C_1$-$C_6$, alcoxy en $C_1$-$C_6$ ou halogène, un groupe phényle non substitué ou substitué par des groupes alkyle en $C_1$-$C_6$, alcoxy en $C_1$-$C_6$, (alcoxy en $C_1$-$C_6$)méthyle, (alcoxy en $C_1$-$C_6$)éthyle, di(alkyl en $C_1$-$C_6$)amino, di(alkyl en $C_1$-$C_6$) amino-(alkyl en $C_1$-$C_3$) ou halogène, ou phényléthyle ou benzyle non substitué ou substitué par des groupes alkyle en $C_1$-$C_6$, alcoxy en $C_1$-$C_6$, (alcoxy en $C_1$-$C_6$)méthyle, (alcoxy en $C_1$-$C_6$)éthyle ou halogène, à la condition que dans le cas du composé de titane le ligand ne soit ni =O, ni =N-$R_{33}$.

**19.** Procédé selon la revendication 1, caractérisé en ce que les composés métalliques de formules VIII, VIIIa et VIIIb correspondent

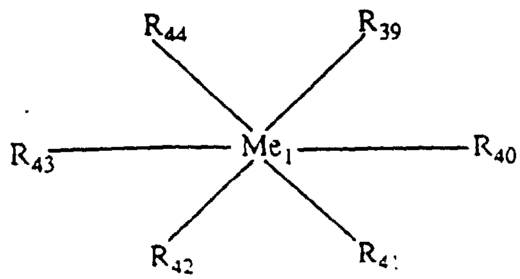

(VIII),

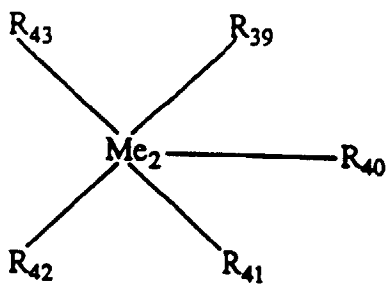

(VIIIa),

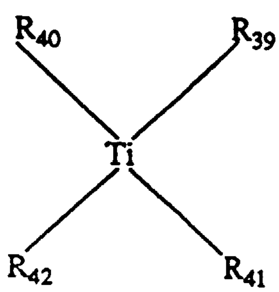

(VIIIb),

dans lesquelles

$Me_1$ représente Mo(VI) ou W(VI) ;
$Me_2$ représente Nb(V) ou Ta(V) ;

l'un des restes $R_{39}$ à $R_{44}$ représente un reste -$CH_2$-$SiR_{29}R_{30}R_{31}$ de formule VII ; au moins l'un des restes $R_{39}$ à $R_{44}$ représente des atomes de fluor, de chlore ou de brome ;

$R_{29}$, $R_{30}$ et $R_{31}$, indépendamment l'un de l'autre, représentent des groupes alkyle en $C_1$-$C_6$, cycloalkyle en $C_5$ ou en $C_6$, benzyle ou phényle non substitué ou substitué par des groupes alkyle en $C_1$-$C_6$ ou alcoxy en $C_1$-$C_6$ ;

dans la formule VIII deux, ou à chaque fois deux, et dans la formule VIIIa deux des autres restes de $R_{39}$ à $R_{44}$ ensemble représentent toujours =O ou =N-$R_{23}$, et $R_{33}$ représente un groupe alkyle en $C_1$-$C_{18}$ linéaire ou ramifié non substitué ou substitué par un groupe alcoxy en $C_1$-$C_6$, un groupe cycloalkyle en $C_5$ ou en $C_6$ non substitué ou substitué par des groupes alkyle en $C_1$-$C_6$, alcoxy en $C_1$-$C_6$ ou halogène, phényle non substitué ou substitué par des groupes alkyle en $C_1$-$C_6$, alcoxy en $C_1$-$C_6$, (alcoxy en $C_1$-$C_)$méthyle, (alcoxy en $C_1$-$C_6$)éthyle, di(alkyl en $C_1$-$C_6$)amino, di(alkyl en $C_1$-$C_6$)amino(alkyle en $C_1$-$C_3$) ou halogène, ou phényléthyle ou benzyle non substitué ou substitué par des groupes alkyle en $C_1$-$C_6$, alcoxy en $C_1$-$C_6$, (alcoxy en $C_1$-$C_6$) méthyle, (alcoxy en $C_1$-$C_6$)éthyle, di(alkyl en $C_1$-$C_6$)amino, di(alkyl en $C_1$-$C_6$)amino-(alkyle en $C_1$-$C_3$) ou halogène, et les autres restes $R_{39}$ à $R_{43}$ représentent des groupes amino secondaires avec 2 à 18 atomes de carbone, $R_{32}$O- ou $R_{32}$S-, des atomes d'halogène, cyclopentadiényle non substitué ou substitué ou biscyclopentadiényle ponté ou un ligand neutre, où les symboles $R_{32}$, indépendamment l'un de l'autre représentent un groupe alkyle en $C_1$-$C_{18}$ linéaire ou ramifié non substitué ou substitué par un groupe alcoxy en $C_1$-$C_6$ ou un atome d'halogène, un groupe cycloalkyle en $C_5$ ou en $C_6$ non substitué ou substitué par des groupes alkyle en $C_1$-$C_6$, alcoxy en $C_1$-$C_6$ ou des atomes d'halogène, un groupe phényle non substitué ou substitué par des groupes alkyle en $C_1$-$C_6$, alcoxy en $C_1$-$C_6$, (alcoxy en $C_1$-$C_6$)méthyle, (alcoxy en $C_1$-$C_6$)éthyle, di(alkyl en $C_1$-$C_6$)amino, di(alkyl en $C_1$-$C_6$)amino-(alkyle en $C_1$-$C_3$) ou un atome d'halogène, ou phényléthyle ou benzyle non substitué ou substitué par des groupes alkyle en $C_1$-$C_6$, alcoxy en $C_1$-$C_6$, (alcoxy en $C_1$-$C_6$)méthyle, (alcoxy en $C_1$-$C_6$)éthyle, di(alkyl en $C_1$-$C_6$)amino, di(alkyl en $C_1$-$C_6$)amino-(alkyle en $C_1$-$C_3$) ou un atome d'halogène ;

ou dans les formules VIII, VIIIa et VIIIb les autres restes de $R_{39}$ à $R_{44}$, indépendamment l'un de l'autre, représentent des groupes amino secondaires avec 2 à 18 atomes de carbone, $R_{32}$O- ou $R_{32}$S-, des atomes d'halogène, cyclopentadiényle non substitué ou substitué ou biscyclopentadiényle ponté ou un ligand neutre, où les symboles $R_{32}$, indépendamment l'un de l'autre, représentent des groupes alkyle en $C_1$-$C_{18}$ linéaires ou ramifiés non substitués ou substitués par un groupe alcoxy en $C_1$-$C_6$ ou un atome d'halogène, des groupes cycloalkyle en $C_5$ ou en $C_6$ non substitués ou substitués par des groupes alkyle en $C_1$-$C_6$, des groupes alcoxy en $C_1$-$C_6$ ou des atomes d'halogène, un groupe phényle non substitué ou substitué par des groupes alkyle en $C_1$-$C_6$, alcoxy en $C_1$-$C_6$, (alcoxy en $C_1$-$C_6$)méthyle, (alcoxy en $C_1$-$C_6$)éthyle, di(alkyle en $C_1$-$C_6$)amino, di(alkyl en $C_1$-$C_6$)amino(alkyle en $C_1$-$C_3$) ou des atomes d'halogène, phényléthyle ou benzyle non substitué ou substitué par des groupes alkyle en $C_1$-$C_6$, alcoxy en $C_1$-$C_6$, (alcoxy en $C_1$-$C_6$)méthyle, (alcoxy en $C_1$-$C_6$)éthyle, di(alkyl en $C_1$-$C_6$)amino, di(alkyl en $C_1$-$C_6$)amino(alkyle en $C_1$-$C_3$) ou des atomes d'halogène.

**20.** Procédé selon la revendication 1, caractérisé en ce que l'on utilise des composés de titane, de niobium, de tantale, de molybdène ou de tungstène de formules VIII, VIIIa et VIIIb, dans lesquelles

$R_{39}$ représente un reste de formule VII -$CH_2$-Si($R_{29}R_{30}R_{31}$)$_3$, et
$R_{40}$ représente des atomes de fluor, de chlore ou de brome ; et

(a) dans la formule VIII, $R_{41}$ et $R_{42}$ ainsi que $R_{43}$ et $R_{44}$ à chaque fois ensemble représentent le reste =N-$R_{33}$, où $R_{41}$ et $R_{42}$ ensemble représentent le reste =N-$R_{33}$, et $R_{43}$ et $R_{44}$, indépendamment l'un de l'autre, représentent des groupes cyclopentadiényle non substitué ou substitué, $R_{32}$-O, ou des atomes d'halogène, ou
(b) dans la formule VIIIa, $R_{41}$ et $R_{42}$ ensemble représentent le reste =N-$R_{33}$, et $R_{43}$ représente un groupe-cyclopentadiényle non substitué ou substitué, $R_{32}$-O ou un atome d'halogène, ou dans la formule VIIIa, $R_{41}$, $R_{42}$ et $R_{43}$, indépendamment l'un de l'autre, représentent un groupe cyclopentadiényle non substitué ou substitué, $R_{32}$-O- ou un atome d'halogène, ou
(c) dans la formule VIIIb, $R_{41}$ et $R_{42}$, indépendamment l'un de l'autre, représentent un groupe cyclopentadiényle non substitué ou substitué, $R_{32}$-O- ou un atome d'halogène,

$R_{29}$, $R_{30}$, $R_{31}$, $R_{32}$ et $R_{33}$ ayant les significations données dans la revendication 19.

**21.** Procédé selon la revendication 1, caractérisé en ce que l'on utilise des composés métalliques de formules IX, IXa, IXb, IXc ou IXd,

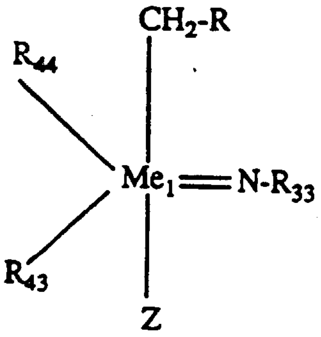 (IX), 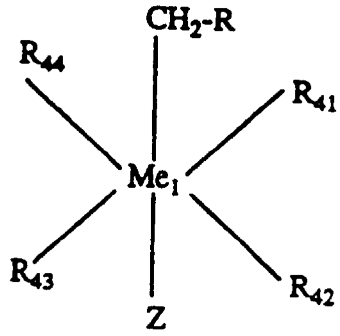 (IXa),

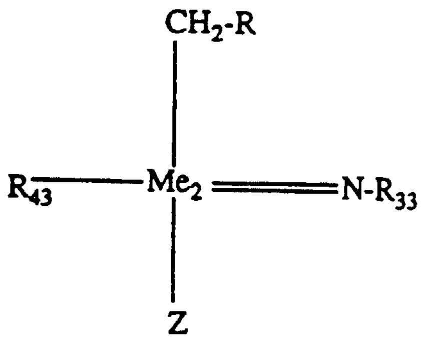 (IXb), 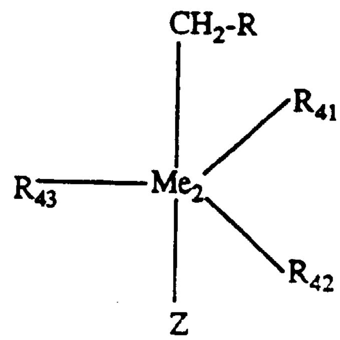 (IXc),

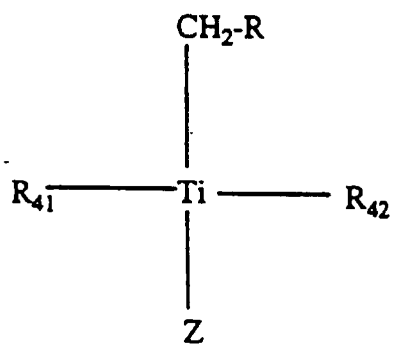 (IXd),

dans lesquelles

- $Me_1$ représente Mo(VI) ou W(VI) ;
- $Me_2$ représente Nb(V) ou Ta(V) ;
- R représente -Si(alkyle en $C_1$-$C_4$)$_3$ ;
- z représente un atome de chlore ou de brome ;
- $R_{33}$ représente un groupe phényle ou un groupe phényle substitué par 1 à 3 groupes alkyle en $C_1$-$C_4$ ou alcoxy en $C_1$-$C_4$,

(a) $R_{43}$ et $R_{44}$ dans la formule IX représentent ensemble le groupe $=NR_{33}$ ou individuellement, indépendamment l'un de l'autre, F, Cl, Br, un groupe alcoxy en $C_1$-$C_4$ linéaire ou plus particulièrement ramifié non substitué ou substitué par du fluor, un groupe phényloxy non substitué ou substitué par des groupes alkyle en $C_1$-$C_4$ ou alcoxy en $C_1$-$C_4$, ou cyclopentadiényle non substitué ou substitué par un groupe alkyle en $C_1$-$C_4$ ;

(b) $R_{41}$, $R_{42}$, $R_{43}$ et $R_{44}$ dans la formule IXa, indépendamment l'un de l'autre, représentent F, Cl, Br, un

groupe alcoxy en $C_1$-$C_4$ linéaire ou plus particulièrement ramifié, non substitué ou substitué par du fluor, un groupe phényloxy non substitué ou substitué par des groupes alkyle en $C_1$-$C_4$ ou alcoxy en $C_1$-$C_4$, ou cyclopentadiényle non substitué ou substitué par un groupe alkyle en $C_1$-$C_4$ ;

(c) $R_{43}$, dans la formule IXb, représente F, Cl, Br, un groupe alcoxy en $C_1$-$C_4$ linéaire ou plus particulièrement ramifié, non substitué ou substitué par du fluor, un groupe phényloxy non substitué ou substitué par des groupes alkyle en $C_1$-$C_4$ ou alcoxy en $C_1$-$C_4$, ou cyclopentadiényle non substitué ou substitué par un groupe alkyle en $C_1$-$C_4$ ;

(d) $R_{41}$, $R_{42}$ et $R_{43}$, dans la formule IXc, indépendamment l'un de l'autre, représentent F, Cl, Br, un groupe alcoxy en $C_1$-$C_4$ linéaire ou plus particulièrement ramifié non substitué ou substitué par du fluor, un groupe phényloxy non substitué ou substitué par des groupes alkyle en $C_1$-$C_4$ ou alcoxy en $C_1$-$C_4$, ou cyclopentadiényle non substitué ou substitué par un groupe alkyle en $C_1$-$C_4$ ; et

(e) $R_{41}$ et $R_{42}$, dans la formule IXd, indépendamment l'un de l'autre, représentent F, Cl, Br, un groupe alcoxy en $C_1$-$C_4$ linéaire ou plus particulièrement ramifié, non substitué ou substitué par du fluor, un groupe phényloxy non substitué ou substitué par des groupes alkyle en $C_1$-$C_4$ ou alcoxy en $C_1$-$C_4$, ou cyclopentadiényle non substitué ou substitué par un groupe alkyle en $C_1$-$C_4$.

**22.** Procédé selon la revendication 1, caractérisé en ce que l'on utilise des composés de titane, de niobium, de tantale, de molybdène ou de tungstène de formules X, Xa, Xb, Xc et Xd

$$(R_{33}\text{-N=})_2Me_1X_a[CH_2Si(CH_3)_3] \qquad (X),$$

$$(R_{33}\text{-N=})R_{41}Me_1X_a(OR_{32})CH_2Si(CH_3)_3 \qquad (Xa),$$

$$R_{42}R_{43}Me_2X_a(OR_{32})CH_2Si(CH_3)_3 \qquad (Xc),$$

$$R_{33}\text{-N=}Me_2X_a(OR_{32})CH_2Si(CH_3)_3 \qquad (Xc),$$

$$R_{41}\text{-Ti}X_a(OR_{32})CH_2Si(CH_3)_3 \qquad (Xd),$$

dans lesquelles

| | |
|---|---|
| $Me_1$ | représente Mo(VI) ou W(VI) ; |
| $Me_2$ | représente Nb(V) ou Ta(V) ; |
| $X_a$ | représente F ou Cl ; |
| $R_{33}$ | représente un groupe phényle ou phényle substitué par un ou deux groupes alkyle en $C_1$-$C_4$ ; |
| $R_{32}$ | représente un groupe alkyle en $C_3$ ou en $C_4$ ramifié, éventuellement substitué en partie ou complètement par du fluor, ou un groupe phényloxy ou phényloxy substitué par 1 à 3 groupes méthyle ou éthyle ; |
| $R_{42}$ et $R_{43}$, | indépendamment l'un de l'autre, représentent un groupe cyclopentadiényle non substitué ou substitué par 1 à 5 groupes méthyle, $X_a$ ou $R_{32}O$- ; et |
| $R_{41}$ | représente un groupe cyclopentadiényle non substitués ou substitués par 1 à 5 groupes méthyle, $X_a$ ou $R_{32}O$-. |

**23.** Procédé selon la revendication 1, caractérisé en ce qu'on utilise des composés de titane(IV), de niobium(V), de tantale(V), de molybdène(VI) ou de tungstène(VI) de formules $Ti[CH_2Si(CH_3)_3]Cl_3$, $Me(=N\text{-}2,6\text{-diméthyl}C_6H_3)(2,6\text{-Diméthyl-}C_6H_5O)[CH_2Si(CH_3)_3]Cl$, $Ti[CH_2Si(CH_3)_3]Br_3$, $Mo(=N\text{-}2,6\text{-diisopropyl}C_6H_3)[(OCH_2C(CH_3)_3]_2[CH_2\text{-}Si(CH_3)_3]Cl$, $Cp_2Ti[CH_2Si(CH_3)_3]Cl$, $Me(=N\text{-}2,6\text{-diisopropyl}C_6H_3)[(CH_3)_2CHO][(CH_2Si(CH_3)_3]Cl$, $(CH_3)_2Ti[CH_2Si(CH_3)_3]Cl$, $Cp_2Me[(CH_2Si(CH_3)_3]Cl_2$, $Cp_2Me[OC(CH_3)_3][(CH_2Si(CH_3)_3]Cl$, $Cp_2Ti[CH_2Si(CH_3)_3]Br$, $Cp_2Ti[CH_2Si(CH_3)_3]I$, $Mo(=N\text{-}C_6H_5)_2[CH_2\text{-}Si(CH_3)_3]Cl$, $CpTi[CH_2Si(CH_3)_3][CH_3]Cl$, $Me(=N\text{-}2,6\ \text{diisopropyl}C_6H_3)[(CH_2Si(CH_3)_3]Cl_2$, $CpTi[CH_2Si(CH_3)_3]Br_2$, $CpMe[OCH(CH_3)_2]_2[(CH_2Si(CH_3)_3]Cl$, $(C_6H_5O)CpTi[CH_2Si(CH_3)_3]Cl$, $[(CH_3)_2CHO]_2Ti[CH_2Si(CH_3)_3]Cl$, $Mo(=N\text{-}2,6\text{-diisopropyl}C_6H_3)_2[CH_2\text{-}Si(CH_3)_3]Cl$, $[(CF_3)_2CHO]_2Ti[CH_2Si(CH_3)_3]Cl$, $(2,6\text{-Diméthyl-}C_6H_5O)_2Ti[CH_2Si(CH_3)_3]$

Cl, $[(CF_3)_2CHO]CpTi[CH_2Si(CH_3)_3]Cl$, (2,6-Diméthyl-$C_6H_5O)Ti[CH_2Si(CH_3)_3]_2Br$, $[CH_3)_2CHO]CpTi[CH_2Si(CH_3)_3]$ Cl, Me(=N-$C_6H_5)[OCH(CH_3)_2][(CH_2Si(CH_3)_3]Cl$, (2,6-Dimethyl-$C_6H_5O)CpTi[CH_2Si(CH_3)_3]Cl$, CpMe$[OC(CH_3)(CF_3)_2]_2[(CH_2Si(CH_3)_3]Cl$, $[(CH_3)_3CO]CpTi[CH_2Si(CH_3)_3]Cl$, W(=N-$C_6H_5)[(OC(CH_3)_3][CH_2$-$Si(CH_3)_3]Cl_2$, $[(CF_3)_2(CH_3)CO]CpTi[CH_2Si(CH_3)_3]Cl$, (=N-2,6-diméthyl$C_6H_3$)CpMe$[(CH_2Si(CH_3)_3]Cl$, Me(=N-$C_6H_5)[OCH(CF_3)_2][(CH_2Si(CH_3)_3]Cl$, CpMe$[OCH(CH_3)_2]_2[(CH_2Si(CH_3)_3]Br$, Me(=N-2,6-dimethyl$C_6H_3)((CF_3)_2CHO)[CH_2Si(CH_3)_3]Cl$, $[OCH(CH_3)_2]_2Me[CH_2Si(CH_3)_3]Cl_2$, $(C_6H_5O)_2$CpMe$[(CH_2Si(CH_3)_3]Cl$, Me(2,6-Diméthylphényloxy)$(CH_3O)_2[(CH_2Si(CH_3)_3]Cl$, $Cp_2$Me(Methyl)$[(CH_2Si(CH_3)_3]Cl$, Me$[CH_2Si(CH_3)_3](OCH(CH_3)](CF_3O)_2Cl$, (2,6-Diisopropylphényloxy)$_2$Me$[CH_2Si(CH_3)_3]Cl_2$, CpMe$[OCH(CF_3)_2]_2[(CH_2Si(CH_3)_3]Cl$, $Cp_2$Me$[OCH(CH_3)_2[(CH_2Si(CH_3)_3]Cl$, W (=N-$C_6H_5)[(OC(CH_3)_3]_2[CH_2$-$Si(CH_3)_3]Cl$, $Mo_2[(CH_2$-$Si(CH_3)_3)(OCH_2C(CH_3)_3)Cl]_2$, ou (=N-3,5-diméthyl$C_6H_3$)Me [2,6-diméthyl$C_6H_3O)][(CH_2Si(CH_3)_3)]Cl$
où Cp représente cyclopentadiényle et Me représente Nb(V) ou Ta(V).

**24.** Procédé selon la revendication 1, caractérisé en ce qu'on utilise les composés de titane(IV), de niobium(V), de tantale(V), de molybdène(VI) et de tungstène(VI) dans une quantité de 0,001 à 20 % en moles par rapport à la quantité de la cyclooléfine.

**25.** Procédé de polymérisation photocatalytique, suivie par la polymérisation thermique d'une oléfine cyclique ou au moins de deux oléfines cycliques différentes en présence d'un composé métallique en tant que catalyseur, caractérisé en ce que l'on met en oeuvre une polymérisation par métathèse de décyclisation photochimique, dans laquelle on irradie d'abord les cyclooléfines en présence d'une quantité catalytique d'au moins un composé stable à la chaleur de titane(IV), de niobium(V), de tantale(V), de molybdène(VI) ou de tungstène(VI) dans lequel un groupe silylméthyle et au moins un halogène sont liés au métal ; ou on irradie une quantité catalytique d'un composé stable à la chaleur de titane(IV), de niobium(V) ou de tantale(V) dans lequel un groupe silyle et au moins un halogène sont liés au métal, éventuellement dans un solvant inerte et ensuite on mélange avec au moins une cyclooléfine ; et

b) on termine la polymérisation par réchauffage et sans irradiation.

**26.** Composition contenant (a) une oléfine cyclique ou au moins deux oléfines cycliques différentes et (b) une quantité catalytique efficace d'au moins un composé stable à la chaleur de titane(IV), de niobium(V), de tantale(V), de molybdène(VI) ou de tungstène(VI), dans lequel un groupe silylméthyle et au moins un halogène sont liés au métal.

**27.** Matière de support revêtue caractérisée en ce que l'on dépose sur un support une couche constituée de (a) une oléfine cyclique ou au moins deux oléfines cycliques différentes et (b) une quantité catalytique efficace d'au moins un composé stable à la chaleur de titane(IV), de niobium(V), de tantale(V), de molybdène(VI) et de tungstène(VI), dans lequel un groupe silylméthyle et au moins un halogène sont liés au métal.

**28.** Procédé pour la préparation de matières revêtues ou de reproduction en relief sur des supports dans lesquels on dépose une composition selon la revendication 26, on élimine éventuellement le solvant et on irradie la couche en vue de polymérisation et éventuellement on effectue un post-durcissement thermique, ou on irradie la couche à travers un photomasque, on effectue éventuellement un post-durcissement thermique et ensuite on élimine avec un solvant les portions non irradiées.